(19) **Europäisches Patentamt / European Patent Office / Office européen des brevets**

(11) **EP 4 455 613 B1**

(12) **EUROPEAN PATENT SPECIFICATION**

(45) Date of publication and mention of the grant of the patent:
**05.08.2026 Bulletin 2026/32**

(21) Application number: **22919997.1**

(22) Date of filing: **12.12.2022**

(51) International Patent Classification (IPC):
**G01C 21/34** (2006.01)    **G01C 21/36** (2006.01)
**G01C 21/00** (2006.01)

(52) Cooperative Patent Classification (CPC):
**G01C 21/3822; G01C 21/3407; G01C 21/3658**

(86) International application number:
**PCT/CN2022/138461**

(87) International publication number:
**WO 2023/134364 (20.07.2023 Gazette 2023/29)**

(54) **METHOD FOR GUIDING VEHICLE DRIVING, MAP GENERATION METHOD, AND RELATED SYSTEM**

VERFAHREN ZUR FÜHRUNG DES FAHRENS EINES FAHRZEUGS, KARTENERZEUGUNGSVERFAHREN UND ZUGEHÖRIGES SYSTEM

PROCÉDÉ DE GUIDAGE DE CONDUITE DE VÉHICULE, PROCÉDÉ DE GÉNÉRATION DE CARTE ET SYSTÈME ASSOCIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.01.2022  CN 202210046464**

(43) Date of publication of application:
**30.10.2024  Bulletin 2024/44**

(73) Proprietor: **Huawei Technologies Co., Ltd.**
**Shenzhen, Guangdong 518129 (CN)**

(72) Inventors:
  • **ZHANG, Yeqing**
    **Shenzhen, Guangdong 518129 (CN)**
  • **LU, Xingyang**
    **Shenzhen, Guangdong 518129 (CN)**
  • **CHENG, Siyuan**
    **Shenzhen, Guangdong 518129 (CN)**
  • **WANG, Chenyuan**
    **Shenzhen, Guangdong 518129 (CN)**
  • **WAN, Ying**
    **Shenzhen, Guangdong 518129 (CN)**

(74) Representative: **Maiwald GmbH**
**Engineering**
**Elisenhof**
**Elisenstrasse 3**
**80335 München (DE)**

(56) References cited:
WO-A1-2017/123232    WO-A1-2019/142439
CN-A- 105 651 295    CN-A- 107 340 772
CN-A- 112 001 986    CN-A- 112 068 545
CN-A- 112 937 598    CN-A- 113 895 456
CN-A- 114 543 825    US-A1- 2018 148 052
US-A1- 2020 393 253

• QU PANRANG ET AL: "A constrained VFH algorithm for motion planning of autonomous vehicles", 2015 IEEE INTELLIGENT VEHICLES SYMPOSIUM (IV), IEEE, 28 June 2015 (2015-06-28), pages 700 - 705, XP033209804, DOI: 10.1109/IVS.2015.7225766

# EP 4 455 613 B1

## Description

### TECHNICAL FIELD

This application relates to the field of vehicle technologies, and in particular, to a method for guiding driving of a vehicle, an intersection map generation method, a related system, and a storage medium.

### BACKGROUND

In the field of vehicle autonomous driving, in scenarios such as intersections without actual lane lines, or S-bends, roundabout entrances/exits, or elevated entrances with a plurality of reasonable driving tracks, an autonomous driving system needs to perform proper road topology analysis and provide corresponding topology navigation guidance information, so that a vehicle performs intent prediction, track prediction, lane decision-making, motion planning, and the like. High-quality road topology analysis requires that a lane track complies with a human driving habit, and also requires that a quantity of lane topologies that can be reasonably used for passing and navigation guidance information of the lane topologies comply with human driving experience, to improve human-like characteristics and intelligence of driving tracks of an autonomous driving vehicle, and to predict intents and tracks of other vehicles more accurately.

Existing road topology analysis methods may be roughly classified into two types: road topology generation based on high-definition map drawing or road topology generation based on vehicle track clustering. A road topology generation method based on high-definition map drawing mostly relies on a drawing manner to obtain endpoints or direction vectors of a driving-in road and a driving-out road, calculate an included angle of the direction vectors, and then perform curve fitting on the endpoints or the direction vectors. Therefore, a generated line type is simple and insufficient in generalization, cannot cover differentiated scenarios in actual scenarios, and requires manual intervention. However, in a road topology generation method based on vehicle track clustering, human driving data or crowd-sourcing tracks is/are collected by using a big data technology, and then the tracks are screened and clustered, to generate a lane topology curve. Therefore, a large amount of data preprocessing work is inevitably required. In addition, road topology generation quality is closely related to quality of the collected data, and the road topology generation quality cannot be guaranteed. In addition, neither of the foregoing two methods can ensure completeness of a generated road topology, nor can distinguish between advantages and disadvantages of a plurality of road topologies for a driving behavior in a current scenario. Therefore, the two methods have difficulties in assisting in intent prediction and driving decision-making. In addition, due to a time-consuming and labor-consuming production process, and a long update period, the two methods can only be used for offline drawing.

Therefore, how to resolve the foregoing problem and implement road topology analysis and navigation guidance with good generalization and human-like characteristics in a complex scenario is a problem that needs to be resolved currently.

Currently, a reference line endpoint of an intersection lane is selected from nodes that are on boundaries of two intersection roads and that are located at an intersection, and a boundary line endpoint of the intersection lane is determined. An included angle of direction vectors is calculated based on endpoints or direction vectors of a driving-in road and a driving-out road at the intersection. Finally, curve fitting is performed on the endpoint or the direction vector, to automatically generate a reference line and a boundary of a virtual lane at the intersection. However, the reference line generated in this solution is simple, and parameters need to be manually adjusted to ensure output quality for different intersections. At through intersections that are not directly opposite to each other, or in scenarios where there are obstacles such as flowerbeds, curbstones, or fences, available reference curves cannot be automatically generated, or the generated reference curve tracks are not human-like. In addition, for a complex many-to-many intersection, a generated road topology is incomplete, and an improper road topology may exist. In this case, manual intervention is required to select a proper topology connection relationship.

CN 112001986 A discloses a virtual lane generation method and device in a level crossing, electronic equipment and a storage medium, and relates to the field of intelligent transportation and automatic driving. The generation method comprises the steps that related road information of a target level crossing is acquired, the related road information comprises a corresponding relation between an entering road section and an exiting road section and lane information of the entering road section and the exiting road section, and the lane information comprises position information of a lane; for each entering road section, a first number of virtual connecting line sections are determined based on the corresponding lane information, the virtual connecting line sections being located in the target level crossing and connecting the corresponding entering lanes and exiting lanes; a plurality of target virtual connecting line segments are determined from the first number of virtual connecting line segments according to a preset rule, the target virtual connecting line segments being not intersected with each other in the target level crossing; and a virtual lane is generated in the target level crossing based on the corresponding target virtual connection line segment.

WO 2017/123232 A1 discloses methods, devices and apparatuses pertaining to U-turn assistance. The method may include obtaining, by a computing device, geographic obtaining of a location designated for an operation of a U-turn. The computing device may further obtain vehicle information of a vehicle performing the U-turn, and collect user information of an operator of the vehicle. Based on the geographic information, the vehicle information and the user information, the computing device may determine a level of difficulty of the U-turn and assist the operator with the operation of the U-turn based on the level of difficulty.

QU PANRANG ET AL discloses "A constrained VFH algorithm for motion planning of autonomous vehicles", in 2015 IEEE INTELLIGENT VEHICLES SYMPOSIUM (IV), IEEE, on 28 June 2015, on pages 700-705.

US 2018/148052 A1 discloses a drivable area setting device and a drivable area setting method, which can perform driving control based on a drivable area also in a road section in which a lane marker is not present. A terminal node specifying unit specifies a terminal node of a lane marker on an entry side and a terminal node of a lane marker on an exit side in a road section, such as an intersection, in which lane marker data are not present, a virtual lane marker generating unit for generating a virtual lane marker linking the terminal node of the lane marker on the entry side to the terminal node of the lane marker on the exit side, and an area setting unit for setting, as a drivable area of a vehicle, an area interposed between the generated virtual lane markers.

## SUMMARY

The invention is defined by a method for guiding driving of a vehicle, and a computer-readable storage medium and an intelligent driving vehicle thereof. This application discloses a method for guiding driving of a vehicle, an intersection map generation method, a related system, and a storage medium, to provide corresponding navigation guidance information for the vehicle during autonomous driving, thereby effectively improving human-like characteristics of a track and passing efficiency of the vehicle when the vehicle passes through the intersection.

According to a first aspect, an embodiment of this application provides a method for guiding driving of a vehicle. The method includes: generating M lane topology curves based on an obstacle and lane lines at an intersection, an obstacle and lane lines on a driving-in road at the intersection, and an obstacle and lane lines on a driving-out road at the intersection, where the lane topology curve is a curve that uses an end of a driving-in lane of the driving-in road and a start point of a driving-out lane of the driving-out road as endpoints; performing reasonableness detection on the M lane topology curves to obtain K' lane topology curves, where K' is not greater than M; and determining a target path from the K' lane topology curves when the vehicle is located in a first driving-in lane of the driving-in road, where the target path includes a lane topology curve whose endpoint is an end of the first driving-in lane and that is in the K' lane topology curves.

In this embodiment of this application, the lane topology curves are generated based on the obstacle and the lane lines at the intersection, the obstacle and the lane lines on the driving-in road at the intersection, the obstacle and the lane lines on the driving-out road at the intersection. Then, reasonableness detection is performed to obtain the K' lane topology curves. When the vehicle is located in the first driving-in lane of the driving-in road, the target path is determined from the K' lane topology curves. In this solution, a complete and reasonable lane topology curve generated based on an actual scenario better conforms to a human driving habit, is more reasonable, does not require manual intervention, has good generalization and human-like characteristics, and can provide corresponding navigation guidance information for the vehicle during autonomous driving, thereby effectively improving human-like characteristics of a track and passing efficiency of the vehicle when the vehicle passes through the intersection.

In an optional implementation, the generating M lane topology curves based on an obstacle and lane lines at an intersection, an obstacle and lane lines on a driving-in road at the intersection, and an obstacle and lane lines on a driving-out road at the intersection includes: obtaining a lane topology curve hard boundary constraint based on the obstacle and un-crossable lane lines at the intersection, the obstacle and un-crossable lane lines on the driving-in road at the intersection, and the obstacle and un-crossable lane lines on the driving-out road at the intersection; obtaining a lane topology curve soft boundary constraint based on crossable lane lines at the intersection, crossable lane lines on the driving-in road at the intersection, and crossable lane lines on the driving-out road at the intersection; obtaining K lane topology curve virtual boundary constraints based on the lane topology curve hard boundary constraint and the lane topology curve soft boundary constraint; and generating the M lane topology curves based on the lane topology curve hard boundary constraint, the lane topology curve soft boundary constraint, and the K lane topology curve virtual boundary constraints.

According to this method, the soft boundary constraint, the hard boundary constraint, and the virtual boundary constraint are obtained based on a high-definition map, and an obstacle and a lane line that are sensed in real time on a road. This ensures human-like characteristics of a virtual lane track and universality of a vehicle model, and improves reliability of a generated lane topology curve.

The K lane topology curve virtual boundary constraints correspond to K lane topologies, and any lane topology curve virtual boundary constraint A in the K lane topology curve virtual boundary constraints is obtained through offsetting a hard boundary constraint and/or a soft boundary constraint on a left side of a leftmost lane topology of the intersection rightwards by a first preset distance and offsetting a hard boundary constraint and/or a soft boundary constraint on a right side of a rightmost lane topology of the intersection leftwards by a first preset distance. The first preset distance is determined based on a lane sequence of a lane topology A', or the first preset distance is determined based on a lane sequence of a lane topology A' and at least one of a preset passing width of the vehicle and a lane width. The lane topology curve virtual boundary constraint A corresponds to the lane topology A', and the K lane topologies include the leftmost lane topology and the rightmost lane topology of the intersection.

In this solution, in consideration of interference impact of another vehicle flow track, gradually weakening indirect constraints of soft and hard boundaries on co-directional lanes, and the like, virtual boundary constraints are generated, to ensure human-like characteristics of a virtual lane track and universality of a vehicle model.

In an optional implementation, the generating the M lane topology curves based on the lane topology curve hard boundary constraint, the lane topology curve soft boundary constraint, and the K lane topology curve virtual boundary constraints includes: separately performing angle sampling on ends of all driving-in lanes of the driving-in road to obtain at least one start point pose vector of the driving-in road, and separately performing angle sampling on start points of all driving-out lanes of the driving-out road to obtain at least one end point pose vector of the driving-out road; performing curve sampling on the at least one start point pose vector and the at least one end point pose vector, to obtain a plurality of curves between the driving-in road and the driving-out road; and performing screening on the plurality of curves based on the lane topology curve hard boundary constraint, the lane topology curve soft boundary constraint, and the K lane topology curve virtual boundary constraints, to obtain the M lane topology curves.

For example, during the screening, curves that meet the foregoing constraints may be first screened, and then, at most one optimal curve between each driving-in lane and each driving-out lane is screened. Collision detection is performed on the optimal curve, to adaptively adjust the curves, so as to further obtain the M lane topology curves. The processing manner is merely an example, and may alternatively be another manner. This is not specifically limited in this solution.

In this solution, angle sampling is performed based on the end of the driving-in lane and the start point of the driving-out lane, to generate a plurality of lane topology curves; and the plurality of curves are screened based on the foregoing obtained soft boundary constraint, hard boundary constraint, and virtual boundary constraint, to obtain the M lane topology curves. According to this method, human-like characteristics and flexibility of a virtual lane track and universality of a vehicle model are ensured, and traffic conflicts with other lanes are reduced.

Further, the performing curve sampling on the at least one start point pose vector and the at least one end point pose vector, to obtain a plurality of curves between the driving-in road and the driving-out road includes: generating a plurality of control points between the ends of the driving-in lanes of the driving-in road and the start points of the driving-out lanes of the driving-out road; and generating the plurality of smooth curves based on the at least one start point pose vector, the at least one end point pose vector, and the plurality of control points.

In this solution, during curve generation, angle sampling is performed not only based on the end of the driving-in lane and the start point of the driving-out lane, but also based on the control point, so that a larger quantity of curves is generated, and curve generation flexibility is improved.

In an optional implementation, the at least one start point pose vector of the driving-in road is obtained by extending the end of each driving-in lane by a second preset distance and performing sampling.

According to this method, start and end pose sampling points of a track on a virtual intersection side are reasonably extended outwardly in scenarios such as driving into and driving out of a roundabout intersection, to improve quality of a generated track, improve human-like characteristics of the track, and avoid an unreasonable track caused by high-definition map drawing. In addition, this avoids incorrect screening-out during topology screening due to unreasonable track generation, and ensures completeness of road topology analysis.

In an implementation according to the invention, the performing reasonableness detection on the M lane topology curves to obtain K' lane topology curves includes: obtaining a projection line between the driving-in road and the driving-out road based on a direction vector of the driving-in road and a direction vector of the driving-out road, where the projection line is a straight line on which a bisector of an included angle obtained by intersecting the direction vector of the driving-in road and the direction vector of the driving-out road is located, or the projection line is a straight line that is perpendicular to the direction vector of the driving-out road and that passes through the start point of the driving-out road; calculating an alignment coefficient between each driving-in lane of the driving-in road and each driving-out lane of the driving-out road, where the alignment coefficient between each driving-in lane and each driving-out lane is a ratio of a first parameter to a second parameter, the first parameter is an overlapping length between two line segments obtained by separately extending a lane sideline of each driving-in lane and a lane sideline of each driving-out lane to the projection line, and the second parameter is a length of a shorter line segment in the two line segments obtained by separately extending the lane sideline of each driving-in lane and the lane sideline of each driving-out lane to the projection line; and obtaining the K' lane topology curves based on the alignment coefficient between each driving-in lane of the driving-in road and each driving-out lane of the driving-out road, where the K' lane topology curves include a curve that uses an end of a driving-in lane and a start point of a driving-out lane as endpoints, and an alignment coefficient between the driving-in lane and the driving-out lane is greater than a first preset threshold.

Curves are screened based on lane alignment, to obtain a complete and reasonable lane topology curve.

In another optional implementation, the K' lane topology curves include a curve that respectively uses an end of a leftmost driving-in lane of the driving-in road and a start point of a leftmost driving-out lane of the driving-out road as endpoints, and further include a curve that respectively uses an end of a rightmost driving-in lane of the driving-in road and a start point of a rightmost driving-out lane of the driving-out road as endpoints.

The curves are supplemented based on a topology supplement principle, to obtain a complete and reasonable lane topology curve, so that human-like characteristics of a virtual lane curve are ensured.

In still another optional implementation, the K' lane topology curves include a lane topology curve that uses an end of a driving-in lane X of the driving-in road and a start point of a left lane of a driving-out lane Y of the driving-out road as endpoints, and a lane topology curve that uses the end of the driving-in lane X and a start point of a right lane of the driving-out lane Y as endpoints, and further include a lane topology curve that uses the end of the driving-in lane X and a start point of the driving-out lane Y as endpoints, where there is a lane on each of a left side and a right side of the driving-out lane Y. Alternatively, the K' lane topology curves include a lane topology curve that uses an end of a driving-in lane X of the driving-in road and a start point of a left lane or a right lane of a driving-out lane Y of the driving-out road as endpoints, and further include a lane topology curve that uses the end of the driving-in lane X of the driving-in road and a start point of the driving-out lane Y as endpoints, where there is a lane only on a left side or a right side of the driving-out lane Y of the driving-out road.

The curves are supplemented based on a topology supplement principle, to obtain a complete and reasonable lane topology curve, so that reasonableness and completeness of a virtual lane curve are ensured.

In still another optional implementation, a maximum curvature of each of the K' lane topology curves is not greater than a second preset threshold, a distance between each lane topology curve and each of the lane topology curve soft boundary constraint and the lane topology curve hard boundary constraint is not less than a third preset distance, and a distance between any two lane topology curves is not less than a fourth preset distance.

Lane topology reasonableness screening is performed based on screening principles such as vehicle kinematics, collision detection, traffic rules, and vehicle flow interference detection, to obtain a complete and reasonable lane topology curve.

In an optional implementation, the method further includes: calculating an evaluation value of each of the K' lane topology curves, where the evaluation value is related to at least one of a curvature of the lane topology curve, a curvature change rate, a quantity of diagonal crossing lanes, and lane intersection information, traffic rule information, a vehicle traffic estimation value, and a drivable distance that are of a lane corresponding to the lane topology curve. The determining a target path from the K' lane topology curves when the vehicle is located in a first driving-in lane of the driving-in road includes: when the vehicle is located in the first driving-in lane of the driving-in road, determining the target path based on the evaluation value of each of the K' lane topology curves, where the target path includes a lane topology curve with a highest evaluation value in lane topology curves whose endpoints are the end of the first driving-in lane and that are in the K' lane topology curves.

According to this method, a global view is provided based on information such as global navigation information and macro traffic flow, to perform navigation recommendation evaluation on a lane-level topology, provide a global view for a vehicle during driving, avoid a high-risk lane topology in advance, improve passing efficiency of an ego vehicle, and reduce risks of the ego vehicle.

The intersection includes at least one of a crossroad, a roundabout, an intersection of a turn waiting area, a small S-bend, an elevated road entrance/exit, a multi-lane road segment without a lane marking line, a continuous turning intersection, and a narrow-lane U-turn intersection.

According to a second aspect, this application provides an intersection-based map generation method. The method includes: generating M lane topology curves based on an obstacle and lane lines at an intersection, an obstacle and lane lines on a driving-in road at the intersection, and an obstacle and lane lines on a driving-out road at the intersection, where the lane topology curve is a curve that uses an end of a driving-in lane of the driving-in road and a start point of a driving-out lane of the driving-out road as endpoints; performing reasonableness detection on the M lane topology curves to obtain K' lane topology curves, where K' is not greater than M; and generating a map of the intersection based on the K' lane topology curves at the intersection.

In this embodiment of this application, the lane topology curves are generated based on the obstacle and the lane lines at the intersection, the obstacle and the lane lines on the driving-in road at the intersection, and the obstacle and the lane lines on the driving-out road at the intersection. Then, reasonableness detection is performed to obtain the K' lane topology curves, thereby generating the K' lane topology curves at the intersection. In map generation in this solution, a complete and reasonable lane topology curve generated based on an actual scenario better conforms to a human driving habit, is more reasonable, does not require manual intervention, has good generalization and human-like characteristics, and can provide corresponding navigation guidance information for the vehicle during autonomous driving, thereby effectively improving human-like characteristics of a track and passing efficiency of the vehicle when the vehicle passes through the intersection.

In an optional implementation, the generating M lane topology curves based on an obstacle and lane lines at an intersection, an obstacle and lane lines on a driving-in road at the intersection, and an obstacle and lane lines on a driving-out road at the intersection includes: obtaining a lane topology curve hard boundary constraint based on the obstacle and un-crossable lane lines at the intersection, the obstacle and un-crossable lane lines on the driving-in road at the intersection, and the obstacle and un-crossable lane lines on the driving-out road at the intersection; obtaining a lane topology curve soft boundary constraint based on crossable lane lines at the intersection, crossable lane lines on the driving-in road at the intersection, and crossable lane lines on the driving-out road at the intersection; obtaining K lane topology curve virtual boundary constraints based on the lane topology curve hard boundary constraint and the lane topology curve soft boundary constraint; and generating the M lane topology curves based on the lane topology curve hard boundary constraint, the lane topology curve soft boundary constraint, and the K lane topology curve virtual boundary constraints.

According to this method, the soft boundary constraint, the hard boundary constraint, and the virtual boundary constraint are obtained based on a high-definition map, and an obstacle and a lane line that are sensed in real time on a road. This ensures human-like characteristics of a virtual lane track and universality of a vehicle model, and improves reliability of a generated lane topology curve.

The K lane topology curve virtual boundary constraints correspond to K lane topologies, and any lane topology curve virtual boundary constraint A in the K lane topology curve virtual boundary constraints is obtained through offsetting a hard boundary constraint and/or a soft boundary constraint on a left side of a leftmost lane topology of the intersection rightwards by a first preset distance and offsetting a hard boundary constraint and/or a soft boundary constraint on a right side of a rightmost lane topology of the intersection leftwards by a first preset distance. The first preset distance is determined based on a lane sequence of a lane topology A', or the first preset distance is determined based on a lane sequence of a lane topology A' and at least one of a preset passing width of the vehicle and a lane width. The lane topology curve virtual boundary constraint A corresponds to the lane topology A', and the K lane topologies include the leftmost lane topology and the rightmost lane topology of the intersection.

In this solution, in consideration of interference impact of another vehicle flow track, gradually weakening indirect constraints of soft and hard boundaries on co-directional lanes, and the like, virtual boundary constraints are generated, to ensure human-like characteristics of a virtual lane track and universality of a vehicle model.

In an optional implementation, the generating the M lane topology curves based on the lane topology curve hard boundary constraint, the lane topology curve soft boundary constraint, and the K lane topology curve virtual boundary constraints includes: separately performing angle sampling on ends of all driving-in lanes of the driving-in road to obtain at least one start point pose vector of the driving-in road, and separately performing angle sampling on start points of all driving-out lanes of the driving-out road to obtain at least one end point pose vector of the driving-out road; performing curve sampling on the at least one start point pose vector and the at least one end point pose vector, to obtain a plurality of curves between the driving-in road and the driving-out road; and performing screening on the plurality of curves based on the lane topology curve hard boundary constraint, the lane topology curve soft boundary constraint, and the K lane topology curve virtual boundary constraints, to obtain the M lane topology curves.

For example, during the screening, curves that meet the foregoing constraints may be first screened, and then at most one optimal curve between each driving-in lane and each driving-out lane is screened. Collision detection is performed on the optimal curve, to adaptively adjust the curves, so as to further obtain the M lane topology curves. The processing manner is merely an example, and may alternatively be another manner. This is not specifically limited in this solution.

In this solution, angle sampling is performed based on the end of the driving-in lane and the start point of the driving-out lane, to generate a plurality of lane topology curves; and the plurality of curves are screened based on the foregoing obtained soft boundary constraint, hard boundary constraint, and virtual boundary constraint, to obtain the M lane topology curves. According to this method, human-like characteristics and flexibility of a virtual lane track and universality of a vehicle model are ensured, and traffic conflicts with other lanes are reduced.

Further, the performing curve sampling on the at least one start point pose vector and the at least one end point pose vector, to obtain a plurality of curves between the driving-in road and the driving-out road includes: generating a plurality of control points between the ends of the driving-in lanes of the driving-in road and the start points of the driving-out lanes of the driving-out road; and generating the plurality of smooth curves based on the at least one start point pose vector, the at least one end point pose vector, and the plurality of control points.

In this solution, during curve generation, angle sampling is performed not only based on the end of the driving-in lane and the start point of the driving-out lane, but also based on the control point, so that a larger quantity of curves is generated, and curve generation flexibility is improved.

In an optional implementation, the at least one start point pose vector of the driving-in road is obtained by extending the end of each driving-in lane by a second preset distance and performing sampling.

According to this method, start and end pose sampling points of a track on a virtual intersection side are reasonably extended outwardly in scenarios such as driving into and driving out of a roundabout intersection, to improve quality of a generated track, improve human-like characteristics of the track, and avoid an unreasonable track caused by high-definition map drawing. In addition, this avoids incorrect screening-out during topology screening due to unreasonable track generation, and ensures completeness of road topology analysis.

In an implementation according to the invention, the performing reasonableness detection on the M lane topology curves to obtain K' lane topology curves includes: obtaining a projection line between the driving-in road and the driving-out road based on a direction vector of the driving-in road and a direction vector of the driving-out road, where the projection line is a straight line on which a bisector of an included angle obtained by intersecting the direction vector of the driving-in road and the direction vector of the driving-out road is located, or the projection line is a straight line that is perpendicular to the direction vector of the driving-out road and that passes through the start point of the driving-out road; calculating an alignment coefficient between each driving-in lane of the driving-in road and each driving-out lane of the driving-out road, where the alignment coefficient between each driving-in lane and each driving-out lane is a ratio of a first parameter to a second parameter, the first parameter is an overlapping length between two line segments obtained by separately extending a lane sideline of each driving-in lane and a lane sideline of each driving-out lane to the projection line, and the second parameter is a length of a shorter line segment in the two line segments obtained by separately extending the lane sideline of each driving-in lane and the lane sideline of each driving-out lane to the projection line; and obtaining the K' lane topology curves based on the alignment coefficient between each driving-in lane of the driving-in road and each driving-out lane of the driving-out road, where the K' lane topology curves include a curve that uses an end of a driving-in lane and a start point of a driving-out lane as endpoints, and an alignment coefficient between the driving-in lane and the driving-out lane is greater than a first preset threshold.

Curves are screened based on lane alignment, to obtain a complete and reasonable lane topology curve.

In another optional implementation, the K' lane topology curves include a curve that respectively uses an end of a leftmost driving-in lane of the driving-in road and a start point of a leftmost driving-out lane of the driving-out road as endpoints, and further include a curve that respectively uses an end of a rightmost driving-in lane of the driving-in road and a start point of a rightmost driving-out lane of the driving-out road as endpoints.

The curves are supplemented based on a topology supplement principle, to obtain a complete and reasonable lane topology curve.

In still another optional implementation, the K' lane topology curves include a lane topology curve that uses an end of a driving-in lane X of the driving-in road and a start point of a left lane of a driving-out lane Y of the driving-out road as endpoints, and a lane topology curve that uses the end of the driving-in lane X and a start point of a right lane of the driving-out lane Y as endpoints, and further include a lane topology curve that uses the end of the driving-in lane X and a start point of the driving-out lane Y as endpoints, where there is a lane on each of a left side and a right side of the driving-out lane Y. Alternatively, the K' lane topology curves include a lane topology curve that uses an end of a driving-in lane X of the driving-in road and a start point of a left lane or a right lane of a driving-out lane Y of the driving-out road as endpoints, and further include a lane topology curve that uses the end of the driving-in lane X of the driving-in road and a start point of the driving-out lane Y as endpoints, where there is a lane only on a left side or a right side of the driving-out lane Y of the driving-out road.

The curves are supplemented based on a topology supplement principle, to obtain a complete and reasonable lane topology curve.

In still another optional implementation, a maximum curvature of each of the K' lane topology curves is not greater than a second preset threshold, a distance between each lane topology curve and each of the lane topology curve soft boundary constraint and the lane topology curve hard boundary constraint is not less than a third preset distance, and a distance between any two lane topology curves is not less than a fourth preset distance.

Lane topology reasonableness screening is performed based on screening principles such as vehicle kinematics, collision detection, traffic rules, and vehicle flow interference detection, to obtain a complete and reasonable lane topology curve.

The intersection includes at least one of a crossroad, a roundabout, an intersection of a turn waiting area, a small S-bend, an elevated road entrance/exit, a multi-lane road segment without a lane marking line, a continuous turning intersection, and a narrow-lane U-turn intersection.

According to a third aspect, this application provides an apparatus for guiding driving of a vehicle. The apparatus includes a curve generation module, a detection processing module, and a determining module. The curve generation module is configured to generate M lane topology curves based on an obstacle and lane lines at an intersection, an obstacle and lane lines on a driving-in road at the intersection, and an obstacle and lane lines on a driving-out road at the intersection, where the lane topology curve is a curve that uses an end of a driving-in lane of the driving-in road and a start point of a driving-out lane of the driving-out road as endpoints. The detection processing module is configured to perform reasonableness detection on the M lane topology curves to obtain K' lane topology curves, where K' is not greater than M. The determining module is configured to: when the vehicle is located on the driving-in road, determine a target path from the K' lane topology curves.

The curve generation module is configured to: obtain a lane topology curve hard boundary constraint based on the obstacle and un-crossable lane lines at the intersection, the obstacle and un-crossable lane lines on the driving-in road at the intersection, and the obstacle and un-crossable lane lines on the driving-out road at the intersection; obtain a lane topology curve soft boundary constraint based on crossable lane lines at the intersection, crossable lane lines on the driving-in road at the intersection, and crossable lane lines on the driving-out road at the intersection; obtain K lane topology curve virtual boundary constraints based on the lane topology curve hard boundary constraint and the lane topology curve soft boundary constraint; and generate the M lane topology curves based on the lane topology curve hard boundary constraint, the lane topology curve soft boundary constraint, and the K lane topology curve virtual boundary constraints.

Optionally, the K lane topology curve virtual boundary constraints correspond to K lane topologies, and any lane topology curve virtual boundary constraint A in the K lane topology curve virtual boundary constraints is obtained through offsetting a hard boundary constraint and/or a soft boundary constraint on a left side of a leftmost lane topology of the intersection rightwards by a first preset distance and offsetting a hard boundary constraint and/or a soft boundary constraint on a right side of a rightmost lane topology of the intersection leftwards by a first preset distance. The first preset distance is determined based on a lane sequence of a lane topology A', or the first preset distance is determined based on a lane sequence of a lane topology A' and at least one of a preset passing width of the vehicle and a lane width. The lane topology curve virtual boundary constraint A corresponds to the lane topology A', and the K lane topologies include the leftmost lane topology and the rightmost lane topology of the intersection.

Further, the curve generation module is further configured to: separately perform angle sampling on an end of each driving-in lane of the driving-in road to obtain at least one start point pose vector of the driving-in road, and separately perform angle sampling on a start point of each driving-out lane of the driving-out road to obtain at least one end point pose vector of the driving-out road; perform curve sampling on the at least one start point pose vector and the at least one end point pose vector, to obtain a plurality of curves between the driving-in road and the driving-out road; and perform screening on the plurality of curves based on the lane topology curve hard boundary constraint, the lane topology curve soft boundary constraint, and the K lane topology curve virtual boundary constraints, to obtain the M lane topology curves.

Optionally, the curve generation module is further configured to: generate a plurality of control points between the ends of the driving-in lanes of the driving-in road and the start points of the driving-out lanes of the driving-out road; and generate the plurality of smooth curves based on the at least one start point pose vector, the at least one end point pose vector, and the plurality of control points.

In an implementation, the at least one start point pose vector of the driving-in road is obtained by extending the end of each driving-in lane by a second preset distance and performing sampling.

The detection processing module is configured to: obtain a projection line between the driving-in road and the driving-out road based on a direction vector of the driving-in road and a direction vector of the driving-out road, where the projection line is a straight line on which a bisector of an included angle obtained by intersecting the direction vector of the driving-in road and the direction vector of the driving-out road is located, or the projection line is a straight line that is perpendicular to the direction vector of the driving-out road and that passes through the start point of the driving-out road; calculate an alignment coefficient between each driving-in lane of the driving-in road and each driving-out lane of the driving-out road, where the alignment coefficient between each driving-in lane and each driving-out lane is a ratio of a first parameter to a second parameter, the first parameter is an overlapping length between two line segments obtained by separately extending a lane sideline of each driving-in lane and a lane sideline of each driving-out lane to the projection line, and the second parameter is a length of a shorter line segment in the two line segments obtained by separately extending the lane sideline of each driving-in lane and the lane sideline of each driving-out lane to the projection line; and obtain the K' lane topology curves based on the alignment coefficient between each driving-in lane of the driving-in road and each driving-out lane of the driving-out road, where the K' lane topology curves include a curve that uses an end of a driving-in lane and a start point of a driving-out lane as endpoints, and an alignment coefficient between the driving-in lane and the driving-out lane is greater than a first preset threshold.

Optionally, the K' lane topology curves include a curve that respectively uses an end of a leftmost driving-in lane of the driving-in road and a start point of a leftmost driving-out lane of the driving-out road as endpoints, and further include a curve that respectively uses an end of a rightmost driving-in lane of the driving-in road and a start point of a rightmost driving-out lane of the driving-out road as endpoints.

The K' lane topology curves include a lane topology curve that uses an end of a driving-in lane X of the driving-in road and a start point of a left lane of a driving-out lane Y of the driving-out road as endpoints, and a lane topology curve that uses the end of the driving-in lane X and a start point of a right lane of the driving-out lane Y as endpoints, and further include a lane topology curve that uses the end of the driving-in lane X and a start point of the driving-out lane Y as endpoints, where there is a lane on each of a left side and a right side of the driving-out lane Y. Alternatively, the K' lane topology curves include a lane topology curve that uses an end of a driving-in lane X of the driving-in road and a start point of a left lane or a right lane of a driving-out lane Y of the driving-out road as endpoints, and further include a lane topology curve that uses the end of the driving-in lane X of the driving-in road and a start point of the driving-out lane Y as endpoints, where there is a lane only on a left side or a right side of the driving-out lane Y of the driving-out road.

Optionally, a maximum curvature of each of the K' lane topology curves is not greater than a second preset threshold, a distance between each lane topology curve and each of the lane topology curve soft boundary constraint and the lane topology curve hard boundary constraint is not less than a third preset distance, and a distance between any two lane topology curves is not less than a fourth preset distance.

Further, the apparatus further includes an evaluation module, configured to calculate an evaluation value of each of the K' lane topology curves, where the evaluation value is related to at least one of a curvature of the lane topology curve, a curvature change rate, a quantity of diagonal crossing lanes, and lane intersection information, traffic rule information, a vehicle traffic estimation value, and a drivable distance that are of a lane corresponding to the lane topology curve. The determining module is configured to: when the vehicle is located on the driving-in road, determine the target path based on the evaluation value of each of the K' lane topology curves.

The intersection includes at least one of a crossroad, a roundabout, an intersection of a turn waiting area, a small S-bend, an elevated road entrance/exit, a multi-lane road segment without a lane marking line, a continuous turning intersection, and a narrow-lane U-turn intersection.

According to a fourth aspect, this application provides an intersection-based map generation apparatus. The apparatus includes a curve generation module, a detection processing module, and a map generation module. The curve generation module is configured to generate M lane topology curves based on an obstacle and lane lines at an intersection, an obstacle and lane lines on a driving-in road at the intersection, and an obstacle and lane lines on a driving-out road at the intersection, where the lane topology curve is a curve that uses an end of a driving-in lane of the driving-in road and a start point of a driving-out lane of the driving-out road as endpoints. The detection processing module is configured to perform reasonableness detection on the M lane topology curves to obtain K' lane topology curves, where K' is not greater than M. The map generation module is configured to generate a map of the intersection based on the K' lane topology curves at the intersection.

The curve generation module is configured to: obtain a lane topology curve hard boundary constraint based on the obstacle and un-crossable lane lines at the intersection, the obstacle and un-crossable lane lines on the driving-in road at the intersection, and the obstacle and un-crossable lane lines on the driving-out road at the intersection; obtain a lane topology curve soft boundary constraint based on crossable lane lines at the intersection, crossable lane lines on the driving-in road at the intersection, and crossable lane lines on the driving-out road at the intersection; obtain K lane topology curve virtual boundary constraints based on the lane topology curve hard boundary constraint and the lane topology curve soft boundary constraint; and generate the M lane topology curves based on the lane topology curve hard boundary constraint, the lane topology curve soft boundary constraint, and the K lane topology curve virtual boundary constraints.

Optionally, the K lane topology curve virtual boundary constraints correspond to K lane topologies, and any lane topology curve virtual boundary constraint A in the K lane topology curve virtual boundary constraints is obtained through offsetting a hard boundary constraint and/or a soft boundary constraint on a left side of a leftmost lane topology of the intersection rightwards by a first preset distance and offsetting a hard boundary constraint and/or a soft boundary constraint on a right side of a rightmost lane topology of the intersection leftwards by a first preset distance. The first preset distance is determined based on a lane sequence of a lane topology A', or the first preset distance is determined based on a lane sequence of a lane topology A' and at least one of a preset passing width of the vehicle and a lane width. The lane topology curve virtual boundary constraint A corresponds to the lane topology A', and the K lane topologies include the leftmost lane topology and the rightmost lane topology of the intersection.

Further, the curve generation module is further configured to: separately perform angle sampling on an end of each driving-in lane of the driving-in road to obtain at least one start point pose vector of the driving-in road, and separately perform angle sampling on a start point of each driving-out lane of the driving-out road to obtain at least one end point pose vector of the driving-out road; perform curve sampling on the at least one start point pose vector and the at least one end point pose vector, to obtain a plurality of curves between the driving-in road and the driving-out road; and perform screening on the plurality of curves based on the lane topology curve hard boundary constraint, the lane topology curve soft boundary constraint, and the K lane topology curve virtual boundary constraints, to obtain the M lane topology curves.

Optionally, the curve generation module is further configured to: generate a plurality of control points between the ends of the driving-in lanes of the driving-in road and the start points of the driving-out lanes of the driving-out road; and generate the plurality of smooth curves based on the at least one start point pose vector, the at least one end point pose vector, and the plurality of control points.

In an implementation, the at least one start point pose vector of the driving-in road is obtained by extending the end of each driving-in lane by a second preset distance and performing sampling.

The detection processing module is configured to: obtain a projection line between the driving-in road and the driving-out road based on a direction vector of the driving-in road and a direction vector of the driving-out road, where the projection line is a straight line on which a bisector of an included angle obtained by intersecting the direction vector of the driving-in road and the direction vector of the driving-out road is located, or the projection line is a straight line that is perpendicular to the direction vector of the driving-out road and that passes through the start point of the driving-out road; calculate an alignment coefficient between each driving-in lane of the driving-in road and each driving-out lane of the driving-out road, where the alignment coefficient between each driving-in lane and each driving-out lane is a ratio of a first parameter to a second parameter, the first parameter is an overlapping length between two line segments obtained by separately extending a lane sideline of each driving-in lane and a lane sideline of each driving-out lane to the projection line, and the second parameter is a length of a shorter line segment in the two line segments obtained by separately extending the lane sideline of each driving-in lane and the lane sideline of each driving-out lane to the projection line; and obtain the K' lane topology curves based on the alignment coefficient between each driving-in lane of the driving-in road and each driving-out lane of the driving-out road, where the K' lane topology curves include a curve that uses an end of a driving-in lane and a start point of a driving-out lane as endpoints, and an alignment coefficient between the driving-in lane and the driving-out lane is greater than a first preset threshold.

Optionally, the K' lane topology curves include a curve that respectively uses an end of a leftmost driving-in lane of the driving-in road and a start point of a leftmost driving-out lane of the driving-out road as endpoints, and further include a curve that respectively uses an end of a rightmost driving-in lane of the driving-in road and a start point of a rightmost driving-out lane of the driving-out road as endpoints.

The K' lane topology curves include a lane topology curve that uses an end of a driving-in lane X of the driving-in road and a start point of a left lane of a driving-out lane Y of the driving-out road as endpoints, and a lane topology curve that uses the end of the driving-in lane X and a start point of a right lane of the driving-out lane Y as endpoints, and further include a lane topology curve that uses the end of the driving-in lane X and a start point of the driving-out lane Y as endpoints, where there is a lane on each of a left side and a right side of the driving-out lane Y. Alternatively, the K' lane topology curves include a lane topology curve that uses an end of a driving-in lane X of the driving-in road and a start point of a left lane or a right lane of a driving-out lane Y of the driving-out road as endpoints, and further include a lane topology curve that uses the end of the driving-in lane X of the driving-in road and a start point of the driving-out lane Y as endpoints, where there is a lane only on a left side or a right side of the driving-out lane Y of the driving-out road.

Optionally, a maximum curvature of each of the K' lane topology curves is not greater than a second preset threshold, a distance between each lane topology curve and each of the lane topology curve soft boundary constraint and the lane topology curve hard boundary constraint is not less than a third preset distance, and a distance between any two lane topology curves is not less than a fourth preset distance.

The intersection includes at least one of a crossroad, a roundabout, an intersection of a turn waiting area, a small S-bend, an elevated road entrance/exit, a multi-lane road segment without a lane marking line, a continuous turning intersection, and a narrow-lane U-turn intersection.

According to a fifth aspect, this application provides an apparatus for guiding driving of a vehicle, including a processor and a memory. The memory is configured to store program code, and the processor is configured to invoke the program code, to perform the method provided in any possible implementation of the first aspect.

According to a sixth aspect, this application provides an intersection-based map generation apparatus, including a processor and a memory. The memory is configured to store program code, and the processor is configured to invoke the program code, to perform the method provided in any possible implementation of the second aspect.

According to a seventh aspect, this application provides a computer-readable storage medium. The computer-readable storage medium stores a computer program, and the computer program is executed by the processor to implement the method according to any one implementation of the first aspect and/or the method according to any one implementation of the second aspect.

According to an eighth aspect, this application provides a computer program product. When the computer program product runs on a computer, the computer is enabled to perform the method according to any one implementation of the first aspect and/or the method according to any one implementation of the second aspect.

According to a ninth aspect, this application provides a chip system, where the chip system is applied to an electronic device. The chip system includes one or more interface circuits and one or more processors. The interface circuit and the processor are interconnected through a line. The interface circuit is configured to: receive a signal from a memory of the electronic device, and send the signal to the processor, where the signal includes computer instructions stored in the memory. When the processor executes the computer instructions, the electronic device performs the method according to any one implementation of the first aspect and/or the method according to any one implementation of the second aspect.

According to a tenth aspect, this application provides an intelligent driving vehicle, including a traveling system, a sensing system, a control system, and a computer system. The computer system is configured to perform the method according to any one implementation of the first aspect and/or the method according to any one implementation of the second aspect.

It may be understood that the apparatus according to the third aspect, the apparatus according to the fourth aspect, the apparatus according to the fifth aspect, the apparatus according to the sixth aspect, the computer storage medium according to the seventh aspect or the computer program product according to the eighth aspect, the chip system according to the ninth aspect, and the intelligent driving vehicle according to the tenth aspect are all configured to perform the method provided in any one implementation of the first aspect and the method provided in any one implementation of the second aspect. Therefore, for beneficial effects that can be achieved, refer to beneficial effects achieved in the corresponding method. Details are not described herein again.

**BRIEF DESCRIPTION OF DRAWINGS**

The following describes accompanying drawings used in embodiments of this application.

FIG. 1 is a schematic diagram of a system architecture for guiding driving of a vehicle according to an embodiment of this application;
FIG. 2 is a schematic flowchart of a method for guiding driving of a vehicle according to an embodiment of this application;
FIG. 3 is a schematic diagram of a lane topology according to an embodiment of this application;
FIG. 4 is a schematic diagram of a boundary constraint according to an embodiment of this application;
FIG. 5 is a schematic diagram of a curve generation method according to an embodiment of this application;
FIG. 6 is a schematic diagram of a method for solving alignment coefficients according to an embodiment of this application;
FIG. 7 is a schematic diagram of lane topology curve screening according to an embodiment of this application;
FIG. 8a is a schematic diagram of a scenario of an abnormal-shaped many-to-many through intersection in a turn waiting area according to an embodiment of this application;
FIG. 8b is a schematic diagram of a boundary constraint according to an embodiment of this application;
FIG. 8c is a schematic diagram of curve screening according to an embodiment of this application;
FIG. 8d is a schematic diagram of a first overlapping length according to an embodiment of this application;
FIG. 8e is a schematic diagram of a second overlapping length according to an embodiment of this application;
FIG. 8f is a schematic diagram of a first application scenario according to an embodiment of this application;
FIG. 8g is a schematic diagram of a second application scenario according to an embodiment of this application;
FIG. 8h is a schematic diagram of a third application scenario according to an embodiment of this application;
FIG. 9a is a schematic diagram of a roundabout scenario according to an embodiment of this application;
FIG. 9b is a schematic diagram of a boundary constraint according to an embodiment of this application;
FIG. 9c is a schematic diagram of curve generation according to an embodiment of this application;
FIG. 9d is a schematic diagram of curve screening according to an embodiment of this application;
FIG. 10a is a schematic diagram of a left-turn intersection scenario with a turn waiting area and a traffic light according to an embodiment of this application;
FIG. 10b is a schematic diagram of another left-turn intersection scenario with a turn waiting area and a traffic light according to an embodiment of this application;
FIG. 11a is a schematic diagram of a small S-bend scenario according to an embodiment of this application;
FIG. 11b is a schematic diagram of another small S-bend scenario according to an embodiment of this application;
FIG. 12 is a schematic diagram of a ramp scenario according to an embodiment of this application;
FIG. 13 is a schematic diagram of a scenario of a multi-lane road segment without a lane marking line according to an embodiment of this application;
FIG. 14 is a schematic diagram of a continuous turning scenario according to an embodiment of this application;
FIG. 15 is a schematic diagram of a narrow-lane U-turn scenario according to an embodiment of this application;
FIG. 16 is a schematic diagram of a structure of an apparatus for guiding driving of a vehicle according to an embodiment of this application; and
FIG. 17 is a schematic diagram of a structure of another apparatus for guiding driving of a vehicle according to an embodiment of this application.

**DESCRIPTION OF EMBODIMENTS**

The following describes embodiments of this application with reference to the accompanying drawings in embodiments of this application. Terms used in implementations of embodiments of this application are merely used to explain specific embodiments of this application, and are not intended to limit this application.

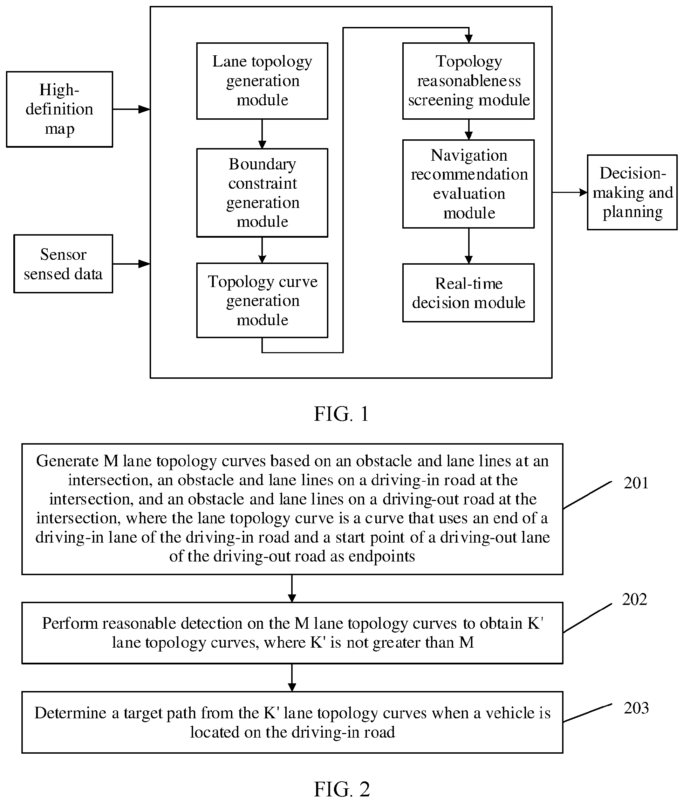

FIG. 1 is a schematic diagram of a system architecture for guiding driving of a vehicle according to an embodiment of this application. The system may include: a lane topology generation module, a boundary constraint generation module, a topology curve generation module, a topology reasonableness screening module, and a real-time decision module. The lane topology generation module is configured to generate lane-level fully-connected topologies based on a road structure in a current scenario, to lay a foundation for constructing complete road topology space. The boundary constraint generation module is configured to generate a soft boundary constraint, a hard boundary constraint, and a virtual boundary constraint for each lane topology in the lane-level fully-connected topologies based on a high-definition map and sensor sensed data. The topology curve generation module is configured to generate, for the lane topology, a smooth human-like lane topology curve that meets the boundary constraint. The topology reasonableness screening module is configured to: perform reasonableness screening on the lane-level fully-connected topologies and curves of the lane-level fully-connected topologies based on various human-like screening principles, and delete an unreasonable lane topology, to obtain a complete and reasonable lane topology curve set, so as to complete road topology analysis in the current scenario. The real-time decision module is configured to select an optimal target path at a current moment based on the foregoing road topology analysis, a dynamic and static traffic environment, a real-time ego-vehicle status, and the like.

Further, the foregoing system may further include a navigation recommendation evaluation module. The navigation recommendation evaluation module introduces a lane topology recommendation function, to perform a navigation priority evaluation on each lane topology curve in the lane topology curve set. Correspondingly, the real-time decision module may further select an optimal target path based on the navigation priority evaluation.

The foregoing system is merely an example. The system may alternatively include only the boundary constraint generation module, the topology curve generation module, the topology reasonableness screening module, and the real-time decision module, or the like. This is not specifically limited in this solution.

This solution may be applied to a scenario in which an autonomous driving vehicle drives on an open road. When a driving range includes a road scenario in which there is no actual lane line or there are a plurality of reasonable driving tracks, reasonable road topology analysis needs to be performed and corresponding topology navigation guidance information needs to be provided, so that the vehicle performs intent prediction, track (curve) prediction, lane decision-making, and motion planning. The foregoing road scenario includes but is not limited to a crossroad, a roundabout, an intersection of a turn waiting area, a small S-bend, an elevated road entrance/exit, a multi-lane road segment without a lane marking line, a continuous turning intersection, a narrow-lane U-turn intersection, or the like. Certainly, the foregoing road scenario may alternatively be another scenario. This is not specifically limited in this solution.

The foregoing merely uses an example in which this embodiment of this application is applied to an autonomous driving scenario for description. The method for guiding driving of a vehicle provided in this application may be further applied to an assisted driving scenario. This is not specifically limited in this solution.

This embodiment may be executed by a vehicle-mounted apparatus (for example, an in-vehicle infotainment), or may be executed by a terminal device like a mobile phone or a computer. This is not specifically limited in this solution.

It should be noted that the method for guiding driving of a vehicle provided in this application may be performed locally, or may be performed by a cloud. The cloud may be implemented by a server. The server may be a virtual server, a physical server, or the like, or may be another apparatus. This is not specifically limited in this solution.

FIG. 2 is a schematic flowchart of a method for guiding driving of a vehicle according to an embodiment of this application. As shown in FIG. 2, the method includes steps 201 to 206, which are specifically as follows.

201: Generate M lane topology curves based on an obstacle and lane lines at an intersection, an obstacle and lane lines on a driving-in road at the intersection, and an obstacle and lane lines on a driving-out road at the intersection, where the lane topology curve is a curve that uses an end of a driving-in lane of the driving-in road and a start point of a driving-out lane of the driving-out road as endpoints.

The M lane topology curves may be generated based on the obstacle and the lane lines at the intersection, the obstacle and the lane lines on the driving-in road, and the obstacle and the lane lines on the driving-out road that are in a high-definition map and environment sensing information obtained by a sensor.

For example, a lane topology curve hard boundary constraint, a lane topology curve soft boundary constraint, and a lane topology curve virtual boundary constraint are obtained based on the foregoing obstacle and lane lines, and then the M lane topology curves are generated based on the foregoing constraints.

Specifically, step 201 may include steps 2011 to 2014.

2011: Obtain the lane topology curve hard boundary constraint based on the obstacle and un-crossable lane lines at the intersection, the obstacle and un-crossable lane lines on the driving-in road at the intersection, and the obstacle and un-crossable lane lines on the driving-out road at the intersection.

The lane topology curve hard boundary constraint may be understood as a boundary at which a vehicle cannot drive.

Specifically, the lane topology curve hard boundary constraint is obtained by obtaining a static obstacle, the un-crossable lane lines, and the like near the intersection scenario.

The foregoing static obstacle includes a curbstone, a refuge island, a green belt, or the like on the road. The un-crossable lane lines are, for example, solid lane lines and diversion lines.

2012: Obtain the lane topology curve soft boundary constraint based on crossable lane lines at the intersection, crossable lane lines on the driving-in road at the intersection, and crossable lane lines on the driving-out road at the intersection.

The lane topology curve soft boundary constraint may be understood as a boundary constraint that allows an ego-vehicle to cross in a traffic rule, but the ego-vehicle had better not cross.

Specifically, the soft boundary constraint is obtained by obtaining actual ground marking lines in the intersection scenario. The actual ground marking lines are, for example, lane lines in a turn waiting area or crossable lane lines.

2013: Obtain K lane topology curve virtual boundary constraints based on the lane topology curve hard boundary constraint and the lane topology curve soft boundary constraint.

In a multi-lane parallel vehicle flow scenario, not only a vehicle flow track of a nearest neighbor lane is directly affected by the foregoing soft boundary and hard boundary, but also a vehicle flow track of a secondary neighbor lane is indirectly affected by the foregoing soft boundary and hard boundary due to interference of the nearest neighbor vehicle flow track. Therefore, the virtual boundary constraint is generated when interference of a vehicle flow track in a neighbor lane and gradually weakening indirect constraint effect of the soft and hard boundaries on co-directional lanes are considered.

The K lane topology curve virtual boundary constraints correspond to K lane topologies.

Specifically, the K lane topologies at the intersection are obtained based on a topology structure of each lane at the intersection, each lane of the driving-in road at the intersection, and each lane of the driving-out road at the intersection.

A road topology structure in a current scenario is obtained. Specifically, the road topology structure includes road elements such as the intersection, the driving-in road and the driving-in lane of the driving-in road, the driving-out road and the driving-out lane of the driving-out road, and an area without a marking line, and topological relationships thereof. Then, all possible K lane-level fully-connected topologies in the scenario may be generated based on a traffic rule related to the current scenario and based on all passable K1 driving-in lanes and K2 driving-out lanes, where K≤K1xK2.

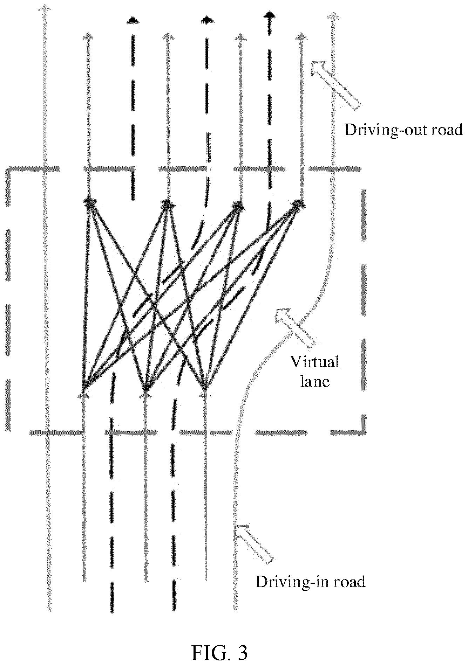

FIG. 3 is a schematic diagram of a lane topology according to an embodiment of this application. The scenario includes three driving-in lanes of a driving-in road and four driving-out lanes of a driving-out road. 12 lane-level fully-connected topologies, namely, 12 virtual lanes, are generated based on the three driving-in lanes and the four driving-out lanes. It should be noted that line segments of the 12 lane-level fully-connected topologies shown in the figure are only used to represent a continuation relationship between the lanes, and do not represent final curves (track forms) of the virtual lanes.

Traffic rules may affect a full-connection relationship and quantity of lane topologies in the current scenario. For example, due to a time-division passing feature of a special lane like a bus lane or a tidal lane, only a lane topology that complies with a special passing rule is reasonable during a passable time period of the special lane, and a corresponding lane topology may be generated. Therefore, a quantity K of fully-connected lane topologies of the K1 driving-in lanes and the K2 driving-out lanes may be less than K1xK2.

Specifically, any lane topology curve virtual boundary constraint A in the K lane topology curve virtual boundary constraints is obtained through offsetting a hard boundary constraint and/or a soft boundary constraint on a left side of a leftmost lane topology of the intersection rightwards by a first preset distance and offsetting a hard boundary constraint and/or a soft boundary constraint on a right side of a rightmost lane topology of the intersection leftwards by a first preset distance.

A leftmost lane topology of the intersection is a first left driving-in lane to a first left driving-out lane. A rightmost lane topology of the intersection is a first right driving-in lane to a first right driving-out lane.

The first preset distance may be determined based on a lane sequence of a lane topology A'.

Alternatively, the first preset distance may be determined based on the lane sequence of the lane topology A' and at least one of a preset passing width of the vehicle and a lane width.

The preset passing width of the vehicle may be understood as a width required when the vehicle safely passes.

The lane sequence may be understood as a sequence of a lane. The lane sequence may be set based on a preset rule. For example, a smallest value of sequence numbers of the driving-in lanes and sequence numbers of the driving-out lanes is obtained, and then the smallest value is subtracted by 1, to obtain the lane sequence.

Specifically, when counting is performed from the left, a lane sequence of the first left driving-in lane to the first left driving-out lane is 0, a right-start lane sequence of the first left driving-in lane to a second right driving-out lane is 0, and a right-start lane sequence of a second right driving-in lane to a third right driving-out lane is 1.

The foregoing is merely an example, and may alternatively be another determining manner. This is not specifically limited in this solution.

The preset distance may be determined based on a lane sequence of each lane topology. For example, a larger lane sequence indicates a larger preset distance corresponding to the lane sequence.

Alternatively, the preset distance may be further determined based on the lane sequence of each lane topology and at least one of a safe passing width of the vehicle and the lane width.

Specifically, the offset distance $\overrightarrow{d_{offset}}$ may be obtained in the following manner:

$$\overrightarrow{d_{offset}} = -\mathcal{F}(\overrightarrow{d_{obj}}, W_{lane}, W_{vehicle}, n_{lane}),$$

where

$n_{lane}$ represents a lane sequence of a current lane topology; $W_{lane}$ represents a lane width; $W_{vehicle}$ represents a preset (safe) passing width of a vehicle; and $\vec{d_{obj}}$ represents a collision depth, where the collision depth is a vector that points to a direction close to an obstacle and that is at a minimum distance location between a lane topology curve and an obstacle boundary curve.

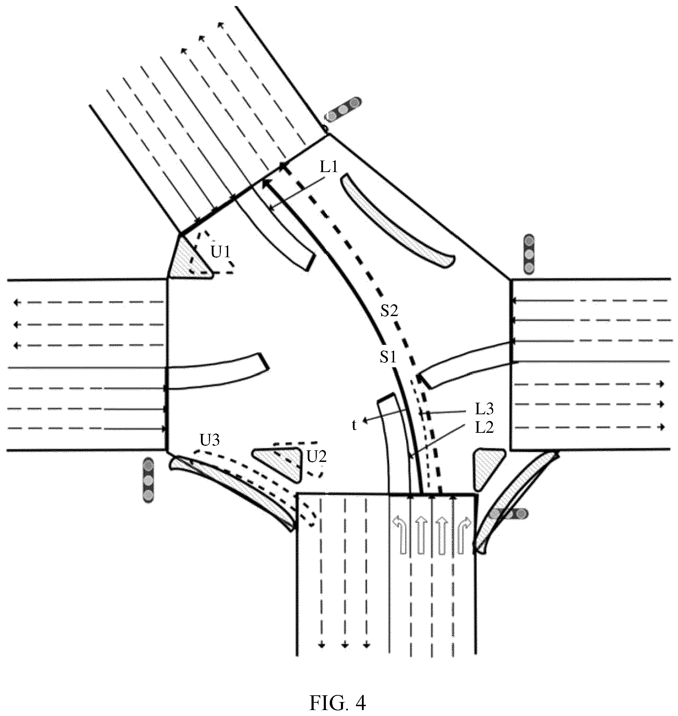

An offset direction corresponding to the offset distance is an inverse direction of a collision depth between soft and hard boundaries and a reference topology curve. As shown in FIG. 4, the reference topology tracks include a smooth curve S1 corresponding to a first left driving-in lane to a first left driving-out lane, a smooth curve S2 corresponding to a second left driving-in lane to a second left driving-out lane, and the like. Shadow areas in FIG. 4 represent a curbstone, a flowerbed, a refuge island, and the like. The shadow areas show hard boundary constraints of lanes. A lane line L1 and a lane line L2 of lanes in a turn waiting area are soft boundary constraints of the lanes. A direction pointed to by an arrow t corresponding to the reference topology curve S1 is a collision depth direction. Dashed line areas U1, U2, and U3 and a dashed line L3 are virtual boundary constraints that are of a secondary neighbor lane and that are obtained by offsetting hard boundary constraints (namely, the shadow areas) and a soft boundary constraint (L2) on the left of a leftmost lane topology at the intersection by a specific distance in a reverse direction of the collision depth direction.

2014: Generate the M lane topology curves based on the lane topology curve hard boundary constraint, the lane topology curve soft boundary constraint, and the K lane topology curve virtual boundary constraints.

Based on factors such as the hard boundary constraint, the soft boundary constraint, the virtual boundary constraint, a vehicle physical attribute, and vehicle motion performance, a human-like lane topology curve with a smooth curvature is generated for each lane topology in lane-level fully-connected topologies.

Optionally, step 2014 may include steps 20141 to 20143. Details are as follows.

20141: Separately perform angle sampling on an end of each driving-in lane of the driving-in road to obtain at least one start point pose vector of the driving-in road, and separately perform angle sampling on a start point of each driving-out lane of the driving-out road to obtain at least one end point pose vector of the driving-out road.

The foregoing lane topology curve may be generated by using a sampling algorithm based on a Bessel curve, an optimization algorithm based on a Spiral curve, or the like.

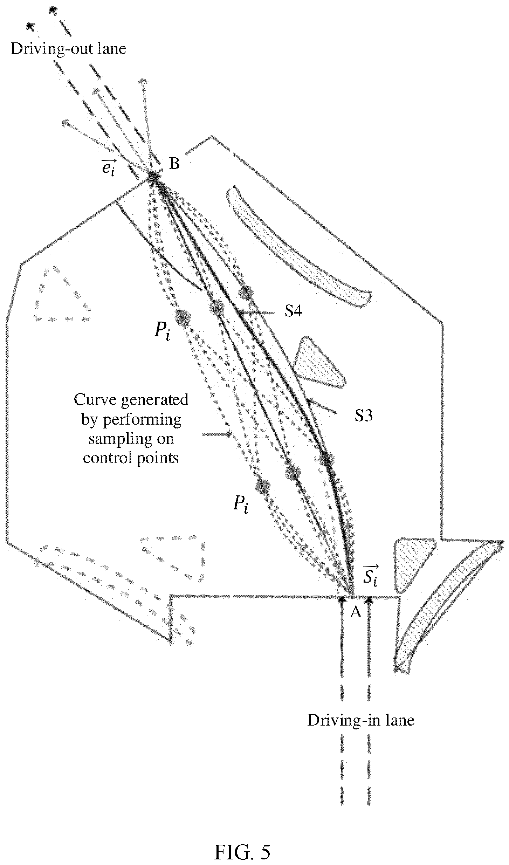

In this embodiment, the optimization algorithm based on the Spiral curve is used as an example for description. As shown in FIG. 5, vectors of different pose angles that respectively use an end of a driving-in lane and a start point of a driving-out lane as start points may be obtained by performing angle sampling based on the end of the driving-in lane and the start point of the driving-out lane. To be specific, the start point pose vectors may be understood as vectors that are located at the end of the driving-in lane and that have different pose angles. As shown in FIG. 5, a plurality of vectors $\vec{S_l}$ in different directions at an end A of the driving-in lane are the foregoing start point pose vectors. Correspondingly, the end point pose vectors may be understood as vectors that are located at the start point of the driving-out lane and that have different pose angles. As shown in FIG. 5, a plurality of vectors $\vec{e_l}$ in different directions at a start point B of the driving-out lane are the foregoing end pose vectors.

20142: Perform curve sampling on the at least one start point pose vector and the at least one end point pose vector, to obtain a plurality of curves between the driving-in road and the driving-out road.

In a first implementation, any start point pose vector and any end point pose vector are combined, so that a plurality of smooth curves can be obtained based on the foregoing plurality of combinations.

In another implementation, distance sampling is performed on a connection line between the end of the driving-in lane and the start point of the driving-out lane, to generate a plurality of groups of intermediate control points, as shown by a point $P_i$ in FIG. 5. During the distance sampling, several control points may be generated at an interval of a preset distance, or certainly, another manner may be used. This is not specifically limited in this solution. The start point pose vector, the end point pose vector, and the control point are combined, to generate a plurality of Spiral curves with smooth curvatures, for example, curves between the end of the driving-in lane and the start point of the driving-out lane shown by dashed lines in FIG. 5.

Certainly, a plurality of smooth curves may alternatively be obtained in another manner. This is not specifically limited in this solution.

20143: Perform screening on the plurality of curves based on the lane topology curve hard boundary constraint, the lane topology curve soft boundary constraint, and the K lane topology curve virtual boundary constraints, to obtain the M lane topology curves.

In a first implementation, a curve that does not meet the hard boundary constraint, the soft boundary constraint, and the virtual boundary constraint of the lane topology curve is directly deleted, to obtain the lane topology curves of the M lane topologies.

In a second implementation, a curve evaluation function is constructed by considering factors such as a curvature of the foregoing generated curve, a curvature change rate, collision costs to soft and hard boundaries, passing space, and a curve length (passing efficiency). Based on the curve evaluation function, an optimal curve that meets a safety boundary constraint and a vehicle performance constraint is selected, from the plurality of smooth curves, as an optimal curve from the end of the driving-in lane to the start point of the driving-out lane. As shown in FIG. 5, a curve S3 between the end of the driving-in lane and the start point of the driving-out lane is an optimal curve. A shorter curve between a same start point and a same end point indicates a shorter driving distance of a vehicle flow driving along a corresponding curve, and higher passing efficiency. A shorter curve between a same start point and a same end point is selected, and collision detection is performed on the optimal curve. If a collision occurs with a boundary obstacle in a scenario, a collision control point is added based on a collision location and a collision depth, to locally adjust a track form near the collision location, so that a safe and touch-free lane topology curve S4 with a smooth curvature is obtained.

The foregoing is merely an example, and may alternatively be another processing manner. This is not specifically limited in this solution.

202: Perform reasonableness detection on the M lane topology curves to obtain K' lane topology curves, where K' is not greater than M.

When impact of factors, such as a geometric form of a lane topology track, vehicle kinematics, traffic rules, collision detection, and vehicle flow interference, on lane topology reasonableness and human-like characteristics of a curve form are considered, a plurality of lane topology curve reasonableness screening principles may be established. Reasonableness screening is performed on the lane-level fully-connected topologies and curves of the lane-level fully-connected topologies, and an unreasonable lane topology is deleted, to obtain a complete and reasonable lane topology curve set. In this way, road topology analysis in the current scenario is completed.

In this solution, the following screening principles are used as examples for description.

(1) Topology projection screening principle

The topology projection screening principle may be understood as the following. An alignment coefficient (an overlap coefficient) between a driving-in lane and a driving-out lane is obtained. If the alignment coefficient is not less than a preset threshold, it indicates that there is an alignment characteristic between the driving-in lane and the driving-out lane. In this case, the lane topology and the curve of the lane topology are retained. Alternatively, if the alignment coefficient is less than a preset threshold, it indicates that there is no alignment characteristic between the driving-in lane and the driving-out lane. In this case, the lane topology and the curve of the lane topology are deleted.

The following describes an alignment coefficient obtaining manner provided in this embodiment.

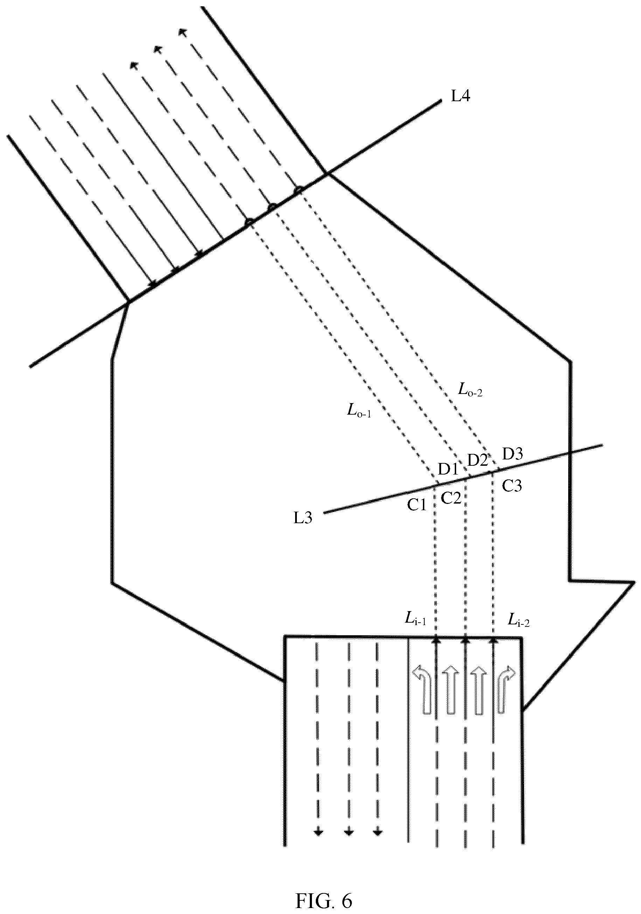

First, a projection line between the driving-in lane and the driving-out lane is obtained. As shown in FIG. 6, a direction vector of a driving-in lane and a direction vector of a driving-out lane are extended forward and backward. When an intersection point of the direction vector of the driving-in lane and the direction vector of the driving-out lane is located between an end of the driving-in lane and a start point of the driving-out lane at an intersection, a straight line on which an angular bisector passing through the intersection point is located is used as a projection line, as shown by a projection line L3 in FIG. 6. The direction vector of the driving-in lane may be understood as a direction vector of a driving-in road, namely, a vector that is parallel to the driving-in lane and that is consistent with a driving direction corresponding to the driving-in lane.

When the intersection point is not located between the end of the driving-in lane and the start point of the driving-out lane at the intersection, a straight line that is perpendicular to a direction vector of a driving-out road and that passes through start points of the driving-out road is used as a projection line, namely, a straight line L4 in FIG. 6.

Then, lane lines of the driving-in lane and the driving-out lane are both extended to the projection line L3, to calculate an overlapping length of left and right lane sidelines of the driving-in lane and left and right lane sidelines of the driving-out lane on the projection line, and obtain a length of a shortest line segment in two line segments obtained by respectively extending the left and right lane sidelines of the driving-in lane and the left and right lane sidelines of the driving-out lane to the projection line. A calculated ratio of the overlapping length to the length of the shortest line segment is an alignment coefficient.

As shown in FIG. 6, when an alignment coefficient between a first left through driving-in lane and a second left driving-out lane is calculated, two lane sidelines of the first left through driving-in lane are extended to the projection line L3, to obtain a line segment C1C2; and two lane sidelines of the second left driving-out lane are extended to the projection line L3, to obtain a line segment D1D2, to obtain an overlapping length L between the line segment C1C2 and the line segment D1D2, and a length $L_{min}$ of a shortest line segment in the line segment C1C2 and the line segment D1D2. In this way, a ratio of the overlapping length L to the length $L_{min}$ of the shortest line segment is the alignment coefficient between the first left through driving-in lane and the second left driving-out lane.

Based on the foregoing method, similarly, an alignment coefficient between other lane topologies may be calculated.

The obtained alignment coefficient is compared with a preset threshold, to screen lane topologies.

(2) Kinematic screening principle

A maximum curvature of each lane topology curve in lane-level fully-connected topologies is calculated. When a minimum turning radius corresponding to the curvature is less than a minimum vehicle turning radius obtained based on a vehicle kinematics model, it may be considered that it is difficult for a vehicle to drive along the lane topology curve in a driving process. Therefore, the unreasonable lane topology curve should be screened out from the lane-level fully-connected topologies.

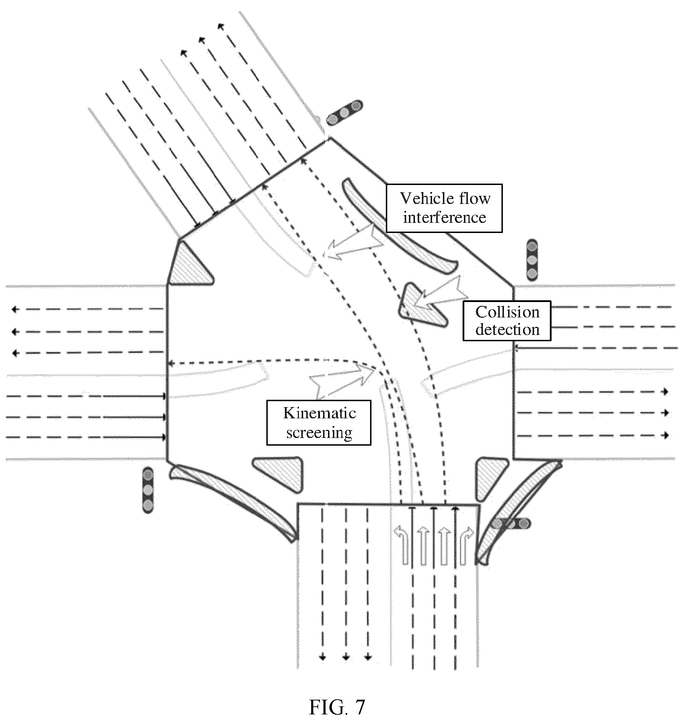

The foregoing unreasonable lane topology curve is, for example, a left/right turn curve with a small radius or a U-turn curve with a small radius. As shown by a curve corresponding to kinematic screening in FIG. 7, there is a turning angle close to 90° on the left-turn lane topology curve passing through a left-turn waiting area. A curvature at this location is excessively large, and does not meet a vehicle kinematics constraint. A vehicle cannot drive based on the curve. Therefore, the lane topology curve is deleted.

(3) Traffic rule screening principle

Due to a time-division passing feature of special lanes such as a bus lane and a tidal lane, different topology reasonableness characteristics of a turn waiting area in a traffic light state, special driving logic of a parking lane, and the like, a lane topology that does not comply with traffic passing rules needs to be deleted from lane-level fully-connected topologies according to traffic rules, and a lane that does not comply with a current passing direction needs to be deleted from all lanes of a driving-in road and a driving-out road. For example, at a through intersection, left-turn lane, U-turn lane, and right-turn driving-in lanes before the intersection are deleted, and only a through lane is retained.

(4) Collision detection screening principle

For each lane topology curve in lane-level fully-connected topologies, all points on the entire curve are traversed. When any point on the curve is excessively close (less than a preset collision safety distance) to a hard boundary in a current scenario, a state of the entire curve is that there is a collision.

Optionally, when there is a collision, a collision control point is added based on a collision location and a collision depth, to locally adjust a track form near the collision location, and perform local curve adjustment.

When the local curve adjustment fails, it may be considered that the lane topology curve fails to be generated, and a safe and touch-free curve cannot be obtained. Therefore, the unreasonable lane topology curve should be screened out from the lane-level fully-connected topologies.

As shown by a curve corresponding to collision detection in FIG. 7, a rightmost through lane topology curve collides with obstacles (shadow areas) on the right, and local track adjustment needs to be performed.

(5) Vehicle flow interference screening principle

It is considered that, in an entire scenario, all lane topology curves may be simultaneously passed in lane-level fully-connected topologies that are in different road directions and between different lanes. When any two lane topology curves are excessively close, for example, less than a preset neighbor lane interference distance, a state of the lane topology curve is that there is vehicle flow interference, where the neighbor lane interference distance is generally less than a lane width and slightly greater than a vehicle body width.

When there is vehicle flow interference, local adjustment is performed on a lane curve spacing based on lane topology curves interfering with each other and spacing distribution between neighbor lane curves of the lane topology curves, so that spacing distribution between the neighbor lane curves is more reasonable, and there is no vehicle flow interference phenomenon.

If the local adjustment performed on the lane topology curve spacing fails, it may be considered that a plurality of lane topology curves that do not interfere with each other cannot simultaneously exist in the scenario. Therefore, one or more lane topology curves that interfere with each other should be screened out from the lane-level fully-connected topologies.

As shown by a curve corresponding to vehicle flow interference in FIG. 7, in this scenario, a through lane topology curve and a left-turn waiting lane topology curve are two lane topology curves that can be simultaneously passed and that are in different road directions and between different lanes. However, the two lane topology curves are excessively close to each other near an exit of a turn waiting area, and consequently, a through vehicle and a left-turn waiting vehicle flow are excessively close to each other, interfere with each other, and generate lateral extrusion. Therefore, local adjustment needs to be performed on a spacing between the two lane topology curves. Specifically, a through lane topology and a co-directional lane topology on the right of the through lane topology may be properly moved rightward, to ensure that there is no impact of vehicle flow interference with a left-turn waiting lane topology.

(6) Topology supplement principle

According to a left alignment supplement principle, whether a topology between a first left lane of a driving-in road and a first left lane of a driving-out road is deleted according to the foregoing screening principle is checked. When the topology between the first left lane of the driving-in road and the first left lane of the driving-out road is deleted according to the foregoing screening principle, the topology is supplemented, and correspondingly, a curve corresponding to the topology is also supplemented.

According to a right alignment supplement principle, whether a topology between a first right lane of a driving-in road and a first right lane of a driving-out road is deleted according to the foregoing screening principle is checked. When the topology between the first right lane of the driving-in road and the first right lane of the driving-out road is deleted according to the foregoing screening principle, the topology is supplemented, and correspondingly, a curve corresponding to the topology is also supplemented.

According to a driving-out topology supplement principle, when there are driving-out road topologies, that all driving-out lanes of the driving-out road have lane topology curves should be ensured. When a lane does not have a lane topology curve, a new lane topology nearby should be supplemented, to ensure completeness of the driving-out topologies.

According to a neighbor lane supplement principle, when there is no lane topology curve between a driving-out lane and a driving-in lane x, but there is a lane topology curve between a lane in both left lanes and right lanes of the driving-out lane and the driving-in lane x, a new lane topology nearby is supplemented for the driving-out lane, to ensure reasonableness of neighbor lane topologies. When the driving-out lane is the first left lane of the driving-out road, only a right lane of the driving-out lane needs to be considered; or when the driving-out lane is the first right lane of the driving-out road, only a left lane of the driving-out lane needs to be considered. The left lane and the right lane may be neighbor lanes of the lane, or may be lanes separated from the lane. This is not limited in this solution.

After curve generation, topology reasonableness screening, and supplementation are performed on the lane-level fully-connected topologies according to the foregoing screening principle, supplement principle, and the like, a complete and reasonable lane topology curve set can be obtained, so that road topology analysis in the current scenario is completed.

It should be noted that the foregoing principles are merely examples, and may be randomly selected or combined during specific implementation. Certainly, processing may alternatively be performed according to another principle. This is not specifically limited in this solution.

203: Determine a target path from the K' lane topology curves when the vehicle is located on the driving-in road.

For example, when the vehicle enters the intersection from a first driving-in lane of the driving-in road, a lane topology curve, namely, the target path, is determined from lane topology curves corresponding to the first driving-in lane.

When the vehicle drives into the driving-in road, a lane topology curve may be randomly selected, from the K' lane topology curves, as the target path, or an optimal lane topology curve may be selected as the target path based on a real-time traffic status.

It should be noted that when the vehicle is located at the intersection, an optimal curve may be further determined again from the K' lane topology curves based on a traffic status and the like. For example, after the vehicle enters the intersection from an optimal lane topology curve S, another optimal curve is determined in real time because a lane is occupied by another vehicle or the like.

This is not specifically limited in this solution.

Before step 203, the method may further include:

calculating an evaluation value of each of the K' lane topology curves, where the evaluation value is related to at least one of a curvature of the lane topology curve, a curvature change rate, a quantity of diagonal crossing lanes, and lane intersection information, traffic rule information, a vehicle traffic estimation value, and a drivable distance that are of a lane corresponding to the lane topology curve.

A lane topology recommendation evaluation function is designed based on information such as the foregoing road topology analysis, global navigation information, traffic rules, and human driving experience, to perform a navigation priority evaluation on each lane topology curve in the lane topology curve set, so as to indicate a navigation recommendation priority of each curve in same-cluster lane topologies (a plurality of lane topology curves that enter the scenario from a same driving-in lane) in a traffic scenario without interference from another dynamic vehicle flow, for selecting a comprehensive optimal lane topology curve.

Optionally, the lane topology recommendation evaluation function may be expressed as the following:

$$C = w1 \text{x} C1 + w2 \text{x} C2 + w3 \text{x} C3 + w4 \text{x} C4 + w5 \text{x} C5 + w6 \text{x} C6,$$

where
C1, C2, C3, C4, C5, and C6 respectively represent a navigation cost, a topology cost, a smoothness cost, a vehicle flow intersection cost, a traffic rule cost, and a passing efficiency cost, and $w1$, $w2$, $w3$, $w4$, $w5$, and $w6$ are all coefficients.

The navigation cost is used to evaluate target reachability of the lane topology in a current scenario based on the global navigation information. If a lane-level planned path in which the lane topology is located has a longer drivable distance in a direction of reaching a specified end point of an autonomous driving task, the navigation cost C1 of the lane topology in the same-cluster lane topology is lower; and $w1$ is a weight of the navigation cost in total costs.

The foregoing topology cost is used to evaluate human-like characteristics of the lane topology in a current scenario based on a physical location relationship between a driving-in lane and a driving-out lane that are successive and connected by a lane topology. When the driving-in lane and the driving-out lane that are successive and connected by a lane topology cross a plurality of lanes leftward or rightward for diagonal crossing, the lane topology track is, consequently, not human-like, and a risk of preempting a lane with another vehicle is increased. Therefore, a smaller quantity of diagonal crossing lanes in the lane topology indicates a lower topology cost C2; and $w2$ is a weight of the topology cost in the total costs.

The smoothness cost is used to evaluate a curvature and a curvature change rate of the lane topology curve when the lane topology curve includes a driving-in lane track, a virtual lane track, and a driving-out lane track in a current scenario. A smaller curvature and curvature change rate indicates that the lane topology curve is smoother and the smoothness cost C3 is lower; and $w3$ is a weight of the smoothness cost in the total costs.

The vehicle flow intersection cost is used to evaluate an attribute of the lane topology to intersect with another traffic flow in the current scenario based on connection relationships of all lane topologies that are of the driving-out lanes and that are connected to the lane topology. If a driving-out lane of the lane topology also belongs to a lane topology in another direction, for example, the driving-out lane of the through lane topology is also a driving-out lane of another left-turn, U-turn, or right-turn lane topology, it means that the lane topology intersects with a vehicle in another direction, and a risk of lane preemption or lateral extrusion is higher. Therefore, a vehicle interaction relationship is more complex, passing efficiency is lower, and the lane intersection cost C4 is higher; and $w4$ is a weight of the vehicle flow intersection cost in the total costs.

In different traffic scenarios such as a left-turn scenario, a right-turn scenario, a through scenario, and a U-turn scenario, traffic rules have different tendencies for selecting lane topologies. For example, in the left-turn scenario, the right-turn scenario, and the U-turn scenario, an innerside lane topology tends to be selected according to the traffic rules. However, in the through scenario, a straighter lane topology tends to be selected, to avoid complex intersection with a vehicle flow in another direction. Therefore, the traffic rule cost is a cost representing a preference priority of the traffic rules for a lane topology in a current scenario. A lane topology with a higher preference priority of the traffic rules has a lower traffic rule cost C5; and $w5$ is a weight of the traffic rule cost in the total costs.

In a same-cluster lane topology scenario in which a same driving-in lane has a plurality of driving-out lanes, a human driver usually can select a lane topology with higher passing efficiency based on driving experience. From a macro perspective, this is shown by a vehicle flow allocation ratio of a macro traffic flow in the same-cluster lane scenario. Therefore, a lane topology with a higher vehicle flow ratio in the macro traffic flow is a lane topology closer to selection of the human driver, and has higher passing efficiency. The passing efficiency cost C6 of the lane topology should be lower; and $w6$ is a weight of the passing efficiency cost in the total costs.

Therefore, a total cost evaluation performed on lane curves in the lane topology curve set may represent navigation recommendation priorities of curves in same-cluster lane topologies related to a same driving-in lane, to select a comprehensive optimal lane topology. For example, a lane topology with a straighter topology, a smoother track, no lane intersection, and higher passing efficiency is an optimal lane topology curve recommended by navigation.

Evaluation values of the lane topology curves are calculated, and then, a lane topology curve with an optimal evaluation value is selected as a target path.

For example, before the vehicle approaches a scenario like a many-to-many intersection, an intersection of a turn waiting area, an S-bend, or an elevated road entrance, the vehicle may select an optimal lane topology curve recommended by navigation based on a global view of the navigation recommendation evaluation, to change a lane in advance, and avoid high-risk lane topologies with vehicle flow conflicts such as diagonal crossing of lanes, lateral extrusion from another vehicle, and multi-lane combination. Specifically, for the many-to-many intersection, a lane topology curve with straighter topology alignment and a longer drivable distance is recommended to be optimal. For the intersection of a turn waiting area, a lane topology curve after entering the turn waiting area is recommended to be optimal. For the S-bend, a lane topology curve along a lane line is recommended to be optimal. For left/right-turn and U-turn scenarios, an innermost lane topology curve that meets kinematics is recommended to be optimal.

When the vehicle is in a scenario like a many-to-many intersection, an intersection of a turn waiting area, an S-bend, or an elevated road entrance, if a sensor detects that a real-time traffic flow has occupied or extruded the optimal lane topology curve recommended by navigation, the vehicle may select an optimal lane topology, for example, a suboptimal lane topology curve recommended by navigation, in a current scenario based on navigation recommendation evaluations and real-time dynamic risks of all lane topologies. Specifically, for the many-to-many intersection, a lane topology curve with less lateral vehicle flow interference and a longer travelable distance is recommended to be optimal. For the S-bend, a cut lane topology curve is recommended to be optimal. For the intersection of a turn waiting area, an inscribed lane topology curve that does not enter the turn waiting area is recommended to be optimal. For left/right-turn and U-turn scenarios, an unoccupied inner lane topology curve that meets kinematics requirements is recommended to be optimal.

In embodiments of this application, the M lane topology curves are generated based on the obstacle and the lane lines at the intersection, the obstacle and the lane lines on the driving-in road at the intersection, and the obstacle and the lane lines on the driving-out road at the intersection. Reasonableness detection and processing are performed on the M lane topology curves, to obtain K' lane topology curves. Then, the target path is determined from the K' lane topology curves, to guide driving of the vehicle. According to this method, a complete and reasonable lane topology curve is generated, and driving guidance information is provided for the vehicle, thereby effectively improving human-like characteristics of a track and passing efficiency of the vehicle when the vehicle passes through the intersection.

**Embodiment 1**

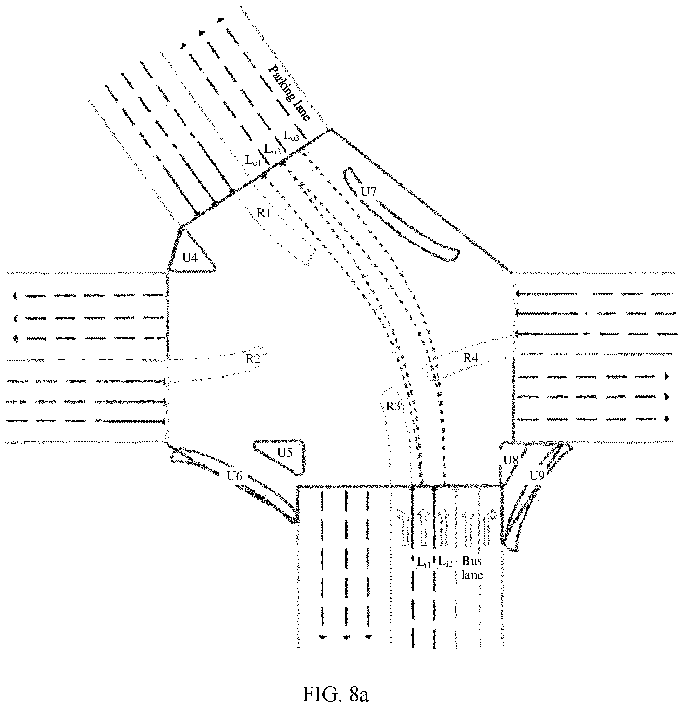

FIG. 8a shows a scenario of an abnormal-shaped many-to-many through intersection in a turn waiting area according to an embodiment of this application. As shown in FIG. 8a, the scenario includes a turn waiting area, a bus lane, a parking lane, unaligned driving-in and driving-out lanes, and an abnormal-shaped obtuse-angle intersection.

A driving-in road shown in FIG. 8a includes one left-turn lane in the turn waiting area, one right-turn lane, one bus through lane, and two common through lanes; and a driving-out road includes one parking lane and three common through driving-out lanes.

According to traffic rules, another vehicle is not allowed to occupy the bus lane without any reason during a specified passing time period of the bus lane. However, the parking lane usually includes a special area like a bus station or a temporary parking faulty area. Therefore, in this scenario, the driving-in lanes include only two through lanes ($L_{i1}$, $L_{i2}$), and the driving-out lanes include only three through lanes ($L_{o1}$, $L_{o2}$, $L_{o3}$). In this case, lane-level fully-connected topologies include all six alternative lane topologies: $L_{i1} \rightarrow L_{o1}$, $L_{i1} \rightarrow L_{o2}$, $L_{i1} \rightarrow L_{o3}$, $L_{i2} \rightarrow L_{o1}$, $L_{i2} \rightarrow L_{o2}$, and $L_{i2} \rightarrow L_{o3}$.

Environment sensing obstacle information, for example, obstacles U4, U5, U6, U7, U8, and U9 shown in FIG. 8a, and lane line information, for example, lane marking lines R1 and R3, are obtained based on a high-definition map and a sensor. Hard boundary constraints include a curbstone, a refuge island, a green belt, and the like that are shown in the obstacles U4, U5, U6, U7, U8, and U9, and include intersection boundary lines and the like. Soft boundary constraints include the lane marking lines R1 and R3 that are respectively shown in two left-turn waiting areas in FIG. 8a.

The foregoing obstacle areas are distributed on left and right sides of the foregoing generated six lane topologies, and exactly same obstacle areas are distributed on the left and right sides of each lane topology. Therefore, each lane topology has same hard boundary constraints. Similarly, each lane topology has exactly same distribution of soft boundary constraints. Therefore, each lane topology has the same soft boundary constraints.

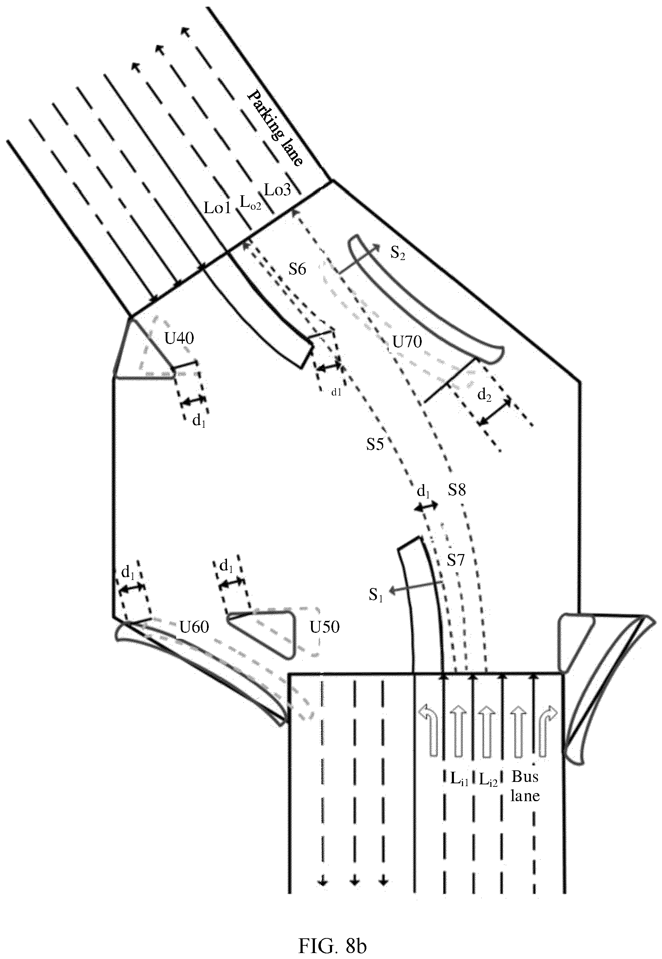

A virtual boundary constraint considers interference impact of a vehicle flow track on a neighbor lane and reflects gradually weakening indirect constraint effect of soft and hard boundaries on co-directional lanes. Therefore, each lane topology has a different virtual boundary constraint. For example, a lane topology $L_{i2} \rightarrow L_{o2}$ is used as an example. A vehicle flow track in a lane topology $L_{i1} \rightarrow L_{o1}$ is affected by soft and hard boundaries of the lane topology $L_{i1} \rightarrow L_{o1}$. Therefore, due to interference of a vehicle flow track on a neighbor lane, the soft and hard boundaries of the lane topology $L_{i1} \rightarrow L_{o1}$ also generate a virtual boundary constraint on the lane topology $L_{i2} \rightarrow L_{o2}$. A reference topology curve of a left nearest neighbor lane $L_{i1} \rightarrow L_{o1}$ is shown by a curve S5 in FIG. 8b, and a collision depth vector of the left nearest neighbor lane is shown by $\overrightarrow{S_1}$. Left virtual boundary constraints of the lane topology $L_{i2} \rightarrow L_{o2}$ are shown by areas U40, U50, and U60 and dashed lines S6 and S7 in FIG. 8b, and an offset distance along the collision depth vector $\overrightarrow{S_1}$ meets $\overrightarrow{d_{offset}}$ = -

$$-\mathcal{F}(\overrightarrow{S_1}, W_{lane}, W_{vehicle}$$

$$\text{equence } n_{L_{i2} \rightarrow L_{o2}} = 1,$$

$$W_{lane}, \text{ that is, the offs}$$

$$-\mathcal{F}(\overrightarrow{d_{obj}}, W_{lan}$$

**[00226]** A l

ddition, $d_1 >$

$$\text{ne topology } L_{i1} \rightarrow L_{o2}$$

$$\text{;hbor lane of the lane}$$

idth and less $(\overrightarrow{d_{obj}}, W_{lane}, W_{vehicle}, n_{lane}) = -$ $\quad (\overrightarrow{S_1}, W_{lane}, W_{vehicle}, n_{L_{i2} \rightarrow L_{o2}}) = d_1$.

A left-aligned lane sequence $n_{L_{i2} \rightarrow L_{o2}} = 1$, and a lane sequence $n_{L_{i1} \rightarrow L_{o1}} 1 = 0$. In addition, $d_1 > W_{vehicle}$ and $d_1 < W_{lane}$, that is, the offset distance is greater than a vehicle body width and less than a lane width.

Similarly, because a lane topology $L_{i1} \rightarrow L_{o2}$ is affected by interference of a vehicle flow track on a right nearest neighbor lane of the lane topology $L_{i1} \rightarrow L_{o2}$, a virtual boundary constraint is generated on the lane topology $L_{i1} \rightarrow L_{o2}$. A

reference topology curve of the right nearest neighbor lane $L_{i2} \rightarrow L_{o3}$ is shown by a curve S8 in FIG. 8b, and a collision depth vector of the right nearest neighbor lane is shown by $\overrightarrow{S_2}$. A right-aligned lane sequence $n_{L_{i1} \rightarrow Lo2}=1$, and a reverse offset distance along the collision depth vector $\overrightarrow{S_2}$ is $d_2$. In addition, $d_2 > W_{vehicle}$ and $d_2 < W_{lane}$. Therefore, a right virtual boundary constraint of the lane topology $L_{i1} \rightarrow L_{o2}$ is shown by an area U70.

For manners of generating soft and hard boundary constraints and a virtual boundary constraint of another lane topology in the lane-level fully-connected topologies, refer to the foregoing descriptions. Details are not described herein again.

Under the foregoing soft and hard boundary constraints and virtual boundary constraint, a Spiral curve-based optimization algorithm is used to generate human-like virtual lane track with smooth curvatures for the six lane topologies in the lane-level fully-connected topologies. Based on start point and end point pose sampling, control point sampling, and curve track generation, several alternative curves are generated for each of the six lane topologies in the lane-level fully-connected topologies.

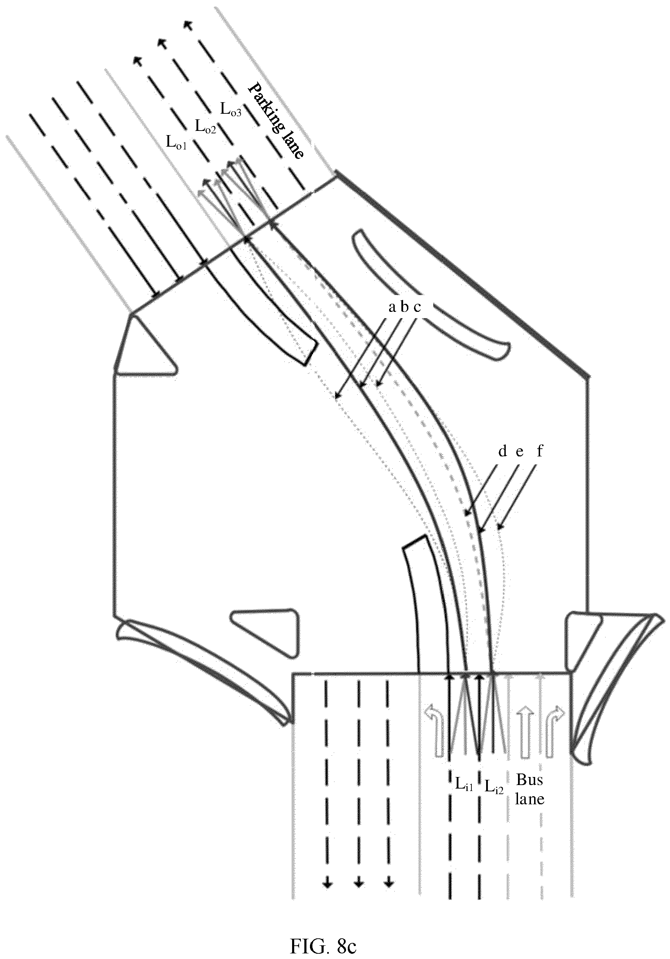

Three alternative curves of each of the lane topology $L_{i1} \rightarrow L_{o1}$ and the lane topology $L_{i2} \rightarrow L_{o2}$ are used as examples for description, as shown in FIG. 8c. For the alternative curves a, b, and c of the lane topology $L_{i1} \rightarrow L_{o1}$, the curve b has a more uniform curvature and a more uniform change rate, a distance, to a soft boundary (a lane line of a turn waiting area), that meets a passing space requirement, and a shorter curve length. Therefore, the curve b is an optimal curve of the lane topology $L_{i1} \rightarrow L_{o1}$. For the lane topology $L_{i2} \rightarrow L_{o2}$, a curvature of a curve f changes excessively, and compared with a curve e, although a curve d has a distance, to the soft boundary (the lane line of the turn waiting area), that meets the passing space requirement, and a slightly shorter curve length, a distance between the curve d and a virtual boundary S6 is relatively small. Therefore, the curve e has a better virtual lane curve evaluation value, and should be selected as an optimal curve of the lane topology $L_{i2} \rightarrow L_{o2}$. Finally, both the optimal curve b of the lane topology $L_{i1} \rightarrow L_{o1}$ and the optimal curve e of the lane topology $L_{i2} \rightarrow L_{o2}$ meet the soft and hard boundary constraints and the virtual boundary constraint, and do not collide with a boundary obstacle in the scenario. Therefore, local curve form adjustment does not need to be performed.

Reasonableness screening is performed on the six lane topologies and the curves of six lane topologies in the lane-level fully-connected topologies according to a lane topology curve reasonableness screening principle, and an unreasonable lane topology is deleted, to obtain a reasonable lane topology curve set. In this way, road topology analysis in the current scenario is completed.

Specifically, direction vectors of the driving-in road and the driving-out road in the scenario in this embodiment are extended forward and backward, and an intersection point of the extended direction vectors is located between the driving-in road and the driving-out road at the intersection. Therefore, a projection line is obtained by producing an angular bisector passing through the intersection point of extension lines of the direction vectors. Lane sidelines of the driving-in lanes $L_{i1}$ and $L_{i2}$ and the driving-out lanes $L_{o1}$, $L_{o2}$, and $L_{o3}$ are extended to the projection line, to calculate alignment coefficients (namely, projection overlap coefficients) of left and right lane sidelines on the projection line. If the alignment coefficient is greater than a preset threshold, the lane topology is retained; or if the alignment coefficient is not greater than a preset threshold, the lane topology is deleted from the lane-level fully-connected topologies. If all alignment coefficients of a driving-in lane are less than the specified threshold, optionally, a lane topology with a maximum alignment coefficient may be retained.

The following uses two overlapping results as examples for description. The preset threshold of the alignment coefficients is set to 1/3.

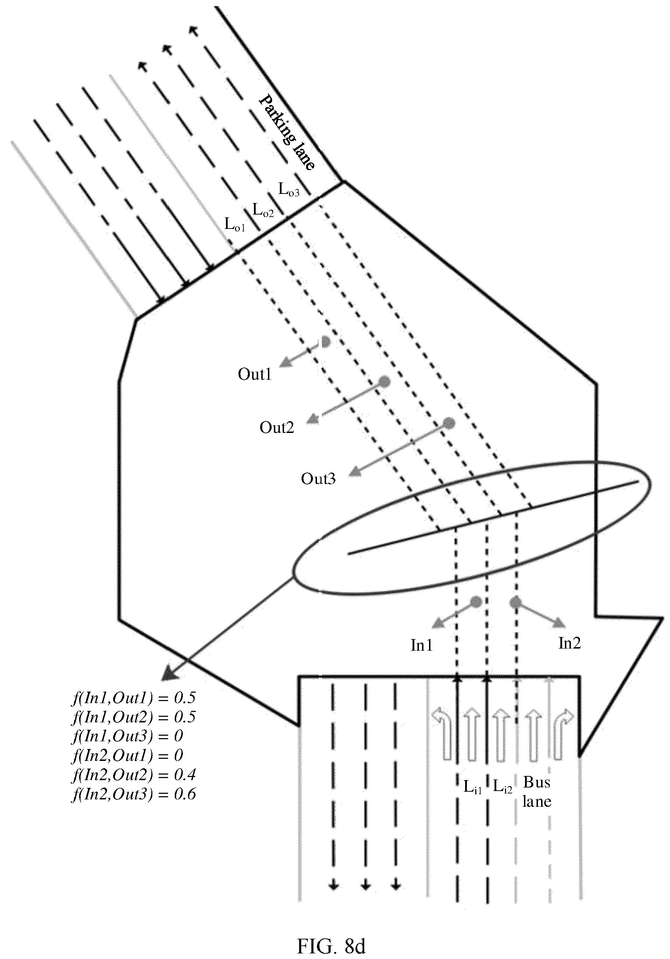

(1) As shown in FIG. 8d, for the driving-in lane $L_{i1}$, an overlapping length of the lane topology $L_{i1} \rightarrow L_{o1}$ meets $w_{same}(L_{in-1}, L_{out-1}) = 0.5 * w_{L_{i1}}$, a lane width meets $w_{lane}(L_{in-1}, L_{out-1}) = min(w_{L_{i1}}, w_{L_{o1}}) = w_{L_{i1}}$, and therefore, the alignment coefficient meets $f(L_{in-1}, L_{out-1}) = \frac{w_{same}(L_{in-1}, L_{out-1})}{w_{lane}(L_{in-1}, L_{out-1})} = 0.5$. The alignment coefficient 0.5 is greater than 1/3.

An overlapping length of the lane topology $L_{i1} \rightarrow L_{o2}$ meets $w_{same}(L_{in-1}, L_{out-2}) = 0.5 * w_{L_{i1}}$, a lane width meets $w_{lane}(L_{in-1}, L_{out-2}) = min(w_{L_{i1}}, w_{L_{o2}}) = w_{L_{i1}}$, and therefore, the alignment coefficient meets $f(L_{in-1}, L_{out-2}) = \frac{w_{same}(L_{in-1}, L_{out-2})}{w_{lane}(L_{in-1}, L_{out-2})} = 0.5$. The alignment coefficient 0.5 is greater than 1/3.

An overlapping length of the lane topology $L_{i1} \rightarrow L_{o3}$ meets $w_{same}(L_{in-1}, L_{out-3}) = 0$, a lane width meets $w_{lane}(L_{in-1}, L_{out-3}) = min(w_{L_{i1}}, w_{L_{o3}}) = w_{L_{i1}}$, and therefore, the alignment coefficient is 0.

Similarly, for the driving-in lane $L_{i2}$, an overlapping length of the lane topology $L_{i2} \rightarrow L_{o1}$ meets $w_{same}(L_{in-2}, L_{out-1}) = 0$, a lane width meets $w_{lane}(L_{in-2}, L_{out-1}) = min(w_{L_{i2}}, w_{L_{o1}}) = w_{L_{i2}}$, and therefore, the alignment coefficient is 0.

An overlapping length of the lane topology $L_{i2} \rightarrow L_{o2}$ meets $w_{same}(L_{in-2}, L_{out-2}) = 0.4 * w_{L_{i2}}$, a lane width meets $w_{lane}(L_{in-2}, L_{out-2}) = min(w_{L_{i2}}, w_{L_{o2}}) = w_{L_{i2}}$, and therefore, the alignment coefficient meets

$$f(L_{in-2}, L_{out-2}) = \frac{w_{same}(L_{in-2}, L_{out-2})}{w_{lane}(L_{in-2}, L_{out-2})} = 0.4$$ . The alignment coefficient 0.4 is greater than 1/3.

An overlapping length of the lane topology $L_{i2} \rightarrow L_{o3}$ meets $w_{same}(L_{in-2}, L_{out-3}) = 0.6 * w_{Li2}$, a lane width meets $w_{lane}(L_{in-2}, L_{out-3}) = min(w_{Li2}, w_{Lo3}) = w_{Li2}$, and therefore, the alignment coefficient meets

$$f(L_{in-2}, L_{out-3}) = \frac{w_{same}(L_{in-2}, L_{out-3})}{w_{lane}(L_{in-2}, L_{out-3})} = 0.6$$ . The alignment coefficient 0.6 is greater than 1/3.

In conclusion, all the alignment coefficients of the lane topologies $L_{i1} \rightarrow L_{o1}$, $L_{i1} \rightarrow L_{o2}$, $L_{i2} \rightarrow L_{o2}$, and $L_{i2} \rightarrow L_{o3}$ are greater than the preset threshold, and accordingly, the corresponding lane topologies are retained. However, the alignment coefficients of the lane topologies $L_{i1} \rightarrow L_{o3}$ and $L_{i2} \rightarrow L_{o1}$ are less than the preset threshold, and accordingly, the corresponding lane topologies and the curves thereof are deleted from the lane-level fully-connected topologies.

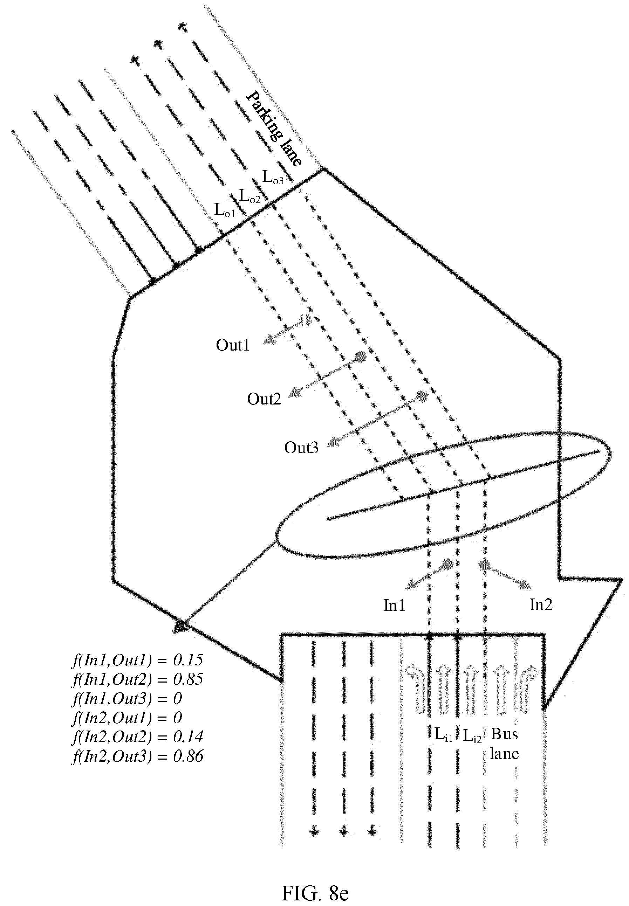

(2) As shown in FIG. 8e, for the driving-in lane $L_{i1}$, an overlapping length of the lane topology $L_{i1} \rightarrow L_{o1}$ meets $w_{same}(L_{in-1}, L_{out-1}) = 0.15 * w_{Li1}$, a lane width meets $w_{lane}(L_{in-1}, L_{out-1}) = min(w_{Li1}, w_{Lo1}) = w_{Li1}$, and therefore, the alignment coefficient meets $f(L_{in-1}, L_{out-1}) = \frac{w_{same}(L_{in-1}, L_{out-1})}{w_{lane}(L_{in-1}, L_{out-1})} = 0.15$ .

An overlapping length of the lane topology $L_{i1} \rightarrow L_{o2}$ meets $w_{same}(L_{in-1}, L_{out-2}) = 0.85 * w_{Li1}$, a lane width meets $w_{lane}(L_{in-1}, L_{out-2}) = min(w_{Li1}, w_{Lo2}) = w_{Li1}$, and the alignment coefficient meets

$$f(L_{in-1}, L_{out-2}) = \frac{w_{same}(L_{in-1}, L_{out-2})}{w_{lane}(L_{in-1}, L_{out-2})} = 0.85$$ . The alignment coefficient 0.85 is greater than 1/3.

An overlapping length of the lane topology $L_{i1} \rightarrow L_{o3}$ meets $w_{same}(L_{in-1}, L_{out-3}) = 0$, a lane width meets $w_{lane}(L_{in-1}, L_{out-3}) = min(w_{Li1}, w_{Lo3}) = w_{Li1}$, and therefore, the alignment coefficient is 0.

Similarly, for the driving-in lane $L_{i2}$, an overlapping length of the lane topology $L_{i2} \rightarrow L_{o1}$ meets $w_{same}(L_{in-2}, L_{out-1}) = 0$, a lane width meets $w_{lane}(L_{in-2}, L_{out-1}) = min(w_{Li2}, w_{Lo1}) = w_{Li2}$, and therefore, the alignment coefficient is 0.

An overlapping length of the lane topology $L_{i2} \rightarrow L_{o2}$ meets $w_{same}(L_{in-2}, L_{out-2}) = 0.14 * w_{Li2}$, a lane width meets $w_{lane}(L_{in-2}, L_{out-2}) = min(w_{Li2}, w_{Lo2}) = w_{Li2}$, and the alignment coefficient meets

$$f(L_{in-2}, L_{out-2}) = \frac{w_{same}(L_{in-2}, L_{out-2})}{w_{lane}(L_{in-2}, L_{out-2})} = 0.14$$ .

An overlapping length of the lane topology $L_{i2} \rightarrow L_{o3}$ meets $w_{same}(L_{in-2}, L_{out-3}) = 0.86 * w_{Li2}$, a lane width meets $w_{lane}(L_{in-2}, L_{out-3}) = min(w_{Li2}, w_{Lo3o3}) = w_{Li2}$, and the alignment coefficient meets

$$f(L_{in-2}, L_{out-3}) = \frac{w_{same}(L_{in-2}, L_{out-3})}{w_{lane}(L_{in-2}, L_{out-3})} = 0.86$$ . The alignment coefficient 0.86 is greater than 1/3.

Therefore, the alignment coefficients of the lane topologies $L_{i1} \rightarrow L_{o2}$ and $L_{i2} \rightarrow L_{o3}$ are both greater than the preset threshold, and accordingly, the corresponding lane topologies are retained. However, the alignment coefficients of the lane topologies $L_{i1} \rightarrow L_{o1}$, $L_{i1} \rightarrow L_{o3}$, $L_{i2} \rightarrow L_{o2}$, and $L_{i2} \rightarrow L_{o1}$ are less than the preset threshold, and accordingly, the corresponding lane topologies and the curves thereof should be deleted from the lane-level fully-connected topologies.

In a lane topology curve set $\{L_{i1} \rightarrow L_{o1}, L_{i1} \rightarrow L_{o2}, L_{i2} \rightarrow L_{o2}, L_{i2} \rightarrow L_{o3}\}$ or $\{L_{i1} \rightarrow L_{o2}, L_{i2} \rightarrow L_{o3}\}$ retained after screening in the foregoing two examples, all the lane topologies have smooth curvatures, meet a turning radius requirement of the vehicle, and therefore, meet a kinematic screening principle. Because traffic rules of the bus lane, the parking lane, the left-turn waiting lane, and the right-turn lane have been considered during lane topology generation, the generated lane-level fully-connected topologies also meet a traffic rule screening condition. In addition, all the lane topology curves do not collide with the obstacle areas in the scenario, there is no interference between tracks or between tracks and the turn waiting area, and there is sufficient passing space. Therefore, a collision detection screening principle and a vehicle flow interference screening principle are also met.

In the example shown in the foregoing (1), topology supplement does not need to be performed on the lane topology curve set retained after screening. However, in the example shown in the foregoing (2), the lane topology curve set retained after screening is $\{L_{i1} \rightarrow L_{o2}, L_{i2} \rightarrow L_{o3}\}$, and there is no reserved reasonable lane topology for the driving-out lane $L_{o1}$. Therefore, topology supplementation should be performed according to a left alignment/right alignment supplement principle, a driving-out topology supplement principle, and a neighbor lane supplement principle. Based on a left-aligned lane correspondence, the lane topology $L_{i1} \rightarrow L_{o1}$ should be supplemented for the driving-out lane $L_{o1}$. Based on a right-aligned lane correspondence, there is no driving-in lane corresponding to the driving-out lane $L_{o1}$. Therefore, a right-aligned lane topology does not need to be supplemented for the driving-out lane $L_{o1}$. In this case, a reserved lane topology curve set is $\{L_{i1} \rightarrow L_{o1}, L_{i1} \rightarrow L_{o2}, L_{i2} \rightarrow L_{o3}\}$. Therefore, conditions of the driving-out topology supplement principle and the neighbor lane supplement principle are not met.

After curve generation, topology reasonableness screening, and supplementation are performed on the lane-level fully-connected topologies according to the foregoing method, a complete and reasonable lane topology curve set $\{L_{i1} \rightarrow L_{o1}, L_{i1} \rightarrow L_{o2}, L_{i2} \rightarrow L_{o2}, L_{i2} \rightarrow L_{o3}\}$ or $\{L_{i1} \rightarrow L_{o1}, L_{i1} \rightarrow L_{o2}, L_{i2} \rightarrow L_{o3}\}$ can be obtained, so that road topology analysis in the current scenario is completed.

The following uses only the lane topology curve set $\{L_{i1} \to L_{o1}, L_{i1} \to L_{o2}, L_{i2} \to L_{o2}, L_{i2} \to L_{o3}\}$ generated in the example shown in (1) as an example for description.

In this example, that a lane topology recommendation evaluation function includes a navigation cost, a topology cost, a smoothness cost, a vehicle flow intersection cost, a traffic rule cost, and a passing efficiency cost is used as an example. Navigation recommendation priorities are calculated for a plurality of lane topology curves that enter the scenario from a same driving-in lane, to select a comprehensive optimal lane topology.

It is assumed that in the scenario of this embodiment, a global navigation planning route turns left after the intersection to reach an end point. Therefore, a relationship between drivable distances from all the driving-out lanes to a direction of the end point is $Distance_{L_{o1}} > Distance_{L_{o2}} > Distance_{L_{o3}}$. In addition, a weight relationship of each cost is set as follows: a weight of the navigation cost meets $w_1 = 5$, a weight of the topology cost meets $w_2 = 2$, a weight of the smoothness cost meets $w_3 = 0.5$, a weight of the vehicle flow intersection cost meets $w_4 = 1$, a weight of the traffic rule cost meets $w_5 = 10$, and a weight of the passing efficiency cost meets $w_6 = 0.3$.

For the lane topologies $L_{i1} \to L_{o1}$ and $L_{i1} \to L_{o2}$ that enter the intersection from the driving-in lane $L_{i1}$, it is as follows.

(1) Navigation cost $C_1$: $Distance_{L_{o1}} > Distance_{L_{o2}}$. Therefore, $C_1^{L_{i1} \to L_{o1}} < C_1^{L_{i1} \to L_{o2}}$.

(2) Topology cost $C_2$: Based on the left-aligned lane correspondence, the lane topology $L_{i1} \to L_{o1}$ is left-aligned, and a quantity of horizontally crossed lanes is 0. However, a quantity of lanes crossed by the lane topology $L_{i1} \to L_{o2}$ according to the left alignment principle is 1. Therefore, $C_2^{L_{i1} \to L_{o1}} < C_2^{L_{i1} \to L_{o2}}$.

(3) Smoothness cost $C_3$: A curvature of the lane topology $L_{i1} \to L_{o1}$ is greater than a curvature of the lane topology $L_{i1} \to L_{o2}$. Therefore, $C_3^{L_{i1} \to L_{o1}} > C_3^{L_{i1} \to L_{o2}}$.

(4) Vehicle flow intersection cost $C_4$: There is only one lane topology $L_{i1} \to L_{o1}$ for the driving-out lane $L_{o1}$. However, there are two lane topologies $L_{i1} \to L_{o2}$ and $L_{i2} \to L_{o2}$ for the driving-out lane $L_{o2}$, and there is a risk of vehicle flow intersection. Therefore, $C_4^{L_{i1} \to L_{o1}} < C_4^{L_{i1} \to L_{o2}}$.

(5) Traffic rule cost $C_5$: The scenario in this embodiment is a through intersection, and there is no priority difference between all the driving-out lanes. Therefore, $C_5^{L_{i1} \to L_{o1}} = C_5^{L_{i1} \to L_{o2}}$.

(6) Passing efficiency cost $C_6$: Based on human driving experience and a macro traffic flow allocation status, in the scenario of this embodiment, a probability of selecting the lane topology $L_{i1} \to L_{o1}$ is greater than a probability of selecting the lane topology $L_{i1} \to L_{o2}$. Therefore, $C_6^{L_{i1} \to L_{o1}} < C_6^{L_{i1} \to L_{o2}}$.

In conclusion, a total cost of the lane topology recommendation evaluation function meets $C^{L_{i1} \to L_{o1}} < C^{L_{i1} \to L_{o2}}$, and navigation recommendation priorities of the lane topologies $L_{i1} \to L_{o1}$ and $L_{i1} \to L_{o2}$ that enter the intersection from the driving-in lane $L_{i1}$ are as follows: $(L_{i1} \to L_{o1}) > (L_{i1} \to L_{o2})$.

Similarly, a total cost of the lane topology recommendation evaluation function meets $C^{L_{i2} \to L_{o2}} < C^{L_{i2} \to L_{o3}}$, and navigation recommendation priorities of the lane topologies $L_{i2} \to L_{o2}$ and $L_{i2} \to L_{o3}$ that enter the intersection from the driving-in lane $L_{i2}$ are as follows: $(L_{i2} \to L_{o2}) > (L_{i2} \to L_{o3})$.

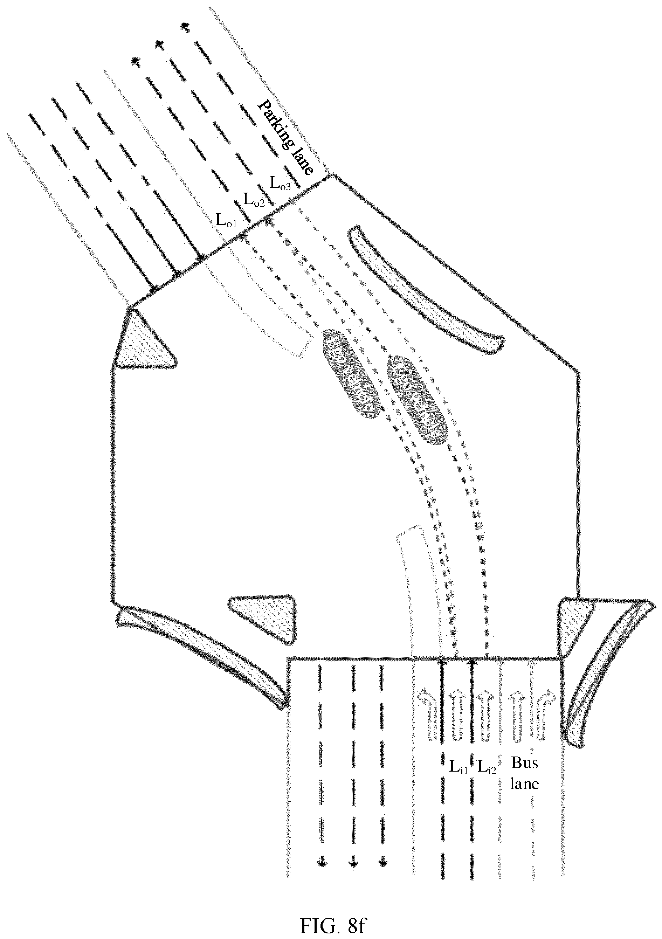

As shown in FIG. 8f, when the vehicle drives in the scenario in this embodiment, if the intersection scenario is relatively open, and there is no lateral extrusion generated by another vehicle when the vehicle passes through the intersection, the vehicle drives along the lane topology $L_{i1} \to L_{o1}$ or $L_{i2} \to L_{o2}$.

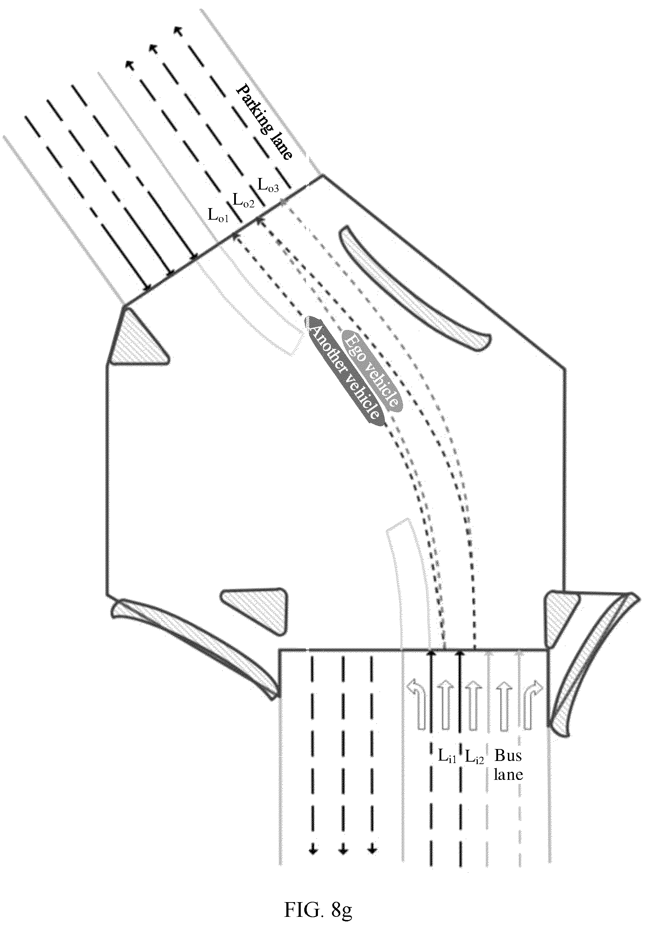

As shown in FIG. 8g, if a front vehicle in the lane topology $L_{i1} \to L_{o1}$ drives slowly or sometimes drives and sometimes stops, the ego vehicle may select the lane topology $L_{i1} \to L_{o2}$ in real time to continue driving, to improve comfort and passing efficiency.

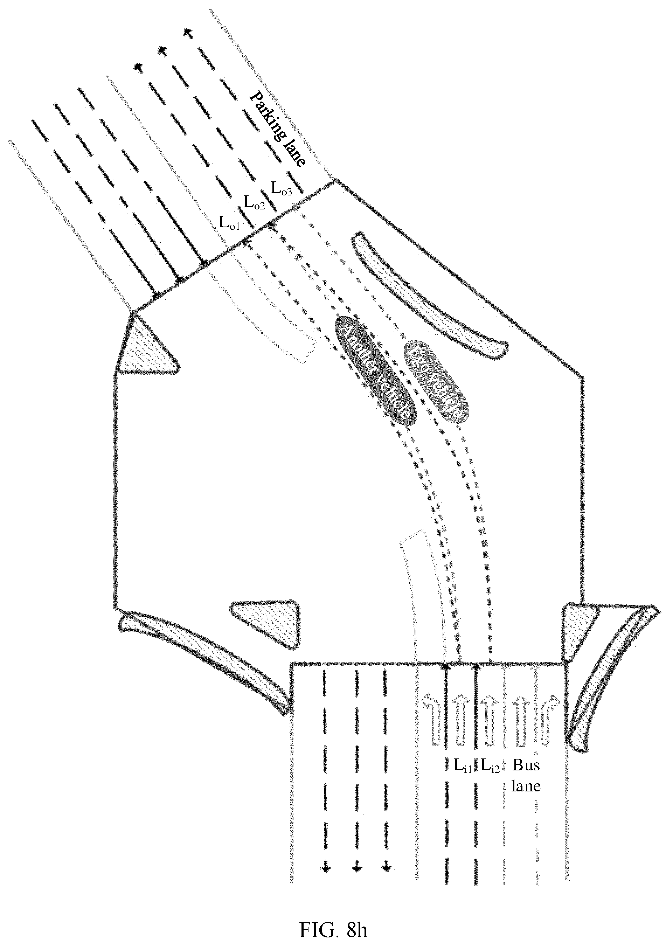

As shown in FIG. 8h, if another vehicle in the lane topology $L_{i2} \to L_{o2}$ drives along the lane topology $L_{i1} \to L_{o2}$, preempts a lane with the ego vehicle, or generates lateral extrusion, the ego vehicle may select the lane topology $L_{i2} \to L_{o3}$ in real time, to reduce a risk of a conflict with the another vehicle, and improve safety and passing efficiency.

In this embodiment, traffic rule passing features of special lanes such as the bus lane, the parking lane, the left-turn waiting lane, and the right-turn lane are considered. Based on this, lane-level fully-connected topology space is generated. The lane-level fully-connected topology space includes all possible lane topologies in this scenario, and excludes an unreasonable lane topology that violates the traffic rules. This lays a foundation for constructing complete and reasonable road topology space.

In this solution, not only a high-definition map is considered in the hard boundary constraint of each lane topology, but also a real-time physical world change sensed by a sensor is considered, so that this method can be used for both offline map generation and lane topology track online generation. During soft boundary constraint generation and virtual boundary constraint generation, gradually weakening interference of soft and hard boundaries such as a turn waiting area on co-directional lanes such as the nearest neighbor vehicle flow track $L_{i1} \to L_{o1}$ or $L_{i2} \to L_{o3}$ and the secondary neighbor vehicle flow track $L_{i2} \to L_{o2}$, $L_{i1} \to L_{o1}$, or $L_{i1} \to L_{o2}$ is considered. This ensures passing space and safety between different lane topology tracks, and better complies with human drivers' habits and actual road traffic rules.

During generation of human-like tracks of the lane topologies $L_{i1} \to L_{o1}$ and $L_{i2} \to L_{o2}$, not only curvatures and curvature change rates of the tracks are considered, but also factors such as passing space and passing efficiency between the lane tracks are considered. In this way, when an optimal track is selected from a plurality of alternative tracks generated through sampling, it is ensured that a distance between a track of the curved outer lane topology $L_{i2} \to L_{o2}$ at an obtuse-angle intersection in the turn waiting area and a track of the inner lane topology $L_{i1} \to L_{o1}$ is far enough while a curvature of the curved outer lane topology $L_{i2} \to L_{o2}$ is reduced as much as possible, to avoid a problem that an excessively straightened track causes an excessively narrow spacing between virtual lane tracks. This ensures safety and smoothness of the lane topology tracks.

In addition, alignment degrees of the driving-in and driving-out lanes and sideway topology supplement are considered, so that a road topology analysis result is highly human-like. For a many-to-many case in FIG. 8d with large projection overlapping areas, the lane topology track set $\{L_{i1} \to L_{o1}, L_{i1} \to L_{o2}, L_{i2} \to L_{o2}, L_{i2} \to L_{o3}\}$ is retained. For a many-to-many case in FIG. 8e with small overlapping areas, an invalid lane topology is screened out, and a sideway topology is added to perform topology supplement, to obtain the lane topology track set $\{L_{i1} \to L_{o1}, L_{i1} \to L_{o2}, L_{i2} \to L_{o3}\}$, improve richness of the lane topology track set, and ensure completeness and reasonableness of road topology analysis. This fundamentally ensures freedom and flexibility of real-time lane decision-making of a vehicle in a dense vehicle flow scenario, and accuracy of predicting an intent and a track of another vehicle.

In this embodiment, global navigation information, lane topologies and intersection, a traffic rule priority, macro traffic flow information, and the like are further introduced into navigation recommendation evaluation of the lane topology tracks in the lane topology track set $\{L_{i1} \to L_{o1}, L_{i1} \to L_{o2}, L_{i2} \to L_{o2}, L_{i2} \to L_{o3}\}$. In addition, a dynamic traffic environment and a static traffic environment can be further combined in real-time navigation, to assist a vehicle in selecting an optimal target path in real time. In this way, a global view is provided, to avoid in advance a lane topology with a high risk of vehicle flow conflicts such as diagonal crossing of lanes, lateral extrusion of another vehicle, and multi-lane combination, reduce complex interaction with other vehicles, and effectively improve passing efficiency and comfort in cases of vehicle intersection and dense vehicle flows.

Compared with the prior art, this solution considers traffic rule passing features of special lanes such as the bus lane, the parking lane, the left-turn waiting lane, and the right-turn lane during lane-level fully-connected topology space generation. The lane-level fully-connected topology space includes all possible lane topologies in this scenario, and excludes an unreasonable lane topology that violates the traffic rules. This lays a foundation for constructing complete and reasonable road topology space.

Compared with the prior art, this method considers a physical world real change sensed by a sensor in real time in boundary constraint generation of the lane topology, so that the method can be used for lane topology track online generation; considers gradually weakening interference and an indirect constraint of the soft and hard boundaries and the traffic tracks on co-directional lanes, to ensure passing space and safety between different lane topology tracks, and better comply with human drivers' habits and actual road traffic rules; and considers curve straightness (passing efficiency) and passing space between neighbor lanes during virtual lane track generation, to ensure smoothness and human-like characteristics of the virtual lane track, and reduce a traffic conflict with another lane.

Compared with the prior art, this solution deletes an unreasonable lane topology and constructs complete and reasonable road topology space based on the lane-level fully-connected topologies through human-like projection overlapping screening and sideway topology supplement, to ensure completeness and reasonableness of road topology analysis in a scenario in which there are a plurality of reasonable driving tracks, and effectively improve freedom and flexibility of real-time lane decision-making of a vehicle in a dense vehicle flow scenario.

Compared with the prior art, this solution considers global navigation information, lane topologies and intersection, a traffic rule priority, macro traffic flow information, and the like during navigation recommendation evaluation of the lane topology tracks, so that the vehicle is provided with a global view and can avoid a high-risk lane in advance by combining a dynamic traffic environment and a static traffic environment, to reduce interaction with other vehicles, and effectively improve comfort and passing efficiency in cases of vehicle intersection and dense vehicle flows.

**Embodiment 2**

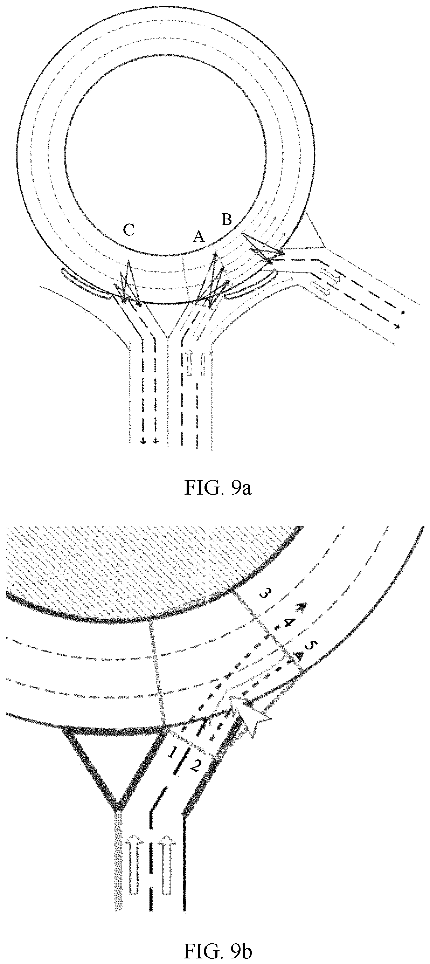

As shown in FIG. 9a, a scenario in this embodiment is a roundabout scenario. A vehicle needs to enter a roundabout through a road below and leave the roundabout through a first exit on the lower right or a second exit below. The road for entering the roundabout may include one or more driving-in lanes, and a road for cruising along the roundabout may also have one or more lanes along the roundabout. According to a specific driving task, the vehicle may leave the roundabout after passing through several roundabout intersections, or may leave the roundabout at a next roundabout intersection.

As shown in FIG. 9a, the vehicle enters the roundabout at an intersection A, and drives away from the roundabout at an intersection B or C. First, lane-level fully-connected topologies of a roundabout driving-in intersection and a roundabout driving-out intersection is established. A roundabout task A->B and a roundabout task A->C are used as examples. Topologies for the roundabout driving-in intersection and the roundabout driving-out intersection are shown in FIG. 9a.

As shown in FIG. 9b, lane topologies 1-4 and 2-5 of the roundabout driving-in intersection are used as examples to describe generated boundary constraints.

(1) Hard boundary constraints include a road boundary, a road edge, a green belt, an un-crossable lane line, and the like, as shown by thick lines and roundabout route boundaries in FIG. 9b.

(2) Soft boundary constraints are crossable lane lines, for example, dashed-line lane boundaries.

(3) Virtual boundary constraints are shape constraints obtained after the soft boundary constraints and the hard boundary constraints are offset, for example, a curve pointed to by an arrow in FIG. 9b.

In this embodiment, the lane topology 2-5 may collide with a right hard boundary constraint. Therefore, the hard boundary affects a vehicle flow track of the lane topology 2-5. Indirectly, the hard boundary affects a vehicle flow track of the secondary neighbor lane topology 1-4. Therefore, the hard constraint is moved to a corresponding location (the curve pointed to by the arrow in FIG. 9b) according to an offset principle, to obtain a virtual boundary constraint of the lane topology 1-4.

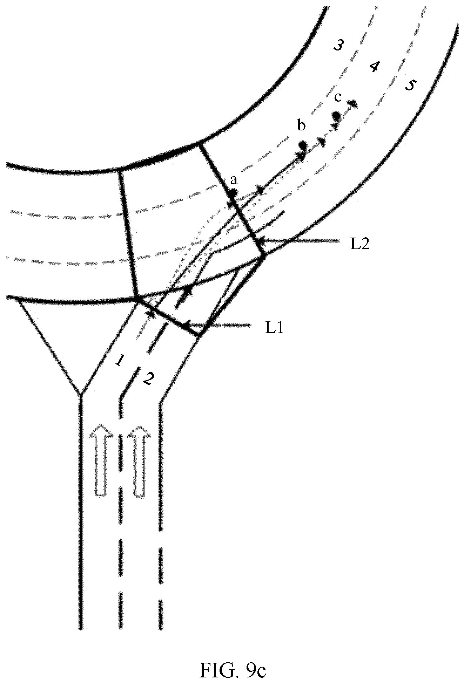

During lane curve generation in this embodiment, for the roundabout driving-in intersection, as shown in FIG. 9c, an end for entering the roundabout is a real intersection (a boundary L1), and an end (a boundary L2) for cruising the roundabout is a virtual intersection boundary. Therefore, a boundary line of the roundabout intersection is at a virtual intersection boundary in the roundabout, and start and end pose sampling points generated by the lane topology curve may extend to an outer side of a virtual intersection, for example, a point a, a point b, and a point c in FIG. 9c. In this way, a reasonable and flat human-like lane topology curve is generated without being excessively constrained by a virtual intersection boundary in a high-definition map. A method for generating a lane curve is similar to that in Embodiment 1. Details are not described herein again. Virtual lane curves generated by the lane topology 1-4 are shown by dashed-line curves in FIG. 9c, and an optimal track obtained through comprehensive evaluation is shown by a solid-line curve.

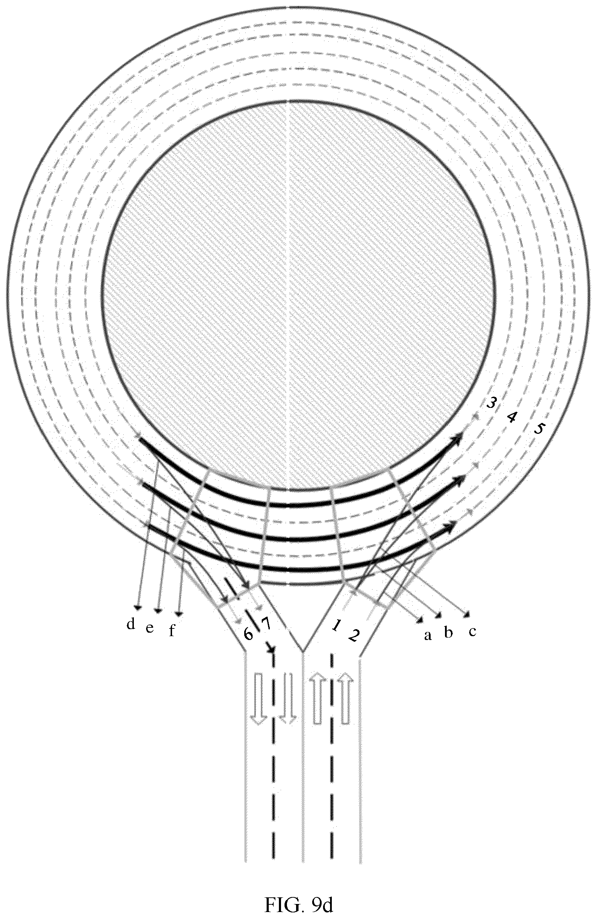

After principles such as a topology projection screening principle, a kinematic screening principle, traffic rule screening, collision detection screening, and vehicle flow interference screening are performed, three driving-in intersection lane topologies a, b, and c shown in FIG. 9d are retained, and three alternative lane topologies 1-5, 2-3, and 2-4 are screened out. Similarly, three driving-out intersection lane topologies d, e, and f shown in FIG. 9d are retained, and three alternative lane topologies 3-6, 4-6, and 5-7 are screened out.

In the roundabout scenario in this embodiment, costs that have great impact in a navigation recommendation evaluation function include the following.

(1) Navigation cost: When a roundabout bypass path percentage is high (leaving the roundabout from a second driving-out roundabout intersection), the roundabout bypass path percentage is high, a first driving-out roundabout intersection may be processed as an intersection for common bypass. Because a total track length of an inner lane is the shortest, navigation costs of lanes 3, 4, and 5 in the roundabout are as follows: Navigation cost of the lane 5 > navigation cost of the lane 4 > navigation cost of the lane 3. Alternatively, when a roundabout bypass path percentage is low (leaving the roundabout at a next intersection), navigation costs are as follows: Navigation cost of the lane 5 = navigation cost of the lane 4 = navigation cost of the lane 3.

(2) Topology cost: Topology cost of c > topology cost of b > topology cost of a; and topology cost of d > topology cost of e > topology cost of f.

(3) Smoothness cost: Smoothness cost of the curve c ≈ smoothness cost of the curve b ≈ smoothness cost of the curve a; and smoothness cost of the curve d ≈ smoothness cost of the curve e ≈ smoothness cost of the curve f.

(4) Vehicle flow intersection cost: When the roundabout bypass path percentage is high (leaving the roundabout at the second driving-out roundabout intersection), vehicle flow intersection costs of the lanes 3, 4, and 5 in the roundabout are as follows: Vehicle flow intersection cost of the lane 5 >> vehicle flow intersection cost of the lane 4 >> vehicle flow intersection cost of the lane 3.

Alternatively, when the roundabout bypass path percentage is low (driving away from the roundabout at the next intersection), vehicle flow intersection costs are as follows: Vehicle flow intersection cost of the lane 5 = vehicle flow intersection cost of the lane 4 = vehicle flow intersection cost of the lane 3.

(5) Traffic rule cost: Traffic rule cost of c > traffic rule cost of b > traffic rule cost of a; and traffic rule cost of d > traffic rule cost of e > traffic rule cost of f.

(6) Passing efficiency cost: Passing efficiency cost of a > passing efficiency cost of b > passing efficiency cost of c; passing efficiency cost of 5 > passing efficiency cost of 4 > passing efficiency cost of 3; and passing efficiency cost of f > passing efficiency cost of e > passing efficiency cost of d.

Based on the foregoing costs, because it is considered that the lane 4 is better than the lane 5, an optimal path 2-a-5-4-5-f-6 may be implemented by changing a lane. Similarly, because it is considered that the lane 4 is better than the lane 3, an optimal path 1-b-4-5-f-6 may be implemented by changing a lane.

Based on the foregoing considerations, the optimal paths obtained through navigation recommendation evaluation in this embodiment are 1-b-4-5-f-6 and 2-a-5-4-5-f-6.

In this embodiment, start and end pose sampling points of a track on a virtual intersection side are reasonably extended outwardly for the driving-in roundabout intersection and the driving-out roundabout intersection, to improve quality of a generated track, improve human-like characteristics of the track, and avoid an unreasonable track caused by high-definition map drawing. In addition, this avoids incorrect screening-out during topology screening due to unreasonable track generation, and ensures completeness of road topology analysis.

In this embodiment, when lane topology tracks at the driving-in roundabout intersection and the driving-out roundabout intersection are generated, indirect constraint effect of a virtual boundary in a case of a plurality of parallel lane topologies is considered, to improve human-like characteristics and passability of the generated tracks, avoid interference with a neighbor lane topology, and improve safety of the driving-in roundabout intersection and the driving-out roundabout intersection.

In addition, it is considered that, when the roundabout bypass path percentage is high, crossing the roundabout intersection in a bypass process is processed as a common roundabout bypass, to reduce complexity of processing the roundabout scenario. Based on complete lane topology space and consideration of the vehicle flow intersection cost and the passing efficiency cost, the vehicle is recommended to enter an inner circle lane of the roundabout when the bypass percentage is high, to greatly improve passing efficiency, avoid lane change in a curve area in which vehicle flows intersect and that is at the roundabout intersection, and improve passing safety and a human-like degree.

In this embodiment, a plurality of reasonable lane topologies are retained to construct complete lane topology space, to ensure that passing efficiency, safety, and comfort can all be effectively improved in various traffic environments. When vehicle flows are dense in the roundabout, the vehicle enters an outermost circle of the roundabout as soon as possible to drive along the roundabout. When an excessive quantity of vehicles intersect in an outer circle of the roundabout, the vehicle directly enters a middle lane and drives along the roundabout, to avoid long-time waiting caused by traffic congestion and improve passing efficiency. When vehicle flows in the roundabout are smooth, the vehicle directly enters an innermost lane and drives along the roundabout, to effectively reduce vehicle flow intersection at the driving-in roundabout intersection and the driving-out roundabout intersection, and reduce a risk of the ego vehicle, so that a driving distance is short and passing efficiency is high.

**Embodiment 3**

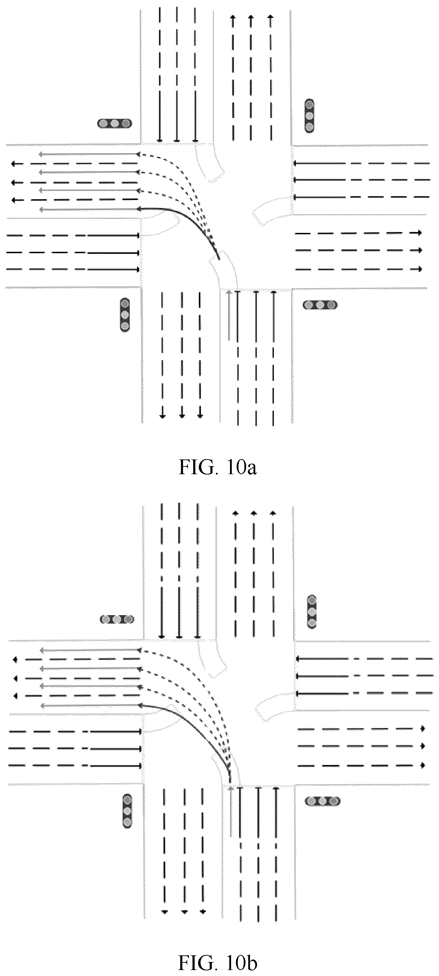

FIG. 10a and FIG. 10b show a left-turn intersection scenario with a turn waiting area and a traffic light according to an embodiment of this application. Based on a turn waiting area, a stop line position, and consideration of traffic rules (a traffic light status and information about a stop line in the turn waiting area) and another boundary constraint, the following is generated: (1) When a left-turn light is red, a lane-level fully-connected lane topology curve at the stop line of the turn waiting area is shown by intersection dashed lines in FIG. 10a; or (2) when a left-turn light is green, a lane-level fully-connected lane topology track at the stop line of the intersection is shown by intersection dashed lines in FIG. 10b. For a specific generation method, refer to the foregoing embodiment. Details are not described herein again.

Optimal lane topology curves recommended by navigation are obtained based on topology screening and a navigation recommendation evaluation, and are shown by solid-line curves in FIG. 10a and FIG. 10b.

When a vehicle drives to the left-turn intersection with the turn waiting area shown in the figure, if a sensor senses in real time that the current left-turn light is red and a through light is green, the vehicle enters the turn waiting area to wait for the left-turn light to turn green. Therefore, the recommended optimal lane topology curve is shown by the solid-line curve in FIG. 10a. Alternatively, if a sensor senses in real time that the current left-turn light is green, a curvature and a passing efficiency cost of the optimal lane topology that is recommended by navigation in FIG. 10a are excessively high. Therefore, an innermost inscribed lane curve regardless of the turn waiting area is recommended to be optimal, as shown by the solid-line curve in FIG. 10b.

In this embodiment, for the left-turn intersection with the turn waiting area and the traffic light, different lane-level fully-connected topology curves are separately generated based on different locations of the ego vehicle at different traffic time periods (red light and green light), to ensure completeness of road topology analysis. In this way, an optimal lane topology curve that best meets a current moment can be recommended in any traffic light state, a case in which the lane topology curve is excessively rigid and cannot adapt to a real-time traffic status change is avoided, and human-like characteristics of a track are improved.

## Embodiment 4

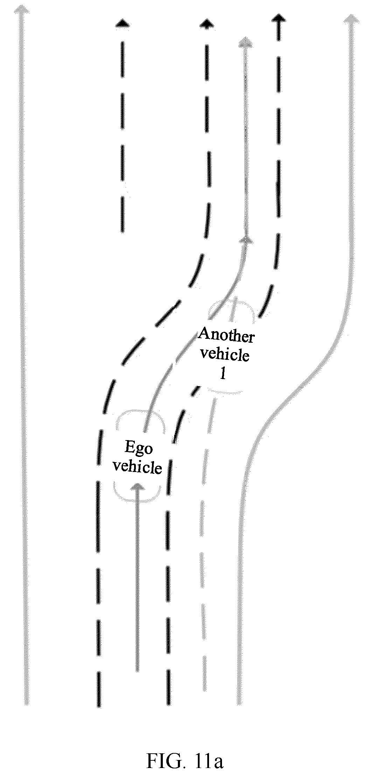

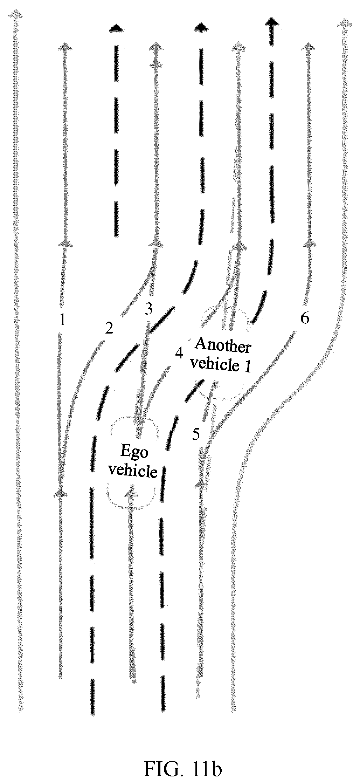

FIG. 11a and FIG. 11b show a small S-bend scenario according to an embodiment of this application. In this scenario, a human driver usually drives across lane lines to pursue a straighter driving path. If an autonomous driving vehicle can only drive along a lane topology curve determined by the lane lines, when the human driver drives across the lane lines, an emergency avoidance behavior is triggered. In this case, comfort is reduced, experience is poor, and even there is a collision risk, as shown in FIG. 11a.

In this scenario, six virtual lane topology curves shown in FIG. 11b may be generated by using the method in the foregoing embodiment, to obtain complete road topology analysis. In a real-time navigation process, the autonomous driving vehicle may select a virtual lane topology curve 3 based on a behavior of an another vehicle 1, to drive across lane lines and pass through the small S-bend scenario, avoid a possibility of collision with the another vehicle 1, and improve safety of the ego vehicle. However, when there is no impact of another vehicle, because a total navigation recommendation evaluation cost of a virtual lane topology curve that crosses lane lines is higher, a virtual lane topology curve that does not cross lane lines is first recommended for the ego vehicle, as shown by lane topology curves 1, 2, 4, and 6 in FIG. 11b.

## Embodiment 5

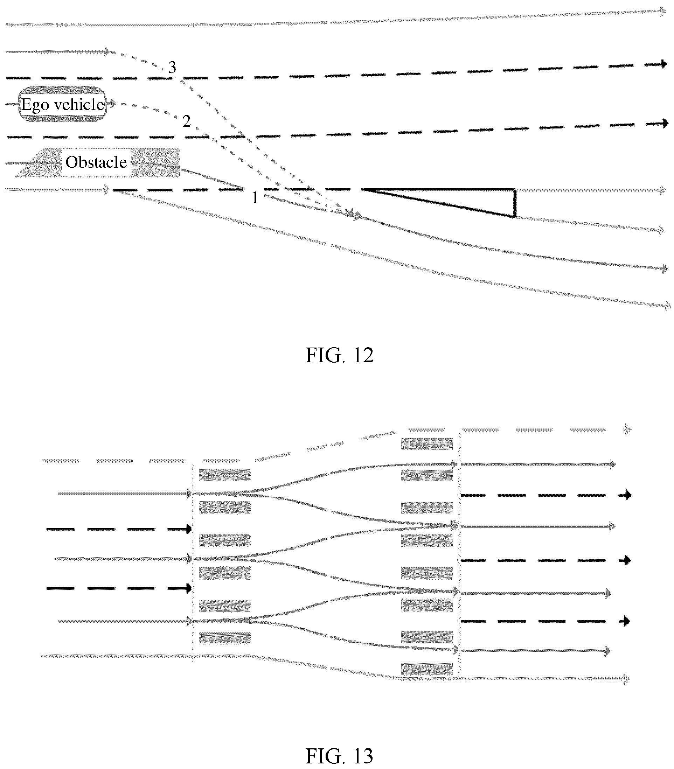

FIG. 12 shows an urban elevated road transition section-ramp scenario according to an embodiment of this application. Currently, generally, a ramp entering manner provided by a high-definition map includes only a lane topology curve 1 shown in FIG. 12. However, in an actual driving process, if the ego vehicle encounters a case in which traffic is congested or there is an obstacle on a right lane, the ego vehicle may be limited to a second right lane by a right vehicle (or the obstacle), cannot change to a rightmost lane for a long time, and consequently, miss an opportunity for entering the ramp.

In this scenario, three lane topology curves 1, 2, and 3 shown in FIG. 12 may be generated by using the method in the foregoing embodiment, to obtain complete road topology analysis. When traffic is congested or there is an obstacle, although the ego vehicle is limited to the second right lane by the right vehicle (or the obstacle), the ego vehicle may select the virtual lane topology curve 2 to enter the ramp. When traffic is smooth or there is no obstacle, because a navigation recommendation evaluation of the virtual lane topology curve 1 is optimal, and the navigation recommendation evaluation of the virtual lane topology curve 1 is followed by that of the virtual lane topology curve 2 and that of the virtual lane topology curve 3 in sequence, the ego vehicle first enters the rightmost lane through lane change, and then selects the virtual lane topology curve 1 to enter the ramp. This better complies with a human driving habit.

## Embodiment 6

FIG. 13 shows a scenario of a multi-lane road segment without a lane marking line according to an embodiment of this application. On an urban road, a multi-lane road segment without a marking line usually appears in traffic scenarios such as a lane quantity change and a sidewalk at a non-intersection. Because there is no road intersecting with the multi-lane road segment without a marking line, the scenario of the multi-lane road segment without a marking line is not a conventional intersection. However, this scenario is also applicable to the intersection scenario described in this solution.

For the scenario of this embodiment, a reasonable and complete virtual lane topology curve set may be generated by using the method described in the foregoing embodiment, and a reasonable navigation recommendation evaluation may be provided, as shown by lane topology curves (solid-line curves in the figure) in FIG. 13.

## Embodiment 7

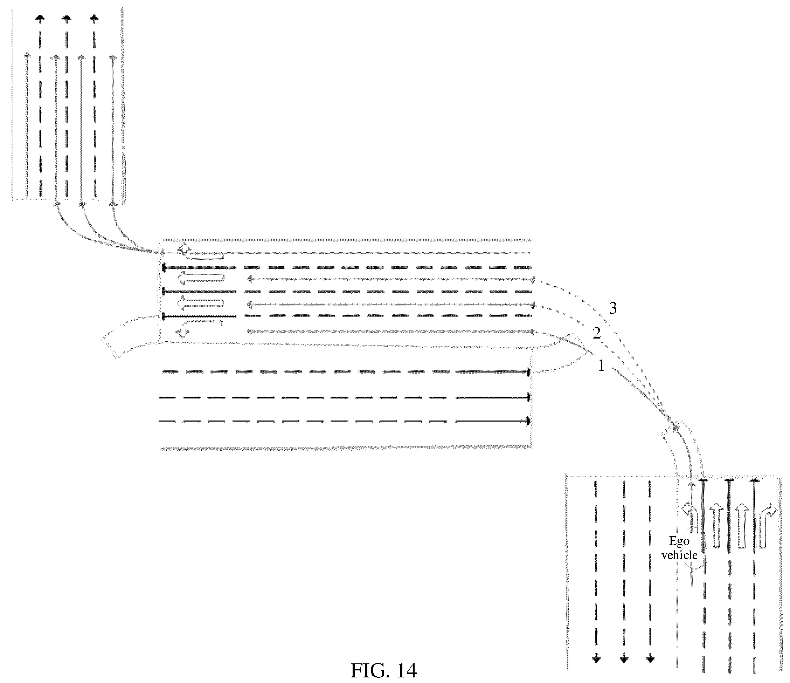

FIG. 14 shows a continuous turning scenario according to an embodiment of this application. In this scenario, a driving task of turning right immediately after turning left needs to be completed. Generally, a high-definition map provides, at a left-turn intersection, only a virtual lane topology curve 1 of a first left lane of a driving-in road to a first left lane of a driving-out road. However, after a left turn and before a right turn, a vehicle faces a task of three consecutive lane changes at a short distance. It is difficult to complete this task in an actual scenario.

For the scenario of this embodiment, in this solution, a reasonable and complete virtual lane topology curve set may be generated by using the method described in the foregoing embodiment, and navigation recommendation evaluation is performed to obtain virtual lane topology curves 1, 2, and 3. Therefore, the vehicle may select the virtual lane topology curve 3 to turn left to pass through a first intersection, and then turn right to pass through a second intersection by performing lane change only once. This ensures a degree of freedom of lane selection, and greatly improves a success rate and passing efficiency in an extreme traffic scenario.

**Embodiment 8**

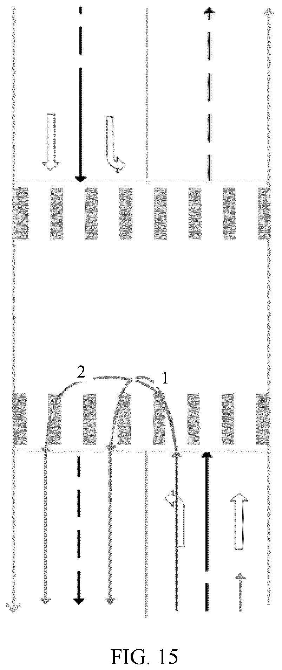

FIG. 15 shows a narrow-lane U-turn scenario according to an embodiment of this application. In the scenario of this embodiment, complete lane-level fully-connected topologies may be generated by using the method described in the foregoing embodiment, to obtain virtual lane topology curves 1 and 2. Based on topology reasonableness screening, the virtual lane topology curve 1 (a U-turn curve with a small radius) cannot meet a kinematic screening principle. Therefore, the virtual lane topology curve 1 is deleted, and only the virtual lane topology curve 2 is retained. If neither the virtual lane topology curve 1 nor the virtual lane topology curve 2 meets the kinematic screening principle, a lane topology curve with a larger curvature radius is retained, to ensure connectivity of lane topologies, construct a complete and reasonable lane topology curve set, and ensure human-like characteristics of lane topology tracks.

Implementations of different scenarios are described in the foregoing embodiments. Certainly, this solution may be further used in another scenario. This is not specifically limited in this solution.

Based on the foregoing embodiments, this solution further provides an intersection-based map generation method. The method includes: generating M lane topology curves based on an obstacle and lane lines at an intersection, an obstacle and lane lines on a driving-in road at the intersection, and an obstacle and lane lines on a driving-out road at the intersection, where the lane topology curve is a curve that uses an end of a driving-in lane of the driving-in road and a start point of a driving-out lane of the driving-out road as endpoints; performing reasonableness detection on the M lane topology curves to obtain K' lane topology curves, where K' is not greater than M; and generating a map of the intersection based on the K' lane topology curves at the intersection.

For specific implementation of the method, refer to related descriptions in the foregoing embodiment. Details are not described herein again.

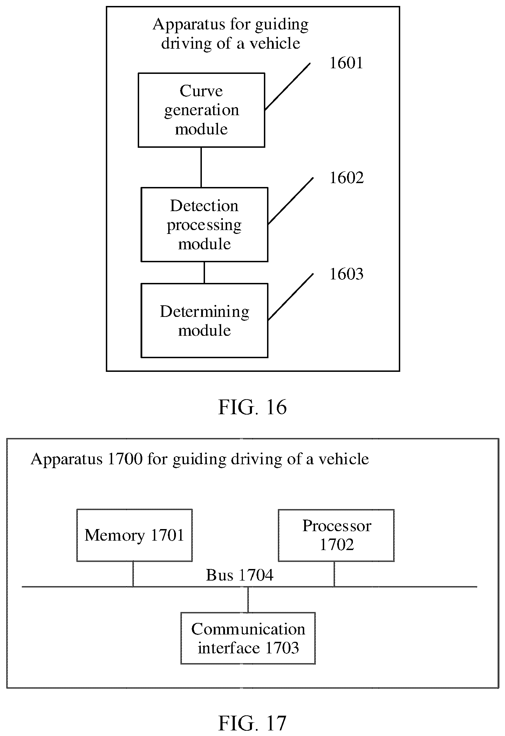

FIG. 16 is a schematic diagram of an apparatus for guiding driving of a vehicle according to an embodiment of this application. As shown in FIG. 16, the apparatus for guiding driving of a vehicle includes a curve generation module 1601, a detection processing module 1602, and a determining module 1603.

The curve generation module 1601 is configured to generate M lane topology curves based on an obstacle and lane lines at an intersection, an obstacle and lane lines on a driving-in road at the intersection, and an obstacle and lane lines on a driving-out road at the intersection, where the lane topology curve is a curve that uses an end of a driving-in lane of the driving-in road and a start point of a driving-out lane of the driving-out road as endpoints.

The detection processing module 1602 is configured to perform reasonableness detection on the M lane topology curves to obtain K' lane topology curves, where K' is not greater than M.

The determining module 1603 is configured to determine a target path from the K' lane topology curves when the vehicle is located on the driving-in road.

The curve generation module 1601 is configured to:

obtain a lane topology curve hard boundary constraint based on the obstacle and un-crossable lane lines at the intersection, the obstacle and un-crossable lane lines on the driving-in road at the intersection, and the obstacle and un-crossable lane lines on the driving-out road at the intersection;
obtain a lane topology curve soft boundary constraint based on crossable lane lines at the intersection, crossable lane lines on the driving-in road at the intersection, and crossable lane lines on the driving-out road at the intersection;
obtain K lane topology curve virtual boundary constraints based on the lane topology curve hard boundary constraint and the lane topology curve soft boundary constraint; and
generate the M lane topology curves based on the lane topology curve hard boundary constraint, the lane topology curve soft boundary constraint, and the K lane topology curve virtual boundary constraints.

Optionally, the K lane topology curve virtual boundary constraints correspond to K lane topologies, and any lane topology curve virtual boundary constraint A in the K lane topology curve virtual boundary constraints is obtained through offsetting a hard boundary constraint and/or a soft boundary constraint on a left side of a leftmost lane topology of the intersection rightwards by a first preset distance and offsetting a hard boundary constraint and/or a soft boundary constraint on a right side of a rightmost lane topology of the intersection leftwards by a first preset distance. The first preset distance is determined based on a lane sequence of a lane topology A', or the first preset distance is determined based on a lane sequence of a lane topology A' and at least one of a preset passing width of the vehicle and a lane width. The lane topology curve virtual boundary constraint A corresponds to the lane topology A', and the K lane topologies include the leftmost lane topology and the rightmost lane topology of the intersection.

Further, the curve generation module 1601 is further configured to:

separately perform angle sampling on an end of each driving-in lane of the driving-in road to obtain at least one start point pose vector of the driving-in road, and separately performing angle sampling on a start point of each driving-out lane of the driving-out road to obtain at least one end point pose vector of the driving-out road;

perform curve sampling on the at least one start point pose vector and the at least one end point pose vector, to obtain a plurality of curves between the driving-in road and the driving-out road; and

screen the plurality of curves based on the lane topology curve hard boundary constraint, the lane topology curve soft boundary constraint, and the K lane topology curve virtual boundary constraints, to obtain the M lane topology curves.

The curve generation module 1601 is further configured to:

generate a plurality of control points between the end of each driving-in lane of the driving-in road and the start point of each driving-out lane of the driving-out road; and

generate the plurality of smooth curves based on the at least one start point pose vector, the at least one end point pose vector, and the plurality of control points.

Optionally, the at least one start point pose vector of the driving-in road is obtained by extending the end of each driving-in lane by a second preset distance and performing sampling.

The detection processing module 1602 is configured to:

obtain a projection line between the driving-in road and the driving-out road based on a direction vector of the driving-in road and a direction vector of the driving-out road, where the projection line is a straight line on which a bisector of an included angle obtained by intersecting the direction vector of the driving-in road and the direction vector of the driving-out road is located, or the projection line is a straight line that is perpendicular to the direction vector of the driving-out road and that passes through the start point of the driving-out road;

calculate an alignment coefficient between each driving-in lane of the driving-in road and each driving-out lane of the driving-out road, where the alignment coefficient between each driving-in lane and each driving-out lane is a ratio of a first parameter to a second parameter, the first parameter is an overlapping length between two line segments obtained by separately extending a lane sideline of each driving-in lane and a lane sideline of each driving-out lane to the projection line, and the second parameter is a length of a shorter line segment in the two line segments obtained by separately extending the lane sideline of each driving-in lane and the lane sideline of each driving-out lane to the projection line; and

obtain the K' lane topology curves based on the alignment coefficient between each driving-in lane of the driving-in road and each driving-out lane of the driving-out road, where the K' lane topology curves include a curve that uses an end of a driving-in lane and a start point of a driving-out lane as endpoints, and an alignment coefficient between the driving-in lane and the driving-out lane is greater than a first preset threshold.

The K' lane topology curves include a curve that respectively uses an end of a leftmost driving-in lane of the driving-in road and a start point of a leftmost driving-out lane of the driving-out road as endpoints, and further include a curve that respectively uses an end of a rightmost driving-in lane of the driving-in road and a start point of a rightmost driving-out lane of the driving-out road as endpoints.

Further, the K' lane topology curves include a lane topology curve that uses an end of a driving-in lane X of the driving-in road and a start point of a left lane of a driving-out lane Y of the driving-out road as endpoints, and a lane topology curve that uses the end of the driving-in lane X and a start point of a right lane of the driving-out lane Y as endpoints, and further include a lane topology curve that uses the end of the driving-in lane X and a start point of the driving-out lane Y as endpoints, where there is a lane on each of a left side and a right side of the driving-out lane Y.

Alternatively, the K' lane topology curves include a lane topology curve that uses an end of a driving-in lane X of the driving-in road and a start point of a left lane or a right lane of a driving-out lane Y of the driving-out road as endpoints, and further include a lane topology curve that uses the end of the driving-in lane X of the driving-in road and a start point of the driving-out lane Y as endpoints, where there is a lane only on a left side or a right side of the driving-out lane Y of the driving-out road.

Optionally, a maximum curvature of each of the K' lane topology curves is not greater than a second preset threshold, a distance between each lane topology curve and each of the lane topology curve soft boundary constraint and the lane topology curve hard boundary constraint is not less than a third preset distance, and a distance between any two lane topology curves is not less than a fourth preset distance.

The apparatus further includes an evaluation module, configured to:

calculate an evaluation value of each of the K' lane topology curves, where the evaluation value is related to at least one of a curvature of the lane topology curve, a curvature change rate, a quantity of diagonal crossing lanes, and lane intersection information, traffic rule information, a vehicle traffic estimation value, and a drivable distance that are of a lane corresponding to the lane topology curve.

The determining module 1603 is configured to:

when the vehicle is located on the driving-in road, determine the target path based on the evaluation value of each of the K' lane topology curves.

The intersection includes at least one of a crossroad, a roundabout, an intersection of a turn waiting area, a small S-bend, an elevated road entrance/exit, a multi-lane road segment without a lane marking line, a continuous turning intersection, and a narrow-lane U-turn intersection.

In this embodiment, the apparatus for guiding driving of a vehicle is presented in a form of module. The "module" herein may be an application-specific integrated circuit (application-specific integrated circuit, ASIC), a processor for executing one or more software or firmware programs, a memory, an integrated logic circuit, and/or another component that may provide the foregoing functions.

In addition, the curve generation module 1601, the detection processing module 1602, and the determining module 1603 may be implemented by using a processor 1702 of the apparatus for guiding driving of a vehicle shown in FIG. 17.

According to another aspect, this solution further provides an intersection-based map generation apparatus. The apparatus includes a curve generation module, a detection processing module, and a map generation module. The curve generation module is configured to generate M lane topology curves based on an obstacle and lane lines at an intersection, an obstacle and lane lines on a driving-in road at the intersection, and an obstacle and lane lines on a driving-out road at the intersection, where the lane topology curve is a curve that uses an end of a driving-in lane of the driving-in road and a start point of a driving-out lane of the driving-out road as endpoints. The detection processing module is configured to perform reasonableness detection on the M lane topology curves to obtain K' lane topology curves, where K' is not greater than M. The map generation module is configured to generate a map of the intersection based on the K' lane topology curves at the intersection.

The apparatus may further include the foregoing modules. This is not specifically limited in this solution.

FIG. 17 is a schematic diagram of a hardware structure of an apparatus for guiding driving of a vehicle according to an embodiment of this application. An apparatus 1700 (the apparatus 1700 may specifically be a computer device) for guiding driving of a vehicle shown in FIG. 17 includes a memory 1701, a processor 1702, a communication interface 1703, and a bus 1704. Communication connections between the memory 1701, the processor 1702, and the communication interface 1703 are implemented through the bus 1704.

The memory 1701 may be a read-only memory (Read-Only Memory, ROM), a static storage device, a dynamic storage device, or a random access memory (Random Access Memory, RAM).

The memory 1701 may store a program. When the program stored in the memory 1701 is executed by the processor 1702, the processor 1702 and the communication interface 1703 are configured to perform the steps of the method for guiding driving of a vehicle in embodiments of this application.

The processor 1702 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to execute a related program, to implement a function that needs to be performed by a unit in the apparatus for guiding driving of a vehicle in this embodiment of this application, or perform the method for guiding driving of a vehicle in the method embodiments of this application.

The processor 1702 may alternatively be an integrated circuit chip and has a signal processing capability. In an implementation process, steps of the method for guiding driving of a vehicle in this application may be completed by using an integrated logic circuit of hardware in the processor 1702, or by using instructions in a form of software. The processor 1702 may alternatively be a general-purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The processor may implement or perform the methods, the steps, and the logical block diagrams disclosed in embodiments of this application. The general-purpose processor may be a microprocessor, or the processor may be any conventional processor or the like. Steps of the methods disclosed with reference to embodiments of this application may be directly performed and completed by using a hardware decoding processor, or may be performed and completed by using a combination of hardware and software modules in a decoding processor. A software module may be located in a mature storage medium in the art, such as a random access memory, a flash memory, a read-only memory, a programmable read-only memory, an electrically erasable programmable memory, or a register. The storage medium is located in the memory 1701. The processor 1702 reads information in the memory 1701, and completes, in combination with hardware of the processor 1702, a function that needs to be performed by a unit included in the apparatus for guiding driving of a vehicle in this embodiment of this application, or performs the method for guiding driving of a vehicle in the method embodiments of this application.

The communication interface 1703 uses a transceiver apparatus, for example, but not limited to, a transceiver, to implement communication between the apparatus 1700 and another device or a communication network. For example, data may be obtained through the communication interface 1703.

The bus 1704 may include a path for transmitting information between various components (for example, the memory 1701, the processor 1702, and the communication interface 1703) of the apparatus 1700.

It should be noted that although the apparatus 1700 shown in FIG. 17 only shows the memory, the processor, and the communication interface, in a specific implementation process, a person skilled in the art should understand that the apparatus 1700 further includes another component that is necessary to implement normal running. In addition, according to a specific requirement, a person skilled in the art should understand that the apparatus 1700 may further include a hardware component for implementing another additional function. In addition, a person skilled in the art should understand that the apparatus 1700 may include only components necessary for implementing embodiments of this application, but not necessarily include all the components shown in FIG. 17.

This application further provides an intelligent driving vehicle, including a traveling system, a sensing system, a control system, and a computer system. The computer system is configured to perform one or more steps in any one of the foregoing methods.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product is run on a computer or a processor, the computer or the processor is enabled to perform one or more steps in any one of the foregoing methods.

It may be clearly understood by a person skilled in the art that, for the purpose of convenient and brief description, for a detailed working process of the foregoing system, apparatus, and unit, refer to a process of a corresponding step in the foregoing method embodiments. Details are not described herein again.

It should be understood that in descriptions of this application, unless otherwise specified, "/" indicates an "or" relationship between associated objects. For example, A/B may indicate A or B, where A or B may be singular or plural. Moreover, in the descriptions of this application, unless otherwise specified, "a plurality of" means two or more than two. "At least one of the following items (pieces)" or a similar expression thereof refers to any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the words such as "example" or "for example" is intended to present a related concept in a specific manner for ease of understanding.

In several embodiments provided in this application, it should be understood that the disclosed system, apparatus and method may be implemented in another manner. For example, division into the units is merely logical function division and may be another division in an actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on an actual requirement to achieve the objectives of the solutions of embodiments.

All or some of the foregoing embodiments may be implemented by using software, hardware, firmware, or any combination thereof. When software is used to implement embodiments, all or some of the embodiments may be implemented in a form of computer program product. The computer program product includes one or more computer instructions. When the computer program instructions are loaded and executed on a computer, all or some of the processes or functions according to embodiments of this application are generated. The computer may be a general-purpose computer, a dedicated computer, a computer network, or another programmable apparatus. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid state disk (solid state disk, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A method for guiding driving of a vehicle, comprising:

    generating (S201) M lane topology curves based on an obstacle and lane lines at an intersection, an obstacle and lane lines on a driving-in road at the intersection, and an obstacle and lane lines on a driving-out road at the intersection, wherein the lane topology curve is a curve that uses an end of a driving-in lane of the driving-in road and a start point of a driving-out lane of the driving-out road as endpoints;
    performing (S202) reasonableness detection on the M lane topology curves to obtain K' lane topology curves, wherein the reasonableness detection comprises calculating an alignment coefficient between each driving-in lane of the driving-in road and each driving-out lane of the driving-out road, and obtaining the K' lane topology curves based on the alignment coefficient, wherein the K' lane topology curves comprise curves for which the alignment coefficient is greater than a first preset threshold, and K' is not greater than M, wherein the performing reasonableness detection on the M lane topology curves to obtain K' lane topology curves comprises:

        obtaining a projection line between the driving-in road and the driving-out road based on a direction vector of the driving-in road and a direction vector of the driving-out road, wherein the projection line is a straight line on which a bisector of an included angle obtained by intersecting the direction vector of the driving-in road and the direction vector of the driving-out road is located, or the projection line is a straight line that is perpendicular to the direction vector of the driving-out road and that passes through the start point of the driving-out road;
        calculating an alignment coefficient between each driving-in lane of the driving-in road and each driving-out lane of the driving-out road, wherein the alignment coefficient between each driving-in lane and each driving-out lane is a ratio of a first parameter to a second parameter, the first parameter is an overlapping length between two line segments obtained by separately extending two lane sidelines of the driving-in lane and two lane sidelines of the driving-out lane to the projection line, and the second parameter is a length of the shorter one of these two line segments obtained by separately extending the lane sidelines of the driving-in lane and the lane sidelines of the driving-out lane to the projection line; and
        obtaining the K' lane topology curves based on the alignment coefficient between each driving-in lane of the driving-in road and each driving-out lane of the driving-out road, wherein the K' lane topology curves comprise a curve that uses an end of a driving-in lane and a start point of a driving-out lane as endpoints, and an alignment coefficient between the driving-in lane and the driving-out lane is greater than a first preset threshold; and
        determining (S203) a target path from the K' lane topology curves when the vehicle is located on the driving-in road.

2. The method according to claim 1, wherein the generating M lane topology curves based on an obstacle and lane lines at an intersection, an obstacle and lane lines on a driving-in road at the intersection, and an obstacle and lane lines on a driving-out road at the intersection comprises:

obtaining a lane topology curve hard boundary constraint based on the obstacle and un-crossable lane lines at the intersection, the obstacle and un-crossable lane lines on the driving-in road at the intersection, and the obstacle and un-crossable lane lines on the driving-out road at the intersection;

obtaining a lane topology curve soft boundary constraint based on crossable lane lines at the intersection, crossable lane lines on the driving-in road at the intersection, and crossable lane lines on the driving-out road at the intersection;

obtaining K lane topology curve virtual boundary constraints based on the lane topology curve hard boundary constraint and the lane topology curve soft boundary constraint; and

generating the M lane topology curves based on the lane topology curve hard boundary constraint, the lane topology curve soft boundary constraint, and the K lane topology curve virtual boundary constraints.

3.  The method according to claim 2, wherein the K lane topology curve virtual boundary constraints are in a one-to-one correspondence with K lane topologies, and any lane topology curve virtual boundary constraint A in the K lane topology curve virtual boundary constraints is obtained through offsetting a hard boundary constraint and/or a soft boundary constraint on a left side of a leftmost lane topology of the intersection rightwards by a first preset distance and offsetting a hard boundary constraint and/or a soft boundary constraint on a right side of a rightmost lane topology of the intersection leftwards by a first preset distance, wherein the first preset distance is determined based on a lane sequence of a lane topology A', or the first preset distance is determined based on a lane sequence of a lane topology A' and at least one of a preset passing width of the vehicle and a lane width, the lane topology curve virtual boundary constraint A corresponds to the lane topology A', and the K lane topologies comprise the leftmost lane topology and the rightmost lane topology of the intersection.

4.  The method according to claim 2 or 3, wherein the generating the M lane topology curves based on the lane topology curve hard boundary constraint, the lane topology curve soft boundary constraint, and the K lane topology curve virtual boundary constraints comprises:

separately performing angle sampling on an end of each driving-in lane of the driving-in road to obtain at least one start point pose vector of the driving-in road, and separately performing angle sampling on a start point of each driving-out lane of the driving-out road to obtain at least one end point pose vector of the driving-out road;

performing curve sampling on the at least one start point pose vector and the at least one end point pose vector, to obtain a plurality of curves between the driving-in road and the driving-out road; and

performing screening on the plurality of curves based on the lane topology curve hard boundary constraint, the lane topology curve soft boundary constraint, and the K lane topology curve virtual boundary constraints, to obtain the M lane topology curves.

5.  The method according to claim 4, wherein the performing curve sampling on the at least one start point pose vector and the at least one end point pose vector, to obtain a plurality of curves between the driving-in road and the driving-out road comprises:

generating a plurality of control points between the end of each driving-in lane of the driving-in road and the start point of each driving-out lane of the driving-out road; and

generating the plurality of smooth curves based on the at least one start point pose vector, the at least one end point pose vector, and the plurality of control points.

6.  The method according to claim 4 or 5, wherein the at least one start point pose vector of the driving-in road is obtained by extending the end of each driving-in lane by a second preset distance and performing sampling.

7.  The method according to any one of claims 1 to 6, wherein the K' lane topology curves comprise a curve that respectively uses an end of a leftmost driving-in lane of the driving-in road and a start point of a leftmost driving-out lane of the driving-out road as endpoints, and further comprise a curve that respectively uses an end of a rightmost driving-in lane of the driving-in road and a start point of a rightmost driving-out lane of the driving-out road as endpoints.

8.  The method according to any one of claims 1 to 7, wherein the K' lane topology curves comprise a lane topology curve that uses an end of a driving-in lane X of the driving-in road and a start point of a left lane of a driving-out lane Y of the driving-out road as endpoints, and a lane topology curve that uses the end of the driving-in lane X and a start point of a right lane of the driving-out lane Y as endpoints, and further comprise a lane topology curve that uses the end of the driving-in lane X and a start point of the driving-out lane Y as endpoints, wherein there is a lane on each of a left side and a right side of the driving-out lane Y; or

the K' lane topology curves comprise a lane topology curve that uses an end of a driving-in lane X of the driving-in road and a start point of a left lane or a right lane of a driving-out lane Y of the driving-out road as endpoints, and further comprise a lane topology curve that uses the end of the driving-in lane X of the driving-in road and a start point of the driving-out lane Y as endpoints, wherein there is a lane only on a left side or a right side of the driving-out lane Y of the driving-out road.

9. The method according to any one of claims 1 to 8, wherein a maximum curvature of each of the K' lane topology curves is not greater than a second preset threshold, a distance between each lane topology curve and each of the lane topology curve soft boundary constraint and the lane topology curve hard boundary constraint is not less than a third preset distance, and a distance between any two lane topology curves is not less than a fourth preset distance.

10. The method according to any one of claims 1 to 9, wherein the method further comprises:

    calculating an evaluation value of each of the K' lane topology curves, wherein the evaluation value is related to at least one of a curvature of the lane topology curve, a curvature change rate, a quantity of diagonal crossing lanes, and lane intersection information, traffic rule information, a vehicle traffic estimation value, and a drivable distance that are of a lane corresponding to the lane topology curve; and
    the determining a target path from the K' lane topology curves when the vehicle is located on the driving-in road comprises:
    when the vehicle is located on the driving-in road, determining the target path based on the evaluation value of each of the K' lane topology curves.

11. The method according to any one of claims 1 to 10, wherein the intersection comprises at least one of a crossroad, a roundabout, an intersection of a turn waiting area, a small S-bend, an elevated road entrance/exit, a multi-lane road segment without a lane marking line, a continuous turning intersection, and a narrow-lane U-turn intersection.

12. An intersection-based map generation method, comprising:

    generating M lane topology curves based on an obstacle and lane lines at an intersection, an obstacle and lane lines on a driving-in road at the intersection, and an obstacle and lane lines on a driving-out road at the intersection, wherein the lane topology curve is a curve that uses an end of a driving-in lane of the driving-in road and a start point of a driving-out lane of the driving-out road as endpoints;
    performing reasonableness detection on the M lane topology curves to obtain K' lane topology curves, wherein K' is not greater than M, wherein the performing reasonableness detection on the M lane topology curves to obtain K' lane topology curves comprises:

    obtaining a projection line between the driving-in road and the driving-out road based on a direction vector of the driving-in road and a direction vector of the driving-out road, wherein the projection line is a straight line on which a bisector of an included angle obtained by intersecting the direction vector of the driving-in road and the direction vector of the driving-out road is located, or the projection line is a straight line that is perpendicular to the direction vector of the driving-out road and that passes through the start point of the driving-out road;
    calculating an alignment coefficient between each driving-in lane of the driving-in road and each driving-out lane of the driving-out road, wherein the alignment coefficient between each driving-in lane and each driving-out lane is a ratio of a first parameter to a second parameter, the first parameter is an overlapping length between two line segments obtained by separately extending two lane sidelines of the driving-in lane and two lane sidelines of the driving-out lane to the projection line, and the second parameter is a length of the shorter one of these two line segments obtained by separately extending the lane sidelines of the driving-in lane and the lane sidelines of the driving-out lane to the projection line; and
    obtaining the K' lane topology curves based on the alignment coefficient between each driving-in lane of the driving-in road and each driving-out lane of the driving-out road, wherein the K' lane topology curves comprise a curve that uses an end of a driving-in lane and a start point of a driving-out lane as endpoints, and an alignment coefficient between the driving-in lane and the driving-out lane is greater than a first preset threshold; and
    generating a map of the intersection based on the K' lane topology curves at the intersection.

13. A computer-readable storage medium, wherein the computer-readable storage medium stores a computer program, and the computer program is executed by the processor (1702) to implement the method according to any one of claims 1 to 11.

14. An intelligent driving vehicle, comprising a traveling system, a sensing system, a control system, and a computer system, wherein the computer system is configured to perform the method according to any one of claims 1 to 11.

**Patentansprüche**

1. Verfahren zum Führen des Fahrens eines Fahrzeugs, umfassend:

Erzeugen (S201) von M Fahrspur-Topologiekurven basierend auf einem Hindernis und Fahrspurmarkierungen an einer Kreuzung, einem Hindernis und Fahrspurmarkierungen auf einer Einfahrtsstraße an der Kreuzung und einem Hindernis und Fahrspurmarkierungen auf einer Ausfahrtsstraße an der Kreuzung, wobei die Fahrspur-Topologiekurve eine Kurve ist, die ein Ende einer Einfahrtsfahrspur der Einfahrtsstraße und einen Startpunkt einer Ausfahrtsfahrspur der Ausfahrtsstraße als Endpunkte verwendet;
Durchführen (S202) einer Plausibilitätsprüfung an den M Fahrspur-Topologiekurven, um K' Fahrspur-Topologiekurven zu erlangen, wobei die Plausibilitätsprüfung Berechnen eines Ausrichtungskoeffizienten zwischen jeder Einfahrtsfahrspur der Einfahrtsstraße und jeder Ausfahrtsfahrspur der Ausfahrtsstraße und Erlangen der K' Fahrspur-Topologiekurven basierend auf dem Ausrichtungskoeffizienten umfasst, wobei die K' Fahrspur-Topologiekurven Kurven umfassen, für die der Ausrichtungskoeffizient größer ist als ein erster voreingestellter Schwellenwert und K' nicht größer als M ist, wobei das Durchführen der Plausibilitätsprüfung an den M Fahrspur-Topologiekurven, um K' Fahrspur-Topologiekurven zu erlangen, Folgendes umfasst:

Erlangen einer Projektionslinie zwischen der Einfahrtsstraße und der Ausfahrtsstraße basierend auf einem Richtungsvektor der Einfahrtsstraße und einem Richtungsvektor der Ausfahrtsstraße, wobei die Projektionslinie eine Gerade ist, auf der sich eine Winkelhalbierende eines eingeschlossenen Winkels befindet, der durch Schneiden des Richtungsvektors der Einfahrtsstraße und des Richtungsvektors der Ausfahrtsstraße erlangt wird, oder die Projektionslinie eine Gerade ist, die senkrecht zu dem Richtungsvektor der Ausfahrtsstraße steht und die durch den Startpunkt der Ausfahrtsstraße verläuft;
Berechnen eines Ausrichtungskoeffizienten zwischen jeder Einfahrtsfahrspur der Einfahrtsstraße und jeder Ausfahrtsfahrspur der Ausfahrtsstraße, wobei der Ausrichtungskoeffizient zwischen jeder Einfahrtsfahrspur und jeder Ausfahrtsfahrspur ein Verhältnis eines ersten Parameters zu einem zweiten Parameter ist, der erste Parameter eine Überlappungslänge zwischen zwei Liniensegmente ist, die durch separates Verlängern zweier Fahrspurseitenlinien der Einfahrtsfahrspur und zweier Fahrspurseitenlinien der Ausfahrtsfahrspur bis zu der Projektionslinie erlangt werden, und der zweite Parameter eine Länge des kürzeren dieser zwei Liniensegmente ist, die durch separates Verlängern der Fahrspurseitenlinien der Einfahrtsfahrspur und der Fahrspurseitenlinien der Ausfahrtsfahrspur bis zu der Projektionslinie erlangt werden; und
Erlangen der K' Fahrspur-Topologiekurven basierend auf dem Ausrichtungskoeffizienten zwischen jeder Einfahrtsfahrspur der Einfahrtsstraße und jeder Ausfahrtsfahrspur der Ausfahrtsstraße, wobei die K' Fahrspur-Topologiekurven eine Kurve umfassen, die ein Ende einer Einfahrtsfahrspur und einen Startpunkt einer Ausfahrtsfahrspur als Endpunkte verwendet, und ein Ausrichtungskoeffizient zwischen der Einfahrtsfahrspur und der Ausfahrtsfahrspur größer als ein erster voreingestellter Schwellenwert ist; und
Bestimmen (S203) eines Zielpfades aus den K' Fahrspur-Topologiekurven, wenn sich das Fahrzeug auf der Einfahrtsstraße befindet.

2. Verfahren nach Anspruch 1, wobei das Erzeugen von M Fahrspur-Topologiekurven basierend auf einem Hindernis und Fahrspurmarkierungen an einer Kreuzung, einem Hindernis und Fahrspurmarkierungen auf einer Einfahrtsstraße an der Kreuzung und einem Hindernis und Fahrspurmarkierungen auf einer Ausfahrtsstraße an der Kreuzung Folgendes umfasst:

Erlangen einer harten Randbedingung für die Fahrspur-Topologiekurve basierend auf dem Hindernis und nicht überquerbaren Fahrspurmarkierungen an der Kreuzung, dem Hindernis und nicht überquerbaren Fahrspurmarkierungen auf der Einfahrtsstraße an der Kreuzung und dem Hindernis und nicht überquerbaren Fahrspurmarkierungen auf der Ausfahrtsstraße an der Kreuzung;
Erlangen einer weichen Randbedingung für die Fahrspur-Topologiekurve basierend auf überquerbaren Fahrspurmarkierungen an der Kreuzung, überquerbaren Fahrspurmarkierungen auf der Einfahrtsstraße an der Kreuzung und überquerbaren Fahrspurmarkierungen auf der Ausfahrtsstraße an der Kreuzung;
Erlangen von K virtuellen Randbedingungen der Fahrspur-Topologiekurve basierend auf der harten Randbedingung der Fahrspur-Topologiekurve und der weichen Randbedingung der Fahrspur-Topologiekurve; und Erzeugen der M Fahrspur-Topologiekurven basierend auf der harten Randbedingung der Fahrspur-Topologiekurve, der weichen Randbedingung der Fahrspur-Topologiekurve und den K virtuellen Randbedingungen der Fahrspur-Topologiekurve.

3. Verfahren nach Anspruch 2, wobei die K virtuellen Randbedingungen der Fahrspur-Topologiekurve in einer Eins-zu-Eins-Entsprechung mit K Fahrspur-Topologien stehen und jede virtuelle Randbedingung A der Fahrspur-Topologiekurve unter den K virtuellen Randbedingungen der Fahrspur-Topologiekurve durch Verschieben einer harten Randbedingung und/oder einer weichen Randbedingung auf einer linken Seite einer äußersten linken Fahrspur-Topologie der Kreuzung um einen ersten voreingestellten Abstand nach rechts und durch Verschieben einer harten Randbedingung und/oder einer weichen Randbedingung auf einer rechten Seite einer äußersten rechten Fahrspur-Topologie der Kreuzung um einen ersten voreingestellten Abstand nach links erlangt wird, wobei der erste voreingestellte Abstand basierend auf einer Fahrspursequenz einer Fahrspur-Topologie A' bestimmt wird oder der erste voreingestellte Abstand basierend auf einer Fahrspursequenz einer Fahrspur-Topologie A' und mindestens einem aus einer voreingestellten Überholbreite des Fahrzeugs und einer Fahrspurbreite bestimmt wird, die virtuelle Randbedingung A der Fahrspur-Topologiekurve der Fahrspur-Topologie A' entspricht und die K Fahrspur-Topologien die äußerste linke Fahrspur-Topologie und die äußerste rechte Fahrspur-Topologie der Kreuzung umfassen.

4. Verfahren nach Anspruch 2 oder 3, wobei das Erzeugen der M Fahrspur-Topologiekurven basierend auf der harten Randbedingung der Fahrspur-Topologiekurve, der weichen Randbedingung der Fahrspur-Topologiekurve und den K virtuellen Randbedingungen der Fahrspur-Topologiekurve Folgendes umfasst:

separates Durchführen einer Winkelabtastung an einem Ende jeder Einfahrtsfahrspur der Einfahrtsstraße, um mindestens einen Startpunkt-Posevektor der Einfahrtsstraße zu erlangen, und separates Durchführen einer Winkelabtastung an einem Startpunkt jeder Ausfahrtsfahrspur der Ausfahrtsstraße, um mindestens einen Endpunkt-Posevektor der Ausfahrtsstraße zu erlangen;
Durchführen einer Kurvenabtastung an dem mindestens einen Startpunkt-Posevektor und dem mindestens einen Endpunkt-Posevektor, um eine Vielzahl von Kurven zwischen der Einfahrtsstraße und der Ausfahrtsstraße zu erlangen; und
Durchführen einer Überprüfung an der Vielzahl von Kurven basierend auf der harten Randbedingung der Fahrspur-Topologiekurve, der weichen Randbedingung der Fahrspur-Topologiekurve und den K virtuellen Randbedingungen der Fahrspur-Topologiekurve, um die M Fahrspur-Topologiekurven zu erlangen.

5. Verfahren nach Anspruch 4, wobei das Durchführen einer Kurvenabtastung an dem mindestens einen Startpunkt-Posevektor und dem mindestens einen Endpunkt-Posevektor, um eine Vielzahl von Kurven zwischen der Einfahrtsstraße und der Ausfahrtsstraße zu erlangen, Folgendes umfasst:

Erzeugen einer Vielzahl von Kontrollpunkten zwischen dem Ende jeder Einfahrtsfahrspur der Einfahrtsstraße und dem Startpunkt jeder Ausfahrtsfahrspur der Ausfahrtsstraße; und
Erzeugen der Vielzahl von glatten Kurven basierend auf dem mindestens einen Startpunkt-Posevektor, dem mindestens einen Endpunkt-Posevektor und der Vielzahl von Kontrollpunkten.

6. Verfahren nach Anspruch 4 oder 5, wobei der mindestens eine Startpunkt-Posevektor der Einfahrtsstraße durch Verlängern des Endes jeder Einfahrtsfahrspur um einen zweiten voreingestellten Abstand und anschließendes Abtasten erlangt wird.

7. Verfahren nach einem der Ansprüche 1 bis 6, wobei die K' Fahrspur-Topologiekurven eine Kurve umfassen, die ein Ende einer äußersten linken Einfahrtsfahrspur der Einfahrtsstraße und einen Startpunkt einer äußersten linken Ausfahrtsfahrspur der Ausfahrtsstraße als jeweilige Endpunkte verwendet, und ferner eine Kurve umfassen, die ein Ende einer äußersten rechten Einfahrtsfahrspur der Einfahrtsstraße und einen Startpunkt einer äußersten rechten Ausfahrtsfahrspur der Ausfahrtsstraße als jeweilige Endpunkte verwendet.

8. Verfahren nach einem der Ansprüche 1 bis 7, wobei die K' Fahrspur-Topologiekurven eine Fahrspur-Topologiekurve, die ein Ende einer Einfahrtsfahrspur X der Einfahrtsstraße und einen Startpunkt einer linken Fahrspur einer Ausfahrtsfahrspur Y der Ausfahrtsstraße als Endpunkte verwendet, und eine Fahrspur-Topologiekurve, die das Ende der Einfahrtsfahrspur X und einen Startpunkt einer rechten Fahrspur der Ausfahrtsfahrspur Y als Endpunkte verwendet, umfassen und ferner eine Fahrspur-Topologiekurve umfassen, die das Ende der Einfahrtsfahrspur X und einen Startpunkt der Ausfahrtsfahrspur Y als Endpunkte verwendet, wobei es auf jeder einer linken Seite und einer rechten Seite der Ausfahrtsfahrspur Y eine Fahrspur gibt; oder
die K' Fahrspur-Topologiekurven eine Fahrspur-Topologiekurve, die ein Ende einer Einfahrtsfahrspur X der Einfahrtsstraße und einen Startpunkt einer linken Fahrspur oder einer rechten Fahrspur einer Ausfahrtsfahrspur Y der Ausfahrtsstraße als Endpunkte verwendet, umfassen und ferner eine Fahrspur-Topologiekurve umfassen, die das Ende der Einfahrtsfahrspur X der Einfahrtsstraße und einen Startpunkt der Ausfahrtsfahrspur Y als Endpunkte verwendet, wobei es nur auf einer linken Seite oder einer rechten Seite der Ausfahrtsfahrspur Y der Ausfahrtsstraße eine Fahrspur gibt.

9. Verfahren nach einem der Ansprüche 1 bis 8, wobei eine maximale Krümmung jeder der K' Fahrspur-Topologiekurven nicht größer ist als ein zweiter voreingestellter Schwellenwert, ein Abstand zwischen jeder Fahrspur-Topologiekurve und jeder der weichen Randbedingung der Fahrspur-Topologiekurve und der harten Randbedingung der Fahrspur-Topologiekurve nicht kleiner ist als ein dritter voreingestellter Abstand und ein Abstand zwischen je zwei Fahrspur-Topologiekurven nicht kleiner ist als ein vierter voreingestellter Abstand.

10. Verfahren nach einem der Ansprüche 1 bis 9, wobei das Verfahren ferner Folgendes umfasst:

Berechnen eines Evaluierungswerts einer jeden der K' Fahrspur-Topologiekurven, wobei der Evaluierungswert mit mindestens einem aus einer Krümmung der Fahrspur-Topologiekurve, einer Krümmungsänderungsrate, einer Anzahl von diagonal querenden Fahrspuren und Informationen zu Fahrspurkreuzungen, Informationen zu Verkehrsregeln, einem Schätzwert des Fahrzeugverkehrs und einem fahrbaren Abstand, die zu einer Fahrspur gehören, die der Fahrspur-Topologiekurve entspricht, zusammenhängt; und
das Bestimmen eines Zielpfades aus den K' Fahrspur-Topologiekurven, wenn sich das Fahrzeug auf der Einfahrtsstraße befindet, Folgendes umfasst:
wenn sich das Fahrzeug auf der Einfahrtsstraße befindet, Bestimmen des Zielpfades basierend auf dem Evaluierungswert einer jeden der K' Fahrspur-Topologiekurven.

11. Verfahren nach einem der Ansprüche 1 bis 10, wobei die Kreuzung mindestens eines aus einer Querstraße, einem Kreisverkehr, einer Kreuzung eines Abbiegewartebereichs, einer kleinen S-Kurve, einer erhöhten Straßeneinfahrt/-ausfahrt, einem mehrspurigen Straßenabschnitt ohne Fahrspurmarkierungslinie, einer Kreuzung mit kontinuierlichem Verkehrsfluss und einer Kreuzung mit U-Wende auf schmaler Fahrspur umfasst.

12. Kartenerzeugungsverfahren basierend auf Kreuzungen, umfassend:

Erzeugen von M Fahrspur-Topologiekurven basierend auf einem Hindernis und Fahrspurmarkierungen an einer Kreuzung, einem Hindernis und Fahrspurmarkierungen auf einer Einfahrtsstraße an der Kreuzung und einem Hindernis und Fahrspurmarkierungen auf einer Ausfahrtsstraße an der Kreuzung, wobei die Fahrspur-Topologiekurve eine Kurve ist, die ein Ende einer Einfahrtsfahrspur der Einfahrtsstraße und einen Startpunkt einer Ausfahrtsfahrspur der Ausfahrtsstraße als Endpunkte verwendet;
Durchführen einer Plausibilitätsprüfung der M Fahrspur-Topologiekurven, um K' Fahrspur-Topologiekurven zu erlangen, wobei K' nicht größer als M ist, wobei das Durchführen einer Plausibilitätsprüfung der M Fahrspur-Topologiekurven, um K' Fahrspur-Topologiekurven zu erlangen, Folgendes umfasst:

Erlangen einer Projektionslinie zwischen der Einfahrtsstraße und der Ausfahrtsstraße basierend auf einem Richtungsvektor der Einfahrtsstraße und einem Richtungsvektor der Ausfahrtsstraße, wobei die Projektionslinie eine Gerade ist, auf der sich eine Winkelhalbierende eines eingeschlossenen Winkels befindet, der durch Schneiden des Richtungsvektors der Einfahrtsstraße und des Richtungsvektors der Ausfahrtsstraße erlangt wird, oder die Projektionslinie eine Gerade ist, die senkrecht zu dem Richtungsvektor der Ausfahrtsstraße steht und die durch den Startpunkt der Ausfahrtsstraße verläuft;
Berechnen eines Ausrichtungskoeffizienten zwischen jeder Einfahrtsfahrspur der Einfahrtsstraße und jeder Ausfahrtsfahrspur der Ausfahrtsstraße, wobei der Ausrichtungskoeffizient zwischen jeder Einfahrtsfahrspur und jeder Ausfahrtsfahrspur ein Verhältnis eines ersten Parameters zu einem zweiten Parameter ist, der erste Parameter eine Überlappungslänge zwischen zwei Liniensegmente ist, die durch separates Verlängern zweier Fahrspurseitenlinien der Einfahrtsfahrspur und zweier Fahrspurseitenlinien der Ausfahrtsfahrspur bis zu der Projektionslinie erlangt werden, und der zweite Parameter eine Länge des kürzeren dieser zwei Liniensegmente ist, die durch separates Verlängern der Fahrspurseitenlinien der Einfahrtsfahrspur und der Fahrspurseitenlinien der Ausfahrtsfahrspur bis zu der Projektionslinie erlangt werden; und
Erlangen der K' Fahrspur-Topologiekurven basierend auf dem Ausrichtungskoeffizienten zwischen jeder Einfahrtsfahrspur der Einfahrtsstraße und jeder Ausfahrtsfahrspur der Ausfahrtsstraße, wobei die K' Fahrspur-Topologiekurven eine Kurve umfassen, die ein Ende einer Einfahrtsfahrspur und einen Startpunkt einer Ausfahrtsfahrspur als Endpunkte verwendet, und ein Ausrichtungskoeffizient zwischen der Einfahrtsfahrspur und der Ausfahrtsfahrspur größer als ein erster voreingestellter Schwellenwert ist; und

Erzeugen einer Karte der Kreuzung basierend auf den K' Fahrspur-Topologiekurven an der Kreuzung.

13. Computerlesbares Speichermedium, wobei das computerlesbare Speichermedium ein Computerprogramm speichert und das Computerprogramm durch den Prozessor (1702) ausgeführt wird, um das Verfahren nach einem der Ansprüche 1 bis 11 zu implementieren.

14. Intelligentes, fahrendes Fahrzeug, umfassend ein Fortbewegungssystem, ein Sensorsystem, ein Steuerungssystem und ein Computersystem, wobei das Computersystem dazu konfiguriert ist, das Verfahren nach einem der Ansprüche 1 bis 11 durchzuführen.

## Revendications

1. Procédé de guidage de conduite d'un véhicule, comprenant :

la génération (S201) de M courbes de topologie de voie sur la base d'un obstacle et de lignes de voie à une intersection, d'un obstacle et de lignes de voie sur une route d'entrée à l'intersection, et d'un obstacle et de lignes de voie sur une route de sortie à l'intersection, dans lequel la courbe de topologie de voie est une courbe qui utilise une extrémité d'une voie d'entrée de la route d'entrée et un point de départ d'une voie de sortie de la route de sortie comme points d'extrémité ;

la réalisation (S202) d'une détection de cohérence sur les M courbes de topologie de voie pour obtenir les K' courbes de topologie de voie, dans lequel la détection de cohérence comprend le calcul d'un coefficient d'alignement entre chaque voie d'entrée de la route d'entrée et chaque voie de sortie de la route de sortie, et l'obtention des K' courbes de topologie de voie sur la base du coefficient d'alignement, dans lequel les K' courbes de topologie de voie comprennent les courbes pour lesquelles le coefficient d'alignement est supérieur à un premier seuil prédéfini, et K' n'est pas supérieur à M, dans lequel la réalisation de la détection de cohérence sur les M courbes de topologie de voie pour obtenir les K' courbes de topologie de voie comprend :

l'obtention d'une ligne de projection entre la route d'entrée et la route de sortie sur la base d'un vecteur de direction de la route d'entrée et d'un vecteur de direction de la route de sortie, dans lequel la ligne de projection est une ligne droite sur laquelle se trouve la bissectrice d'un angle inclus obtenu en intersectant le vecteur de direction de la route d'entrée et le vecteur de direction de la route de sortie, ou la ligne de projection est une ligne droite perpendiculaire au vecteur de direction de la route de sortie et qui passe par le point de départ de la route de sortie ;

le calcul d'un coefficient d'alignement entre chaque voie d'entrée de la route d'entrée et chaque voie de sortie de la route de sortie, dans lequel le coefficient entre chaque voie d'entrée et chaque voie de sortie est un rapport entre un premier paramètre à un second paramètre, le premier paramètre correspond à une longueur de chevauchement entre deux segments de ligne obtenus en étendant séparément deux lignes de bord de la voie d'entrée et deux lignes de bord de la voie de sortie jusqu'à la ligne de projection, et le second paramètre correspond à la longueur du segment le plus court obtenu en étendant séparément les lignes de bord de la voie d'entrée et les lignes de bord de la voie de sortie jusqu'à la ligne de projection ; et

l'obtention des K' courbes de topologie de voie sur la base du coefficient d'alignement entre chaque voie d'entrée de la route d'entrée et chaque voie de sortie de la route de sortie, dans lequel les K' courbes de topologie de la voie comprennent une courbe qui utilise comme extrémités une extrémité d'une voie d'entrée et un point de départ d'une voie de sortie, et un coefficient d'alignement entre la voie d'entrée et la voie de sortie est supérieur à un premier seuil prédéfini ; et

la détermination (S203) d'un chemin cible à partir des K' courbes de topologie de la voie lorsque le véhicule est situé sur la route d'entrée.

2. Procédé selon la revendication 1, dans lequel la génération de M courbes de topologie de voie sur la base d'un obstacle et de lignes de voie à une intersection, d'un obstacle et de lignes de voie sur une route d'entrée à l'intersection, et d'un obstacle et de lignes de voie sur une route de sortie à l'intersection comprend :

l'obtention d'une contrainte de limite rigide de courbe de topologie de voie sur la base des lignes de voie d'obstacle et infranchissables à l'intersection, des lignes de voie d'obstacle et infranchissables sur la route d'entrée à l'intersection et des lignes de voie d'obstacle et infranchissables sur la route de sortie à l'intersection ;

l'obtention d'une contrainte de limite souple de courbe de topologie de voie sur la base des lignes de voie franchissables à l'intersection, des lignes de voie franchissables sur la route d'entrée à l'intersection et des lignes de voie franchissables sur la route de sortie à l'intersection ;

l'obtention de K contraintes de limite virtuelle de courbe de topologie de voie sur la base de la contrainte de limite rigide de courbe de topologie de voie et de la contrainte de limite souple de courbe de topologie de voie ; et

la génération de M courbes de topologie de voie sur la base de la contrainte de limite rigide de courbe de topologie de voie, de la contrainte de limite souple de courbe de topologie de voie et de K contraintes de limite virtuelle de courbe de topologie.

3. Procédé selon la revendication 2, dans lequel les K contraintes de limite virtuelle de courbe de topologie de voie correspondent biunivoquement aux K topologies de voie, et une quelconque contrainte de limite virtuelle de courbe de topologie de voie A parmi les K contraintes de limite virtuelle de courbe de topologie de voie est obtenue en décalant vers la droite, d'une première distance prédéfinie, une contrainte de limite rigide et/ou une contrainte de limite souple du côté gauche de la topologie de voie la plus à gauche de l'intersection, et en décalant vers la gauche, d'une première distance prédéfinie, une contrainte de limite rigide et/ou une contrainte de limite souple du côté droit de la topologie de voie la plus à droite de l'intersection, dans lequel la première distance prédéfinie est déterminée sur la base d'une séquence de voies d'une topologie de voie A', ou la première distance prédéfinie est déterminée sur la base d'une séquence de voies d'une topologie de voie A' et d'au moins l'une d'une largeur de dépassement prédéfinie du véhicule et d'une largeur de voie, la contrainte de limite virtuelle de courbe de topologie de voie A correspond à la topologie de voie A', et les K topologies de voie comprennent la topologie de voie la plus à gauche et la topologie de voie la plus à droite de l'intersection.

4. Procédé selon la revendication 2 ou 3, dans lequel la génération de M courbes de topologie de voie sur la base de la contrainte de limite rigide de courbe de topologie de voie, de la contrainte de limite souple de courbe de topologie de voie et de K contraintes de limite virtuelle de courbe de topologie comprend :

la réalisation séparée d'un échantillonnage d'angle à une extrémité de chaque voie d'entrée de la route d'entrée pour obtenir au moins un vecteur de pose de point de départ de la route d'entrée, et la réalisation séparée d'un échantillonnage d'angle à un point de départ de chaque voie de sortie de la route de sortie pour obtenir au moins un vecteur de pose de point d'arrivée de la route de sortie ;

la réalisation d'un échantillonnage de courbes sur l'au moins un vecteur de pose de point de départ et l'au moins un vecteur de pose de point d'arrivée, pour obtenir une pluralité de courbes entre la route d'entrée et la route de sortie ; et

la réalisation d'un filtrage sur la pluralité de courbes sur la base de la contrainte de limite rigide de courbe de topologie de voie, de la contrainte de limite souple de courbe de topologie de voie et de K contraintes de limite virtuelle de courbes de topologie de voie, pour obtenir les M courbes de topologie de voie.

5. Procédé selon la revendication 4, dans lequel la réalisation d'un échantillonnage de courbes sur l'au moins un vecteur de pose de point de départ et l'au moins un vecteur de pose de point d'arrivée, pour obtenir une pluralité de courbes entre la route d'entrée et la route de sortie comprend :

la génération d'une pluralité de points de commande entre l'extrémité de chaque voie d'entrée de la route d'entrée et le point de départ de chaque voie de sortie de la route de sortie ; et

la génération de la pluralité de courbes lisses sur la base de l'au moins un vecteur de pose de point de départ, de l'au moins un vecteur de pose de point d'arrivée et de la pluralité de points de commande.

6. Procédé selon la revendication 4 ou 5, dans lequel l'au moins un vecteur de pose de point de départ de la route d'entrée est obtenu en étendant l'extrémité de chaque voie d'entrée d'une deuxième distance prédéfinie et en réalisant un échantillonnage.

7. Procédé selon l'une quelconque des revendications 1 à 6, dans lequel les K' courbes de topologie de voie comprennent une courbe qui utilise respectivement une extrémité d'une voie d'entrée la plus à gauche de la route d'entrée et un point de départ d'une voie de sortie la plus à gauche de la route de sortie comme points d'extrémité, et comprennent en outre une courbe qui utilise respectivement une extrémité d'une voie d'entrée la plus à droite de la route d'entrée et un point de départ d'une voie de sortie la plus à droite de la route de sortie comme points d'extrémité.

8. Procédé selon l'une quelconque des revendications 1 à 7, dans lequel les K' courbes de topologie de voie comprennent une courbe de topologie de voie qui utilise une extrémité d'une voie d'entrée X de la route d'entrée et un point de départ d'une voie de sortie Y la plus à gauche de la route de sortie comme points d'extrémité, et une courbe de topologie de voie qui utilise l'extrémité de la voie d'entrée X et un point de départ d'une voie à droite de la voie de sortie Y comme points d'extrémité et comprennent en outre une courbe de topologie de voie qui utilise l'extrémité de la voie d'entrée X et un point de départ de la voie de sortie Y comme points d'extrémité, dans lequel il existe une voie sur chacun d'un côté gauche et d'un côté droit de la voie de sortie Y ; ou

les K' courbes de topologie de voie comprennent une courbe de topologie de voie qui utilise une extrémité d'une voie d'entrée X de la route d'entrée et un point de départ d'une voie à gauche ou d'une voie à droite d'une voie de sortie Y de la route de sortie comme points d'extrémité et comprennent en outre une courbe de topologie de voie qui utilise l'extrémité de la voie d'entrée X de la route d'entrée et un point de départ de la voie de sortie Y comme points d'extrémité, dans lequel il existe une voie uniquement sur un côté gauche ou un côté droit de la voie de sortie Y de la route de sortie.

9. Procédé selon l'une quelconque des revendications 1 à 8, dans lequel une courbure maximale de chacune des K' courbes de topologie de voie n'est pas supérieure à un second seuil prédéfini, une distance entre chaque courbe de topologie de voie et chacune de la contrainte de limite souple de courbe de topologie de voie et de la contrainte de limite rigide de courbe de topologie de voie n'est pas inférieure à une troisième distance prédéfinie, et une distance entre deux courbes de topologie de voie quelconques n'est pas inférieure à une quatrième distance prédéfinie.

10. Procédé selon l'une quelconque des revendications 1 à 9, dans lequel le procédé comprend en outre :

le calcul d'une valeur d'évaluation de chacune des K' courbes de topologie de voie, dans lequel la valeur d'évaluation est liée à au moins l'un d'une courbure de la courbe de topologie de voie, d'un taux de variation de la courbure, d'un nombre de voies transversales diagonales, et d'informations sur les intersections de voies, d'informations sur les règles de circulation, d'une valeur d'estimation du trafic routier et d'une distance praticable d'une voie correspondant à la courbe de topologie de voie ; et

la détermination d'un chemin cible à partir des K' courbes de topologie de voie lorsque le véhicule est situé sur la route d'entrée comprend :

lorsque le véhicule est situé sur la route d'entrée, la détermination du chemin cible sur la base de la valeur d'évaluation de chacune des K' courbes de topologie de voie.

11. Procédé selon l'une quelconque des revendications 1 à 10, dans lequel l'intersection comprend au moins l'un d'un carrefour, d'un rond-point, d'une intersection d'une zone d'attente de virage, d'un petit virage en S, d'une entrée/sortie de route surélevée, d'un segment de route à plusieurs voies sans ligne de marquage de voie, d'une intersection de virage continu et d'une intersection de demi-tour à voie étroite.

12. Procédé de génération de carte sur la base d'intersections, comprenant :

la génération de M courbes de topologie de voie sur la base d'un obstacle et de lignes de voie à une intersection, d'un obstacle et de lignes de voie sur une route d'entrée à l'intersection, et d'un obstacle et de lignes de voie sur une route de sortie à l'intersection, dans lequel la courbe de topologie de voie est une courbe qui utilise une extrémité d'une voie d'entrée de la route d'entrée et un point de départ d'une voie de sortie de la route de sortie comme points d'extrémité ;

la réalisation d'une détection de cohérence sur les M courbes de topologie de voie pour obtenir K' courbes de topologie de voie, dans lequel K' n'est pas supérieur à M, dans lequel la réalisation de la détection de cohérence sur les M courbes de topologie de voie pour obtenir K' courbes de topologie de voie comprend :

l'obtention d'une ligne de projection entre la route d'entrée et la route de sortie sur la base d'un vecteur de direction de la route d'entrée et d'un vecteur de direction de la route de sortie, dans lequel la ligne de projection est une ligne droite sur laquelle se trouve la bissectrice d'un angle inclus obtenu en intersectant le vecteur de direction de la route d'entrée et le vecteur de direction de la route de sortie, ou la ligne de projection est une ligne droite perpendiculaire au vecteur de direction de la route de sortie et qui passe par le point de départ de la route de sortie ;

le calcul d'un coefficient d'alignement entre chaque voie d'entrée de la route d'entrée et chaque voie de sortie de la route de sortie, dans lequel le coefficient entre chaque voie d'entrée et chaque voie de sortie est un rapport entre un premier paramètre à un second paramètre, le premier paramètre correspond à une longueur de chevauchement entre deux segments de ligne obtenus en étendant séparément deux lignes de bord de la voie d'entrée et deux lignes de bord de la voie de sortie jusqu'à la ligne de projection, et le second paramètre correspond à la longueur du segment le plus court obtenu en étendant séparément les lignes de bord de la voie d'entrée et les lignes de bord de la voie de sortie jusqu'à la ligne de projection ; et

l'obtention des K' courbes de topologie de voie sur la base du coefficient d'alignement entre chaque voie d'entrée de la route d'entrée et chaque voie de sortie de la route de sortie, dans lequel les K' courbes de topologie de voie comprennent une courbe qui utilise comme extrémités une extrémité d'une voie d'entrée et un point de départ d'une voie de sortie, et un coefficient d'alignement entre la voie d'entrée et la voie de sortie est supérieur à un premier seuil prédéfini ; et

la génération d'une carte de l'intersection sur la base des K' courbes de topologie de voie à l'intersection.

13. Support de stockage lisible par ordinateur, dans lequel le support de stockage lisible par ordinateur stocke un programme informatique, et le programme informatique est exécuté par le processeur (1702) pour mettre en œuvre le procédé selon l'une quelconque des revendications 1 à 11.

14. Véhicule à conduite intelligente, comprenant un système de déplacement, un système de détection, un système de commande et un système informatique, dans lequel le système informatique est configuré pour réaliser le procédé selon l'une quelconque des revendications 1 à 11.

FIG. 1

Generate M lane topology curves based on an obstacle and lane lines at an intersection, an obstacle and lane lines on a driving-in road at the intersection, and an obstacle and lane lines on a driving-out road at the intersection, where the lane topology curve is a curve that uses an end of a driving-in lane of the driving-in road and a start point of a driving-out lane of the driving-out road as endpoints — 201

Perform reasonable detection on the M lane topology curves to obtain K' lane topology curves, where K' is not greater than M — 202

Determine a target path from the K' lane topology curves when a vehicle is located on the driving-in road — 203

FIG. 2

Driving-out road

Virtual
lane

Driving-in road

FIG. 3

FIG. 4

Driving-out lane

$\overrightarrow{e_i}$  B

$P_i$

S4

Curve generated
by performing
sampling on
control points

S3

$P_i$

$\overrightarrow{S_i}$

A

Driving-in lane

FIG. 5

FIG. 6

Vehicle flow
interference

Collision
detection

Kinematic
screening

FIG. 7

FIG. 8a

FIG. 8b

FIG. 8c

Parking lane

$L_{o3}$

$L_{o2}$

$L_{o1}$

Out1

Out2

Out3

In1

In2

$f(In1,Out1) = 0.5$
$f(In1,Out2) = 0.5$
$f(In1,Out3) = 0$
$f(In2,Out1) = 0$
$f(In2,Out2) = 0.4$
$f(In2,Out3) = 0.6$

$L_{i1}$ $L_{i2}$ Bus
lane

FIG. 8d

Parking lane

$L_{o3}$

$L_{o2}$

$L_{o1}$

Out1

Out2

Out3

In1

In2

$f(In1,Out1) = 0.15$
$f(In1,Out2) = 0.85$
$f(In1,Out3) = 0$
$f(In2,Out1) = 0$
$f(In2,Out2) = 0.14$
$f(In2,Out3) = 0.86$

$L_{i1}$ $L_{i2}$ Bus
lane

FIG. 8e

FIG. 8f

FIG. 8g

FIG. 8h

FIG. 9a

FIG. 9b

FIG. 9c

FIG. 9d

FIG. 10a

FIG. 10b

FIG. 11a

FIG. 11b

FIG. 12

FIG. 13

FIG. 14

FIG. 15

Apparatus for guiding
driving of a vehicle

Curve
generation
module — 1601

Detection
processing
module — 1602

Determining
module — 1603

FIG. 16

Apparatus 1700 for guiding driving of a vehicle

Memory 1701

Processor
1702

Bus 1704

Communication
interface 1703

FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112001986 A
- WO 2017123232 A1
- US 2018148052 A1

**Non-patent literature cited in the description**

- A constrained VFH algorithm for motion planning of autonomous vehicles. **QU PANRANG et al.** 2015 IEEE INTELLIGENT VEHICLES SYMPOSIUM (IV). IEEE, 28 June 2015, 700-705